# EUROPEAN PATENT SPECIFICATION

(11) **EP 4 163 860 B1**
(45) Date of publication and mention of the grant of the patent: **17.09.2025**
(21) Application number: 22196769.8
(22) Date of filing: 21.09.2022
(51) Int. Cl.: G06Q 50/02, G06Q 10/0631, A01B 76/00

(54) **MANAGEMENT METHOD, MANAGEMENT TERMINAL, AND MANAGEMENT SYSTEM**
VERWALTUNGSVERFAHREN, VERWALTUNGSENDGERÄT UND VERWALTUNGSSYSTEM
PROCÉDÉ DE GESTION, TERMINAL DE GESTION ET SYSTÈME DE GESTION

(30) Priority: 07.10.2021 JP 2021165523
(43) Date of publication of application: 12.04.2023
(73) Proprietor: Yanmar Holdings Co., Ltd., Osaka-shi, Osaka (JP)
(72) Inventor: NISHII, Yasuto, Okayama (JP); YAMAGUCHI, Yuji, Okayama (JP); SUZUKI, Hidetaka, Okayama (JP); KAWAI, Susumu, Osaka (JP); OTOMO, Shogo, Osaka (JP); ARAKI, Nobuyuki, Osaka (JP); MIKI, Yonosuke, Osaka (JP); MURAYAMA, Masaaki, Okayama (JP)
(74) Representative: Novagraaf International SA

(56) References cited:
- EP-A1- 3 340 002
- EP-A1- 3 358 519
- US-A1- 2020 305 338

## Description

### TECHNICAL FIELD

The present invention relates to a management method, a management terminal, and a management system for managing a work vehicle that can travel automatically.

### BACKGROUND ART

So as to work on a farm field with a work vehicle such as a combine harvester, a worker is required to manage a work vehicle and a farm field. Conventionally, a technology to manage the work vehicle and the farm field by imparting a management function to a terminal attached to the work vehicle, and using a display unit or the like provided on the terminal is known.

For example, an automatic travel system of Patent Document 1 causes the work vehicle to automatically travel along a target route, and a portable communication terminal set for a wireless communication with an automatic travel unit mounted on a tractor is provided with a multi-touch display device, etc. that enables displaying, inputting and the like of various information, etc. related to the automatic travel. Patent Document 2 relates to an automatic travelling work vehicle configured to automatically travel along a travel route. Patent Document 3 relates to an agriculture support system. Patent Document 4 relates to an agricultural field management system configured to collect information relating to farm works via a computer network and processing such information to provide, in turn, information relating to an appropriate farm work plan.

### PRIOR ART DOCUMENT

### PATENT DOCUMENT

Patent Document 1: Japanese Unexamined Patent Application Publication No. 2020-184973
Patent Document 2: EP3340002A1
Patent Document 3: US2020305338A1
Patent Document 4: EP3358519A1

### SUMMARY OF INVENTION

### TECHNICAL PROBLEM

In the work vehicle, there are various types of work items related to the automatic travel, and there is a plurality of farm fields as a work target, and work information such as route is, as the case may be, set for each farm field. However, although enabling the displaying and inputting of various types of information about the automatic travel, the conventional terminal provided on the work vehicle does not take into account operability for selecting the work item and setting the work information. Therefore, a complex operation is required for the worker to select the work item and set the work information as requested.

It is an object of the present invention to provide a management method, a management terminal, and a management system that can improve operability of selecting a work item and setting work information.

### SOLUTION TO PROBLEM

The invention is set out in the appended set of claims.

For solving the above problem, a management method of the present invention is a management method for managing a work vehicle capable of performing an automatic travel, the method including: a display control step in which starting an application that manages the work vehicle causes the application to selectably display, on a display unit, a plurality of work items related to work that is performed by the work vehicle in a farm field.

Further, for solving the above problem, a management terminal of the present invention is a management terminal for managing a work vehicle capable of performing an automatic travel, the management terminal including: a storage unit that stores an application for managing the work vehicle; a controller that starts the application; and a display unit, wherein the controller, by the application, selectably displays, on the display unit, a plurality of work items related to work that is performed by the work vehicle in a farm field.

Further, for solving the above problem, a management system of the present invention is a management system for managing a work vehicle capable of performing an automatic travel, the management system including: starting an application that manages the work vehicle to cause the application to selectably display, on a display unit, a plurality of work items related to work that is performed by the work vehicle in a farm field.

### ADVANTAGEOUS EFFECTS OF INVENTION

The present invention provides a management method, a management terminal, and a management system that can improve operability of selecting a work item and setting work information.

### BRIEF DESCRIPTION OF DRAWINGS

FIG. 1 is a block diagram showing a management system according to an embodiment of the present invention.
FIG. 2 is a front view showing an example of a first vehicle registered information screen in a management terminal according to the embodiment of the present invention.
FIG. 3 is a front view showing an example of a second vehicle registered information screen, in the management terminal according to the embodiment of the present invention.
FIG. 4 is a front view showing an example of a home registration screen, in the management terminal according to the embodiment of the present invention.
FIG. 5 is a front view showing an example of a menu screen, in the management terminal according to the embodiment of the present invention.
FIG. 6 is a front view showing an example of a vehicle selection screen, in the management terminal according to the embodiment of the present invention.
FIG. 7 is a front view showing an example of a farm field acquisition screen, in the management terminal according to the embodiment of the present invention.
FIG. 8 is a front view showing an example of an outermost periphery measurement screen before measurement, in the management terminal according to the embodiment of the present invention.
FIG. 9 is a front view of an example of the outermost periphery measurement screen during the measurement, in the management terminal according to the embodiment of the present invention.
FIG. 10 is a front view showing an example of a farm field registration screen, in the management terminal according to the embodiment of the present invention.
FIG. 11 is a front view showing an example of a work area creation screen, in the management terminal according to the embodiment of the present invention.
FIG. 12 an overview showing examples of the minimum length and allowable error set for a linear approximation of the measurement point data on the outermost periphery measurement, in the management terminal according to the embodiment of the present invention.
FIG. 13 is a front view showing an example of a farm field edge edit screen, in the management terminal according to the embodiment of the present invention.
FIG. 14 is a front view showing an example of a farm field edge adding screen, in the management terminal according to the embodiment of the present invention.
FIG. 15 is an overview showing an example of a plurality of straight lines linearly approximated from the measurement point data on the outermost periphery measurement, in the management terminal according to the embodiment of the present invention.
FIG. 16 is a front view showing an example of a farm field edge deletion screen, in the management terminal according to the embodiment of the present invention.
FIG. 17 is a front view showing an example of an entrance setting screen, in the management terminal according to the embodiment of the present invention.
FIG. 18 is a front view showing an example of an entrance edit screen, in the management terminal according to the embodiment of the present invention.
FIG. 19 is a front view showing an example of a work area registration screen, in the management terminal according to the embodiment of the present invention.
FIG. 20 is a front view showing an example of a work area selection screen, in the management terminal according to the embodiment of the present invention.
FIG. 21 is a front view showing an example of a headland straight work screen before the work, in the management terminal according to the embodiment of the present invention.
FIG. 22 is a front view showing another example of the headland straight work screen before the work, in the management terminal according to the embodiment of the present invention.
FIG. 23 is a front view showing an example of the headland straight work screen during the work, in the management terminal according to the embodiment of the present invention.
FIG. 24 is a front view showing an example of the headland straight work screen after the work, in the management terminal according to the embodiment of the present invention.
FIG. 25 is a front view showing another example of the headland straight work screen during the work, in the management terminal according to the embodiment of the present invention.
FIG. 26 is a front view showing an example of a work direction setting screen, in the management terminal according to the embodiment of the present invention.
FIG. 27 is a front view showing an example of a discharge position setting screen, in the management terminal according to the embodiment of the present invention.
FIG. 28 is a front view showing an example of a route pattern selection screen, in the management terminal according to the embodiment of the present invention.
FIG. 29 is a front view showing an example of a work route check screen, in the management terminal according to the embodiment of the present invention.
FIG. 30 is a front view showing an example of a work route presentation screen, in the management terminal according to the embodiment of the present invention.
FIG. 31 is a front view showing an example of a work screen of an automatic mowing travel seen when the start condition is not met, in the management terminal according to the embodiment of the present invention.
FIG. 32 is a front view of an example of the work screen of the automatic mowing travel seen when the start condition is met, in the management terminal according to the embodiment of the present invention.
FIG. 33 is a front view showing an example of the work screen of the automatic mowing travel seen during the work, in the management terminal according to the embodiment of the present invention.
FIG. 34 is a front view of an example of the work screen of the automatic mowing travel seen before the discharge travel, in the management terminal according to the embodiment of the present invention.
FIG. 35 is a front view showing another example of the work screen of the automatic mowing travel seen during the work, in the management terminal of the embodiment of the present invention.
FIG. 36 is a front view showing an example of a travel information setting screen, in the management terminal according to the embodiment of the present invention.
FIG. 37 is a front view showing an example of an operation panel screen, in the management terminal according to the embodiment of the present invention.
FIG. 38 is a front view showing an example of a reference line setting screen before the work, in the management terminal according to the embodiment of the present invention.
FIG. 39 is a front view of an example of the reference line setting screen after setting a point A, in the management terminal according to the embodiment of the present invention.
FIG. 40 is a front view showing an example of the reference line setting screen after a movement, in the management terminal according to the embodiment of the present invention.
FIG. 41 is a front view showing an example of the reference line setting screen after setting a point B, in the management terminal according to the embodiment of the present invention.
FIG. 42 is a front view showing an example of a work screen of an automatic straight movement seen when the start condition is not met, in the management terminal according to the embodiment of the present invention.
FIG. 43 is a front view showing another example of the work screen of the automatic straight movement seen when the start condition is not met, in the management terminal according to the embodiment of the present invention.
FIG. 44 is a front view showing an example of the work screen of the automatic straight movement seen when the start condition is met, in the management terminal according to the embodiment of the present invention.
FIG. 45 is a front view showing an example of the work screen of the automatic straight movement seen during the work, in the management terminal according to the embodiment of the present invention.
FIG. 46 is a front view of another example of the work screen of the automatic straight movement seen during the work, in the management terminal according to the embodiment of the present invention.
FIG. 47 is a front view showing an example of a farm field list screen, in the management terminal according to the embodiment of the present invention.
FIG. 48 is a front view showing an example of a work area list screen, in the management terminal according to the embodiment of the present invention.
FIG. 49 is a front view showing an example of a work information list screen of the work route, in the management terminal according to the embodiment of the present invention.
FIG. 50 is a front view showing an example of a work information list screen of the reference line, in the management terminal according to the embodiment of the present invention.
FIG. 51 is a front view showing an example of a registered information edit screen, in the management terminal according to the embodiment of the present invention.
FIG. 52 is a front view showing an example of a farm field edit screen, in the management terminal according to the embodiment of the present invention.
FIG. 53 is a front view showing an example of a work area edit screen, in the management terminal according to the embodiment of the present invention.
FIG. 54 is a front view showing an example of a work information edit screen of the work route, in the management terminal according to the embodiment of the present invention.
FIG. 55 is a front view showing an example of the work information edit screen of the reference line, in the management terminal according to the embodiment of the present invention.
FIG. 56 is a front view showing an example of a work history check screen, in the management terminal according to the embodiment of the present invention.
FIG. 57 is a front view showing an example of a various settings screen, in the management terminal according to the embodiment of the present invention.
FIG. 58 is a front view showing an example of a menu screen, in the management terminal according to the embodiment of the present invention.
FIG. 59 is a front view showing an example of a disabled automatic travel area setting screen, in the management terminal according to the other embodiment of the present invention.
FIG. 60 is a front view showing an example of a disabled automatic travel area edit screen, in the management terminal according to the other embodiment of the present invention.
FIG. 61 is a front view of another example of the disabled automatic travel area setting screen, in the management terminal according to the other embodiment of the present invention.
FIG. 62 is a front view showing an example of an end position setting screen, in the management terminal according to the other embodiment of the present invention.
FIG. 63 is a front view showing an example of a headland width setting screen, in the management terminal according to the other embodiment of the present invention.

### DESCRIPTION OF EMBODIMENTS

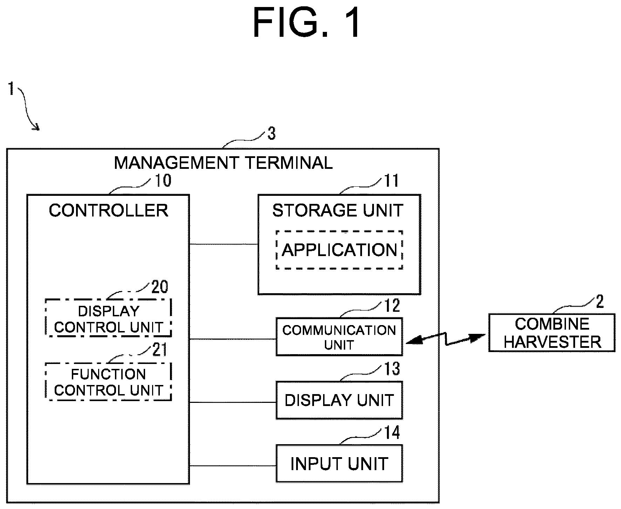

A management system 1 as an embodiment of the present invention will be described with reference to the drawings. The management system 1 manages a work vehicle that can travel automatically; for example, as shown in FIG. 1, the management system 1 has an agricultural machine such as a combine harvester 2 as the work vehicle, and has a management terminal 3 attached to the combine harvester 2. The management system 1 is so configured as to manage the work vehicle used by a worker and a farm field.

The combine harvester 2 performs agricultural work such as mowing in the farm field. The combine harvester 2, which is provided with a communication device (not shown), is connected with an associated management terminal 3 in a wirelessly communicable manner. The combine harvester 2, while traveling, performs the agricultural work in the farm field, and simultaneously therewith, measures GNSS (Global Navigation Satellite System) information of a GNSS antenna mounted on the combine harvester 2, i.e., the combine harvester 2's own vehicle position, and sends the GNSS information, as measurement point data, to the management terminal 3.

The combine harvester 2 is configured as an automatic travel vehicle that performs the automatic mowing travel along a preset work route. The combine harvester 2 receives farm field information and work information from the associated management terminal 3, and controls the automatic mowing travel according to the above farm field information and work information. Further, the combine harvester 2 has work vehicle data as setting information about the travel and work (for example, mowing), and controls the automatic mowing travel based on the work vehicle data.

The examples of the farm field information include the shape, size, and position information (coordinates and the like) of the farm field's outermost periphery, measurement point data constituting the farm field's outermost periphery, and the shape, size, and position information (coordinates and the like) of a work area for performing the work in the farm field. The farm field information includes an address of the farm field, the registered name and date of the farm field information, and the registered name and date of the work area. The work information is associated with the farm field (farm field information) and includes, for example, the work route or reference line used for the work in the farm field, and the work route and the reference line include the registration name, the registration date, and the position information, respectively. Further, the work area may include the entrance or discharge positions, and the work route and the reference line may include a start point (for example, a point A or a start position) or an end point (for example, a point B or an end position).

In the management terminal 3, one or more pieces of the farm field information are registered, one or more work areas are registered associated with one piece of the farm field information, and one or more pieces of work information such as the work route or reference line are registered associated with one work area.

The work vehicle data includes, for example, the model number and the maximum mowed strip count which are different with each vehicle type of the combine harvester 2. The work vehicle data also include the installation status of various optional accessories of the combine harvester 2, examples of the optional accessories including, auxiliary dividers, extension augers, ladders, and bundling devices.

The combine harvester 2 performs unacquired work in which the work is performed by newly acquiring the farm field information or work information, or already acquired work in which the work is performed based on the farm field information or work information that has already been acquired, as work involving the automatic travel. The unacquired work includes new farm field work in which the farm field shape is acquired as the farm field information and the work is performed, and reference line work in which a reference line is set as the work information and the work is performed with an automatic straight movement. The already acquired work includes already acquired farm field work in which the work is performed based on the farm field shape already acquired as the farm field information, and already acquired route work in which the work is performed based on the work route already acquired as the work information (for example, a work route during the work, which was interrupted, etc.).

For example, the combine harvester 2 performs any of the following works involving the automatic mowing travel: a first work in which the work is performed by acquiring or selecting the farm field information about the farm field, a second work in which the work is performed based on the already acquired work route, and a third work in which the work is performed by acquiring the reference line and performing the work by the automatic straight movement.

When acquiring the farm field information in the first work, the combine harvester 2, before performing the automatic mowing travel, along the outermost periphery of the work area of the farm field, performs the mowing travel that accords to a manual operation, thereby to measure the measurement point data on each position on the farm field's outermost periphery so as to calculate the shape, size, and position information (coordinates, etc.) of the farm field's outermost periphery. To the management terminal 3, the combine harvester 2 sends the measurement point data on each position acquired by the outermost periphery measurement.

When selecting the farm field information in the first work, the combine harvester 2, before performing the automatic mowing travel, receives, from the management terminal 3, the farm field information selected by the management terminal 3.

In the first work, the combine harvester 2, based on the farm field information acquired or selected as described above, performs the automatic straight movement along each side of the farm field's outermost periphery thereby to form a headland, and at this time, measures the measurement point data on each position of the headland's innermost periphery so as to calculate the shape, size, and position data (coordinates, etc.) of the unmown area that that is subject to the automatic mowing travel inside the headland. To the management terminal 3, the combine harvester 2 sends the measurement point data on each position of the headland's innermost periphery.

Further, in the first work, the combine harvester 2, from the management terminal 3, receives the work route created by the management terminal 3 based on the farm field information, and performs, based on the above work route, the automatic mowing travel of the unmown area. The route pattern of the work route is selected from a reciprocable mowing of reciprocating a plurality of strokes in the unmown area, or a turnable mowing of repeating a circumferential turn of the stroke along the inner periphery of the unmown area while shifting the circumferential turn toward the center.

In the second work, it is assumed that when the combine harvester 2 interrupts the automatic mowing travel in the middle after starting the automatic mowing travel by the first work, the management terminal 3 stores, as a previous route, the work route related to the interrupted automatic mowing travel. When receiving the previous route from the management terminal 3, the combine harvester 2 restarts the automatic mowing travel based on the above previous route.

In the third work, before performing the automatic mowing travel, the combine harvester 2, between the point A and point B of the reference line, performs the mowing travel that accords to the manual operation, and sends, to the management terminal 3, the work information including the point A and point B of the reference line. The combine harvester 2 receives, from the management terminal 3, the work route created by the management terminal 3 based on the work information of the reference line, and performs the automatic mowing travel based on the work route.

The management terminal 3 is a terminal that can remotely control the combine harvester 2 as the associated work vehicle, and is composed of, for example, a tablet terminal provided with a touch screen, a laptop personal computer, or the like. The management terminal 3 is preloaded with an application to manage and operate the associated combine harvester 2.

The management terminal 3 may be provided with any other application to manage and operate a work vehicle other than the combine harvesters 2, and may be provided with any other application to manage multiple types of work vehicles including the combine harvester 2 and a plurality of farm fields.

Also, it is assumed that registered vehicle information (activation key) specific to the combine harvester 2 used by the worker is written in advance in the management terminal 3 to be described below. The registered vehicle information is information that is issued from an issuance server (not shown), and is registered in the issuance server. When installing an application of multiple types of work vehicles, the management terminal 3 may register the registered vehicle information of each work vehicle, but the registered vehicle information that can be registered for each type of work vehicle is only one model number (type information) of work vehicle. The work vehicle of the thus registered model number is brought into an activation state in the management terminal 3. The registered vehicle information is written in a database within the application of the work vehicle when the application of the work vehicle such as the combine harvester 2 is installed on the management terminal 3. The registered vehicle information includes, for example, an application name of the work vehicle, contract information about the automatic travel of the work vehicle, work vehicle identification information (a serial number) assigned to each work vehicle, and the status of an obstacle sensor provided in the work vehicle. As a backup function, the application of the work vehicle sends to the registered vehicle information to a management server (not shown) and stores therein.

As shown in FIG. 1, the management terminal 3 is provided with a controller 10 composed of a computer such as a CPU, and the controller 10 is connected to a storage unit 11 such as a ROM, a RAM, a hard disk drive, and a flash memory, and to a communication unit 12 that communicates with an external device. Also, the management terminal 3 is provided with a display unit 13 such as a touch screen and a monitor for displaying various kinds of information and outputting the same to the worker; further, the management terminal 3 is provided with an input unit 14 such as a touch screen and operation key for receiving, from the worker, an input operation of various kinds of information.

The storage unit 11 stores programs and data for controlling various component elements and various functions of the management terminal 3; the controller 10 executes an arithmetic process on the basis of the programs and data stored in the storage unit 11, thereby to control the various component elements and various functions of the management terminal 3. The storage unit 11 stores, for example, an application that manages and operates the management terminal 3. The storage unit 11 also stores the work vehicle data of the combine harvester 2 registered by the application, and can store, not only the vehicle data of the combine harvester 2 that is associated with the management terminal 3, but also the work vehicle data of any other combine harvester 2. Further, the storage unit 11 stores home information of the worker registered by the application.

The storage unit 11 also stores the farm field information and work information created by the application in the past work by the combine harvester 2. The storage unit 11 stores one or more pieces of the farm field information, associates one or more work areas with one piece of farm field information and stores the same, and associates one or more pieces of information such as the route or reference line with the one farm field and stores the same.

Via a wireless communication antenna, the communication unit 12 is connected to a communicator or management server of the combine harvester 2 in a manner to make a wireless communication. The controller 10 controls the communication unit 12 and performs the wireless communication with the communication device or management server of the combine harvester 2, thereby to send and receive various kinds of information to and from the communication device or the management server.

The controller 10 starts the application according to the startup of the management terminal 3 or according to the operation of the input unit 14. The controller 10, which executes the application, operates as a display control unit 20 that displays, on the display unit 13, various screens of the management application. Further, the controller 10, which executes the application, operates as a function control unit 21 that executes each function of the management application according to an operation on each screen of the application. The display control unit 20 and the function control unit 21 realize a display control step and function control process of a management method according to the present invention.

Functions of the display control unit 20 and function control unit 21 are described below.

When the application is to be started for the first time, the display control unit 20 displays, on the display unit 13, a registered vehicle information input screen (not shown) for registering the registered vehicle information (activation key) specific to the combine harvester 2. When the registered vehicle information has been entered in the registered vehicle information input screen according to the operation of the input unit 14, the function control unit 21 sends the entered registered vehicle information to the management server. The management server determines whether or not the entered registered vehicle information is valid, and sends a determination result thereof to the management terminal 3. When the determination result of the registered vehicle information is not valid, the display control unit 20 displays, on the display unit 13, an error screen (not shown) stating that the determination result is not valid. Meanwhile, when the determination result of the registered vehicle information is valid, the controller 10 ordinarily starts the application.

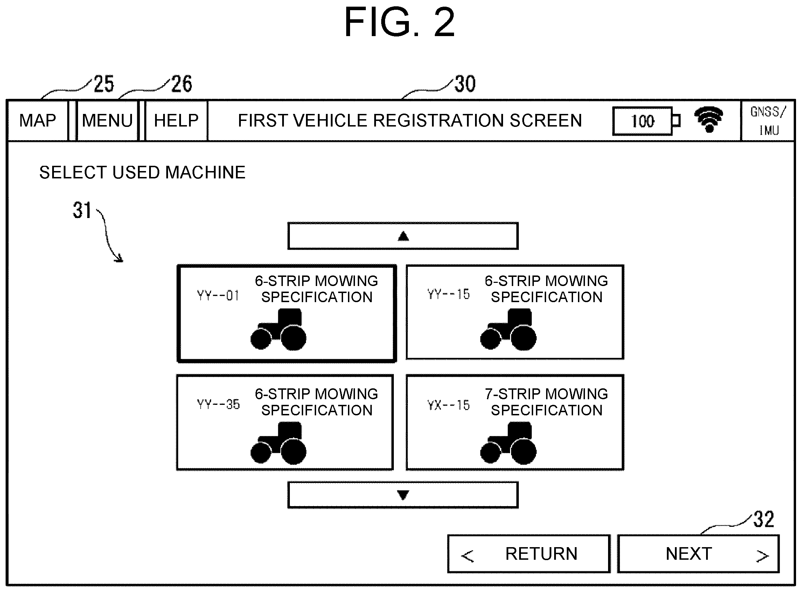

When the application ordinarily starts, the controller 10 determines whether or not the work vehicle data of the combine harvester 2 is registered in the management terminal 3, and if not registered, the display control unit 20 displays a first vehicle registration screen 30 on the display unit 13 as shown in FIG. 2, so as to perform the registering operation of the vehicle data as an initial registration. The display control unit 20, on the first vehicle registration screen 30, selectably displays a plurality of vehicle type items 31 where the model number and the maximum mowed strip count are different with each vehicle type of the combine harvester 2. The vehicle type item 31 identifiably displays the model number and the maximum mowed strip count by characters or signs. The display control unit 20 also displays a fix button 32 to fix the selecting operation of the vehicle type item 31 on the first vehicle registration screen 30.

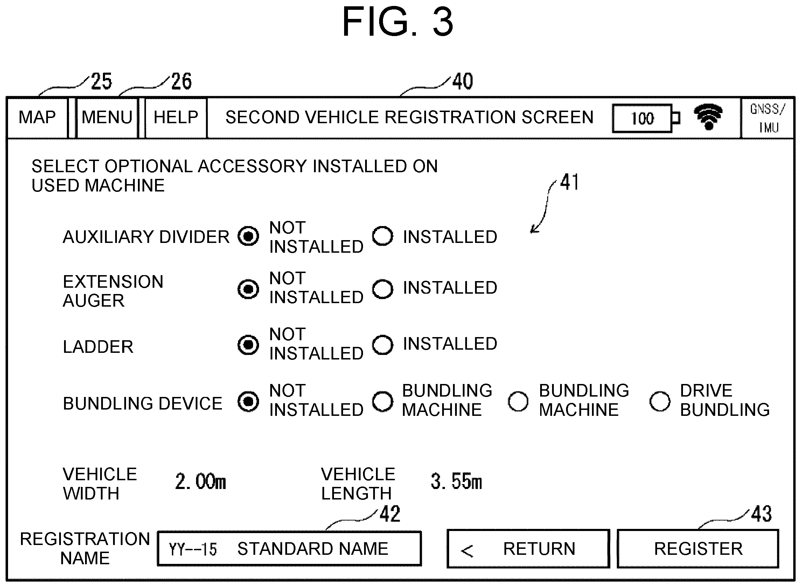

When the selecting operation of the vehicle type item 31 is fixed on the first vehicle registration screen 30, the display control unit 20 displays, on the display unit 13, a second vehicle registration screen 40, as shown in FIG. 3, so as to perform the registering operation of the work vehicle data as the initial registration. The display control unit 20, on the second vehicle registration screen 40, selectably displays fitting status items 41 of various optional items of the combine harvester 2. For example, the optional items include an auxiliary divider, an extension auger, a ladder, and a bundling device. Also, the display control unit 20, on the second vehicle registration screen 40, presents the vehicle width and vehicle length of the combine harvester 2. Further, the display control unit 20 displays, on the second vehicle registration screen 40, a registration name entry field 42 for entering the registration name of the work vehicle data. Also, the display control unit 20 displays a fix button 43 to fix the registration of the work vehicle data entered on the second vehicle registration screen 40.

When the fix button 43 is selected on the second vehicle registration screen 40, the function control unit 21 associates the work vehicle data, which are entered on the first vehicle registration screen 30 and the second vehicle registration screen 40, with the worker and the management terminal 3, and stores and registers the same in the storage unit 11. The above registering operation of the work vehicle data using the first vehicle registration screen 30 and the second vehicle registration screen 40 may be executed after the application is started so as to register the work vehicle data of any combine harvester 2 other than the combine harvester 2 associated with the management terminal 3.

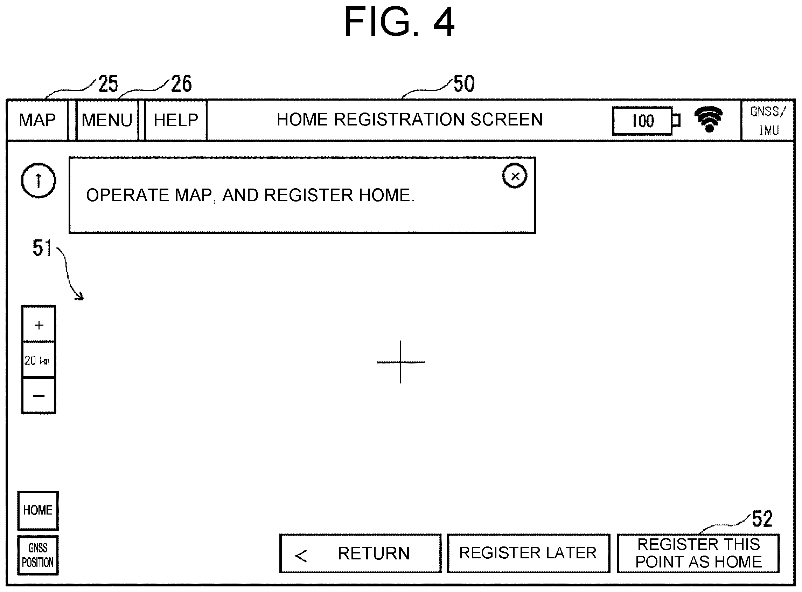

When the application is started, the controller 10 determines whether or not the worker's home information is registered in the management terminal 3, and when not registered, the display control unit 20 displays a home registration screen 50 on the display unit 13 as shown in FIG. 4, so as to perform the registering operation of the home information as the initial registration.

On the home registration screen 50, the display control unit 20 has a map field 51 for displaying a map that is based on map data, and displays a fix button 52 to fix the registration of the home information entered on the home registration screen 50. When the fix button 52 is selected, the function control unit 21 associates the home information, which was entered on the home registration screen 50, with the worker and the management terminal 3, and stores and registers the same in the storage unit 11.

The above registering operation of the home information using the home registration screen 50 may be performed when the first vehicle registration screen 30 and the second vehicle registration screen 40 register the work vehicle data, or may be performed in an editing operation after the application is started.

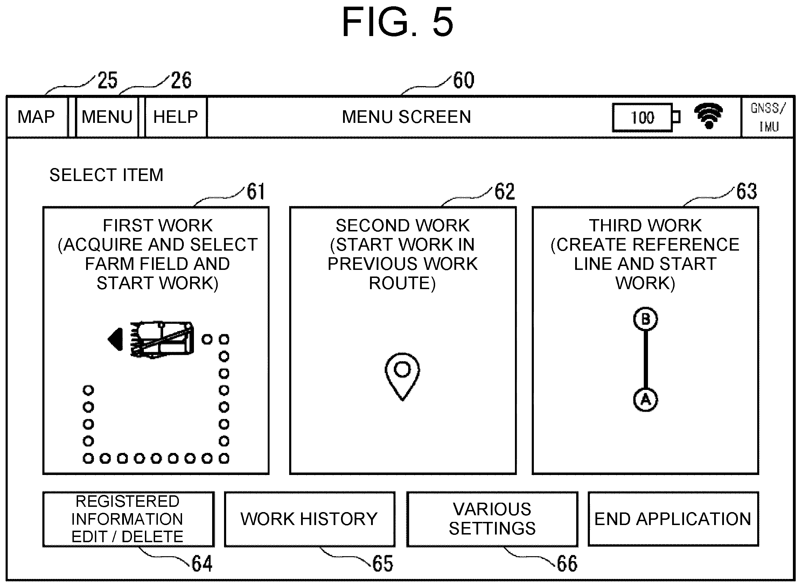

After the ordinary start of the application; when the work vehicle data of the combine harvester 2 is registered in the management terminal 3, or when the work vehicle data is registered on the first vehicle registration screen 30 and the second vehicle registration screen 40 by the above initial registration, the display control unit 20 displays the menu screen 60 on the display unit 13, as shown in FIG. 5, so as to select the work in the farm field by the combine harvester 2. In each screen, the display control unit 20 selectably displays a menu item 26; selecting the menu item 26 in each screen displays the menu screen 60 on the display unit 13.

On the menu screen 60, the display control unit 20 displays, as a plurality of work items related to the work in the farm field by the combine harvester 2, a first work item 61 for acquiring or selecting the farm field information about the farm field, a second work item 62 for performing the work based on the already acquired work route, and a third work item 63 for acquiring the reference line and for performing the work by the automatic straight movement. A plurality of work items is arranged in the left and right directions in the center of the display unit 13 in the vertical direction, and the work content is identifiably displayed by a character or a sign.

On the menu screen 60, the display control unit 20 selectably displays a registered information item 64 related to the registered information of the farm field and route, a work history item 65 related to the work history in the farm field, and a setting item 66 related to the setting of the combine harvester 2. Further, the registered information item 64, the work history item 65, and the setting item 66 are displayed for a plurality of work items in a manner to be arranged on one side, for example, on the lower side, in the vertical or horizontal direction, displaying the content identifiable by the character, sign or the like. The plurality of work items is displayed larger than the registered information item 64, the work history item 65, and the setting item 66.

On the menu screen 60, the first work item 61 serves as both an unacquired work item for performing the work by newly acquiring the farm field information, and an already acquired work item for performing the work based on the already acquired farm field information. In other words, the first work item 61 serves both a new farm field work item to perform the work by acquiring the farm field shape as the farm field information, and an already acquired farm field work item to perform the work based on the farm field shape already acquired as the farm field information. Specifically, a new acquisition button 83 on a farm field acquisition screen 80 to be described below becomes the unacquired work item or the new farm field work item, and a selection fix button 84 becomes the already acquired work item or the already acquired farm field work item.

When the first work item 61 is selected on the menu screen 60; before acquiring or selecting the farm field information, the function control unit 21 determines whether or not the combine harvester 2 registered in the management terminal 3 is present, that is, whether or not the work vehicle's data stored in the storage unit 11 are present, so as to select the combine harvester 2 for performing the first work of the automatic mowing travel. When only one combine harvester 2 is registered in the management terminal 3, the function control unit 21 reads out the work vehicle data of the above combine harvester 2 from the storage unit 11, and fixes as the combine harvester 2 to perform the first work.

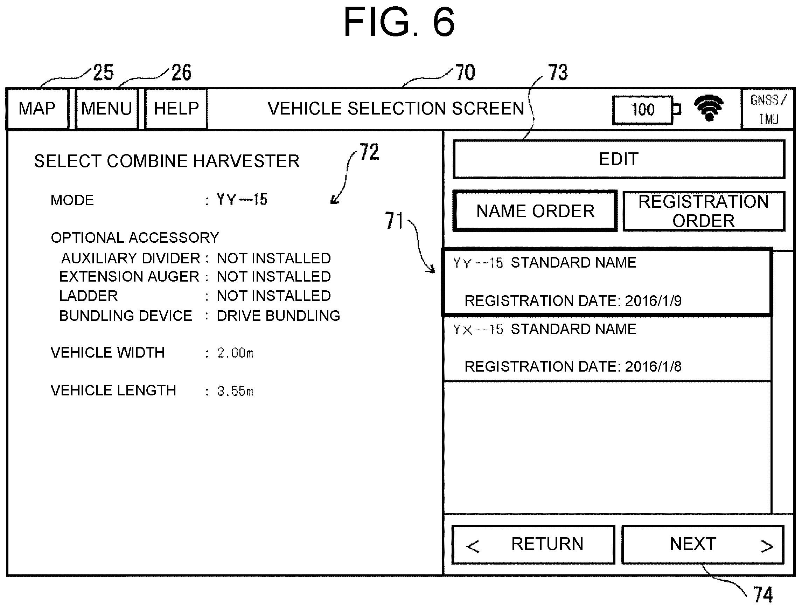

Meanwhile, when two or more combine harvesters 2 are registered in the management terminal 3, or when no combine harvester 2 is registered in the management terminal 3, the display control unit 20, as shown in FIG. 6, displays, on the display unit 13, a vehicle selection screen 70 for selecting the combine harvester 2 that performs the first work of the automatic mowing travel. On the vehicle selection screen 70, the display control unit 20 displays a vehicle list 71, a vehicle detail field 72, an edit button 73, and a fix button 74.

In the vehicle list 71 of the vehicle selection screen 70, the display control unit 20 displays a list of each combine harvester 2 of the work vehicle data stored in the storage unit 11, and makes any of the combine harvesters 2 selectable. The display control unit 20 simply displays the content of the work vehicle data as each combine harvester 2 in the vehicle list 71, for example, the registered name and registration date of the combine harvester 2. The display control unit 20 may make the display order of each combine harvester 2 in the vehicle list 71 switchable in order of name or registration.

In the vehicle detail field 72 of the vehicle selection screen 70, the display control unit 20 displays in detail the content of the work vehicle data of the combine harvester 2 selected in the vehicle list 71, and presents, for example, the model number of the combine harvester 2, the installation status of optional accessories such as auxiliary divider, extension auger, ladder, and bundling device, the vehicle width, and the vehicle length.

When the edit button 73 is selected on the vehicle selection screen 70, the display control unit 20, for the work vehicle data of the combine harvester 2 selected in the vehicle list 71, displays an edit screen equivalent to the first vehicle registration screen 30 and the second vehicle registration screen 40 shown in FIGS. 2 and 3, thereby to enable the editing of the work vehicle data. When the fix button 74 is selected on the vehicle selection screen 70, the function control unit 21 fixes the work vehicle data, which is selected at the vehicle list 71, as the combine harvester 2 that performs the first work.

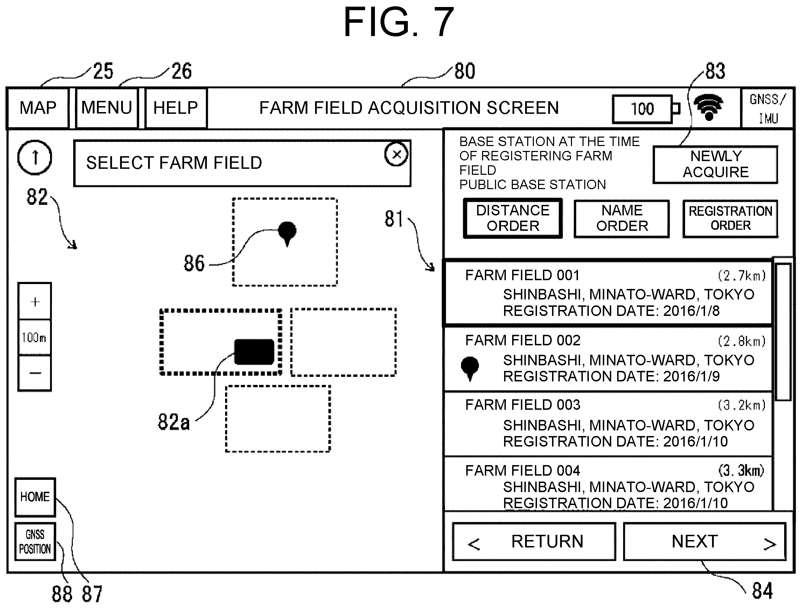

Fixing the combine harvester 2 for performing the first work, the display control unit 20 displays, on the display unit 13, the farm field acquisition screen 80 for acquiring or selecting the farm field information of the farm field for performing the first work, as shown in FIG. 7. On the farm field acquisition screen 80, the display control unit 20 displays a farm field list 81, a map field 82, a new acquisition button 83, and a selection fix button 84. FIG. 7 shows an example of simultaneously displaying the map field 82, and a field that includes the farm field list 81, the new acquisition button 83 and the selection fix button 84; the example may be, however, so switched as to display any one of the above, depending on the operation.

In the farm field list 81 of the farm field acquisition screen 80, the display control unit 20 displays a list of the already acquired farm field information stored in the storage unit 11, making any of the farm field information selectable. The display control unit 20 simply displays the content of the farm field information, as each farm field information of the farm field list 81, displaying the farm field's registered name, address, registration date, and distance from the own vehicle's position, for example. The display control unit 20 may make the display order of each farm field information in the farm field list 81 switchable in order of distance, name, or registration.

In the map field 82 of the farm field acquisition screen 80, the display control unit 20 displays a map that is based on the map data, and highlights the already acquired farm field on the map based on the farm field information stored in the storage unit 11, displaying the outermost periphery of the farm field shape with a dotted line or the like, for example. In the map field 82, the display control unit 20 displays a simulated diagram 82a (icon) of the combine harvester 2 at the combine harvester 2's own vehicle position that is based on the GNSS information of the combine harvester 2 on the map. In the map field 82, the display control unit 20 highlights the farm field selected in the farm field list 81 in a manner that enables the selected farm field to be identifiable from any other farm field, for example, with a color different from the other farm field, and the like. In the farm field list 81 and the map field 82, the display control unit 20 highlights the previous worked-on farm field identifiable from the other farm field, displaying by adding a previous work sign 86 to only the previous worked-on farm field, for example.

In the map field 82 of the farm field acquisition screen 80, the display control unit 20 displays the map so that the selected farm field is in the center. Further, in the map field 82, the display control unit 20 selectably displays a home position button 87 and an own vehicle position button 88 (hereinafter, referred to as "own vehicle position button 88" where GNSS stands for Global Navigation Satellite System). Each time the home position button 87 is operated, the display control unit 20 switches the center of the map in the map field 82 between the selected farm field and the home position that is based on the home information. Each time the own vehicle position button 88 is operated, the display control unit 20 switches the center of the map in the map field 82 between the selected farm field and the combine harvester 2's own vehicle position that is based on the GNSS information of the combine harvester 2.

On the farm field acquisition screen 80, if there is no already acquired farm field information in the vicinity of the combine harvester 2's own vehicle position, the display control unit 20 may operate the new acquisition button 83 thereby to display such a recommended display as to newly acquire farm field information.

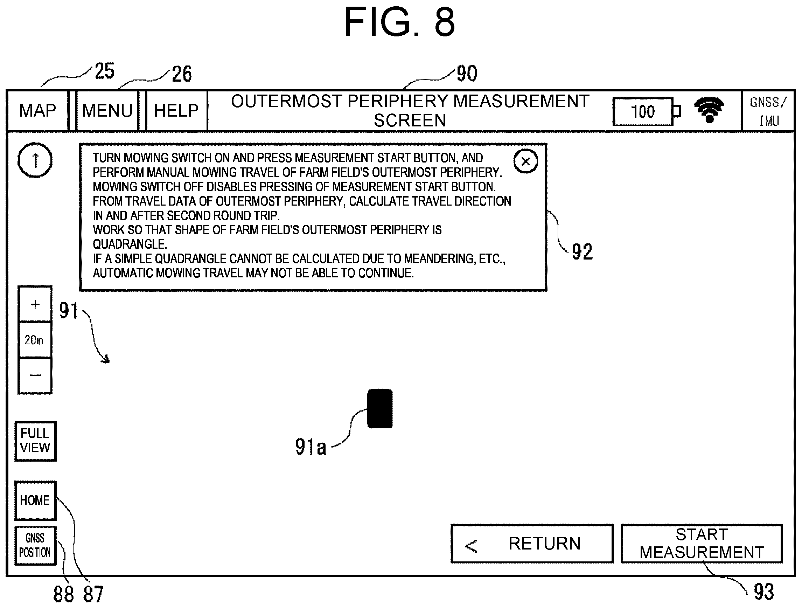

When the new acquisition button 83 is selected on the farm field acquisition screen 80, as shown in FIG. 8, the display control unit 20 displays, on the display unit 13, an outermost periphery measurement screen 90 for the combine harvester 2 to measure the outermost periphery in the first work, as a start screen to start acquiring the farm field information. In the outermost periphery measurement screen 90 before the measurement start, the display control unit 20 displays a map field 91, a start condition field 92, and a measurement start button 93.

In the map field 91 of the outermost periphery measurement screen 90, the display control unit 20 displays a map that is based on the map data, and also displays a simulated diagram 91a (icon) of the combine harvester 2 in the combine harvester 2's own vehicle position that is based on the GNSS information of the combine harvester 2 on the map. Further, the home position button 87 and the own vehicle position button 88 are selectably displayed in the map field 91.

In the start condition field 92 of the outermost periphery measurement screen 90, the display control unit 20 presents the start condition for starting the acquisition of the farm field information, and for performing the outermost periphery measurement of the first work. The start condition includes, for example, that a mowing switch of the combine harvester 2 is turned on. On the outermost periphery measurement screen 90, the display control unit 20 makes the measurement start button 93 selectable when the start condition of the outermost periphery measurement is met, meanwhile makes the measurement start button 93 unselectable when the start condition of the outermost periphery measurement is not met. For example, with the management terminal 3 receiving the state of the mowing switch of the combine harvester 2, the display control unit 20 determines whether or not the mowing switch is turned on, thereby to determine whether or not the start condition is met. The display control unit 20 may make whether or not the start condition is met identifiable by the switching of the display format, such as color, of the start condition field 92 and the measurement start button 93.

When the measurement start button 93 is selected on the outermost periphery measurement screen 90, the function control unit 21 sends, to the combine harvester 2, an instruction to start the outermost periphery measurement, and the combine harvester 2 starts the outermost periphery measurement. The combine harvester 2, while performing the mowing travel that accords to the manual operation, sends, to the management terminal 3, the combine harvester 2's GNSS information (own vehicle position) as the measurement point data, and the function control unit 21 receives the combine harvester 2's own vehicle position from the combine harvester 2.

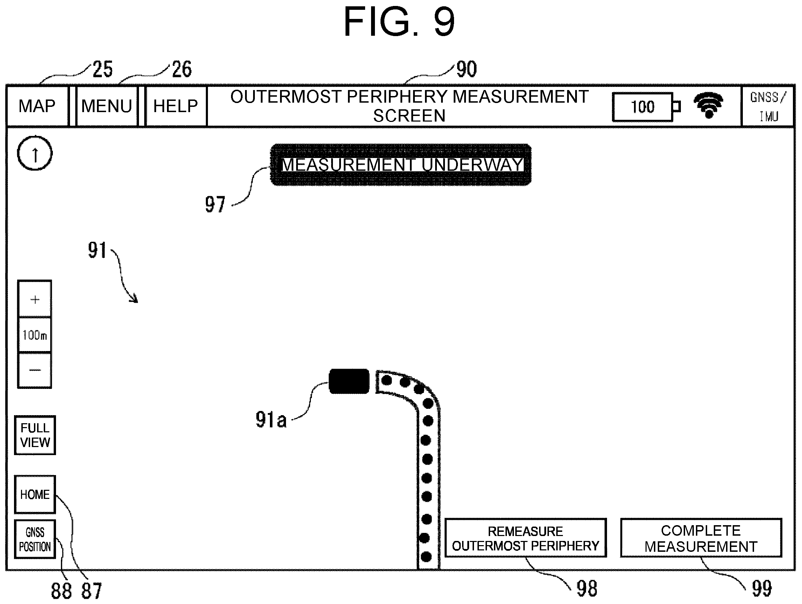

While combine harvester 2 is measuring the outermost periphery, the function control unit 21 measures a travel track of the combine harvester 2 based on the measurement point data, and the display control unit 20 switches the outermost periphery measurement screen 90 to the measurement screen for acquiring the farm field information; as shown in FIG. 9, in the outermost periphery measurement screen 90, displaying a map field 91, a measurement status field 97, a remeasurement button 98, and a measurement completion button 99.

In the map field 91 of the outermost periphery measurement screen 90 seen during the measurement, the display control unit 20 displays a map that is based on map data, and also displays a simulated diagram 91a (icon) of the combine harvester 2 in the combine harvester 2's own vehicle position that is based on the GNSS information of the combine harvester 2 on the map, and further displays the travel track of the combine harvester 2, noting the measurement status such as "under measurement" in the measurement status field 97. Further, the home position button 87 and the own vehicle position button 88 are selectably displayed in the map field 91.

When the remeasurement button 98 is selected on the outermost periphery measurement screen 90, the function control unit 21 sends, to the combine harvester 2, an instruction to end the outermost periphery measurement so as to redo the outermost periphery measurement, and the combine harvester 2 ends the outermost periphery measurement. The function control unit 21 discards the travel track that is based on the measurement point data, and the display control unit 20 displays, on the display unit 13, the outermost periphery measurement screen 90 seen before the measurement start.

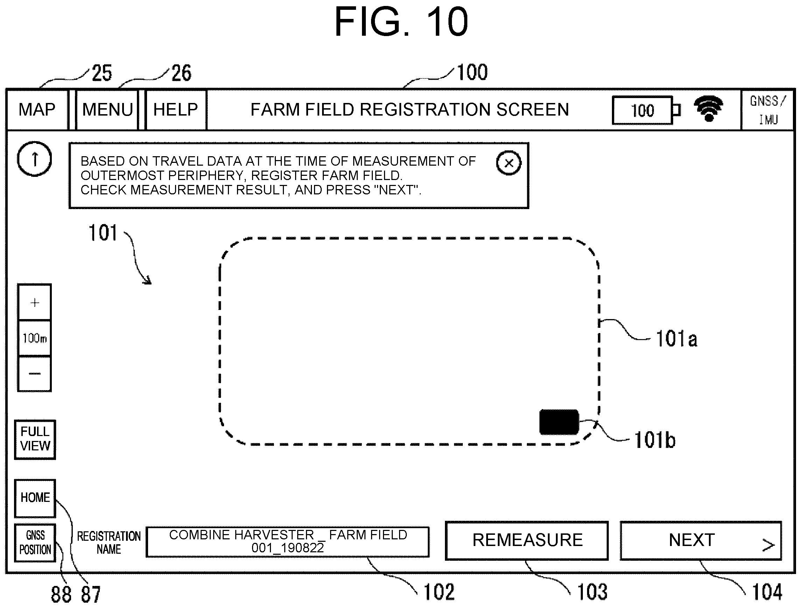

When the measurement completion button 99 is selected on the outermost periphery measurement screen 90, the function control unit 21 sends, to the combine harvester 2, an instruction to complete the outermost periphery measurement, and the combine harvester 2 completes the outermost periphery measurement. When the outermost periphery measurement is completed with the measurement state remaining normal, the function control unit 21 stores, in the storage unit 11, the travel track, which is based on the measurement point data, as a tentative shape of the farm field's outermost periphery (tentative outer periphery shape); the display control unit 20, based on the result of the outermost periphery measurement, displays, on the display unit 13, a farm field registration screen 100 to register, as the field information, the shape, size and position information (coordinates, etc.) of the farm field's outermost periphery, and the measurement point data constituting the farm field's outermost periphery. As shown in FIG. 10, the display control unit 20 displays, in the farm field registration screen 100, a map field 101, a registration name entry field 102, a remeasurement button 103, and a fix button 104.

In the map field 101 of the farm field registration screen 100, the display control unit 20 displays a map that is based on the map data, displays a tentative outer periphery shape 101a (farm field shape) that is a result of the outermost periphery measurement on the map, and further displays a simulated diagram 101b (icon) of the combine harvester 2 at the combine harvester 2's own vehicle position that is based on the GNSS information of the combine harvester 2. Further, the home position button 87 and the own vehicle position button 88 are selectably displayed in the map field 101. In the registration name entry field 102 of the farm field registration screen 100, the display control unit 20 receives inputting of the registration name of the farm field of the farm field information.

When the remeasurement button 103 is selected on the farm field registration screen 100, the function control unit 21 discards the travel track that is based on the measurement point data, and the display control unit 20 displays, on the display unit 13, the outermost periphery measurement screen 90 seen before the measurement start.

When the fix button 104 is selected on the farm field registration screen 100, the function control unit 21 fixes the shape, size and position information (coordinates, etc.) of the farm field's outermost periphery and the measurement point data constituting the farm field's outermost periphery based on the tentative outer periphery shape 101a that is the result of the outermost periphery measurement, registers the above as the farm field information by associating the above with the farm field registration name entered in the registration name entry field 102, and stores the above in the storage unit 11.

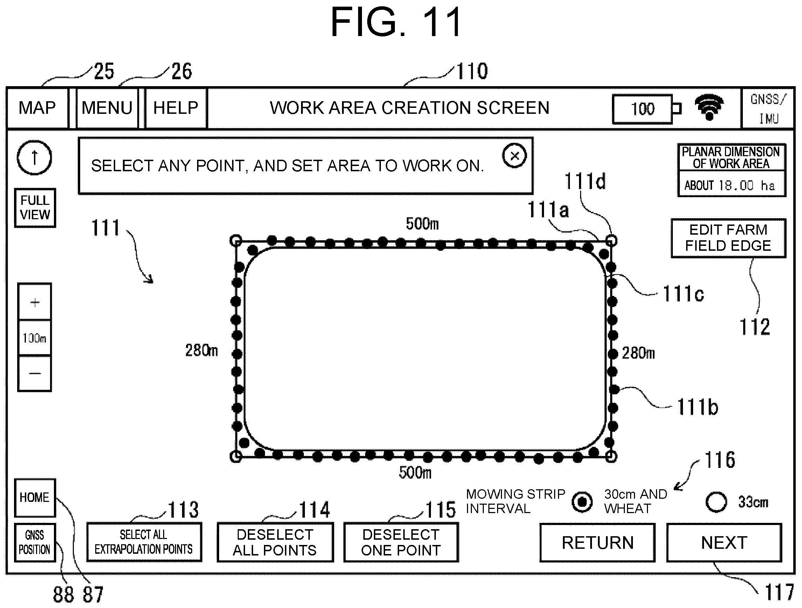

According to the selecting of the fix button 104 of the farm field registration screen 100, the display control unit 20, as shown in FIG. 11, displays, on the display unit 13, a work area creation screen 110 for creating the work area in the farm field resulting from the outermost periphery measurement. In the work area creation screen 110, the display control unit 20 displays a map field 111, a farm field edge edit button 112, an all-interpolation-points selection button 113, an all-points deselection button 114, a one-point deselection button 115, a mowed strip interval selection field 116, and a fix button 117.

In the map field 111 of the work area creation screen 110, the display control unit 20 displays a map that is based on the map data, and, concerning the farm field information registered in the farm field registration screen 100, displays a farm field shape 111a that is based on the farm field's outermost periphery, a measurement point 111b showing the measurement point data, and a work area shape 111c of the work area in the farm field. Further, the home position button 87 and the own vehicle position button 88 are selectably displayed in the map field 111.

In the map field 111, the display control unit 20 also presents the length of each side that constitutes the work area shape 111c and a planar dimension of the work area. The function control unit 21 detects each side that includes the measurement point data and that is of the farm field's outermost periphery, and linearly approximates the measurement point data included in each side, thereby to calculate each side of the work area shape 111c which is rectangular. The function control unit 21 sets each edge of the farm field shape 111a as a farm field edge 111d, and the display control unit 20 displays the farm field edge 111d on the map. When the farm field edge 111d is edited, the display control unit 20 displays, on the work area creation screen 110, the edited farm field edge 111d and the work area shape 111c that is based on the edited farm field edge 111d.

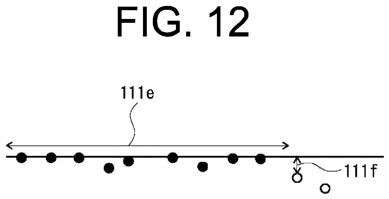

When measuring the farm field's outermost periphery, the combine harvester 2, as the case may be, travels, at the edge portion of the farm field, not along each side of the farm field's outermost periphery, without turning at a right angle. Therefore, the function control unit 21 causes the measurement point data, which is acquired by the travel not along each side of the farm field's outermost periphery, not to be applied to calculation of each side of the work area shape 111c. Specifically, as shown in FIG. 12, the function control unit 21 has set a linearly approximated minimum length 111e (for example, 15 m), and linearly approximates the measurement point data included in the range of the minimum length 111e thereby to calculate a straight line. Further, the function control unit 21 linearly approximates the measurement point data included in the range of the minimum length 111e and the measurement point included in the extended line of the calculated straight line thereby to recalculate a more appropriate straight line. At this time, as shown in FIG. 12, the function control unit 21 has set a linearly approximated allowable error 111f, so that measurement point data that is away from the previously calculated straight line by the allowable error 111f or over is not included in the measurement point data for calculating the straight line. In the work area creation screen 110, the display control unit 20 identifiably displays the measurement point data that constitutes the approximate straight line and the measurement point data that does not constitute the approximate straight line; for example, the former may be displayed with a black circle while the latter may be displayed with a white circle. The linearly approximated minimum length 111e and the linearly approximated allowable error 111f may be set in advance, or may be settable arbitrarily on the work area creation screen 110.

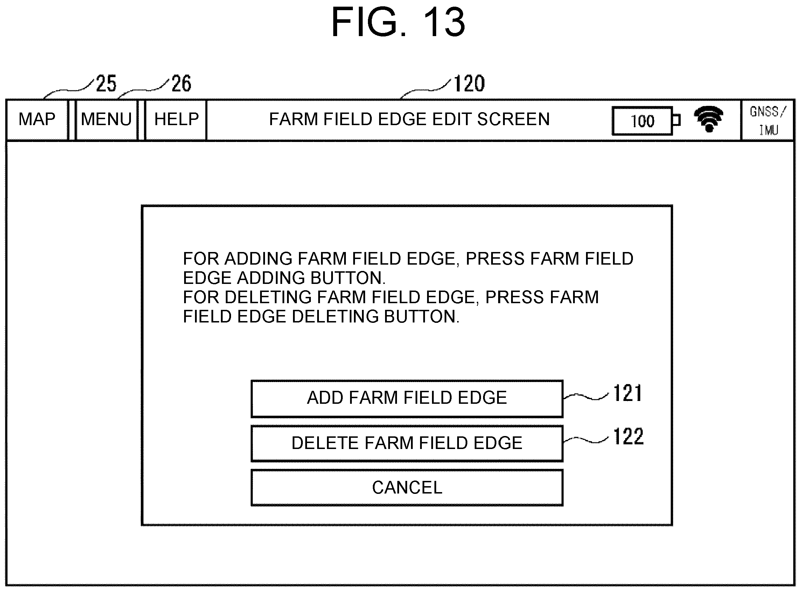

When the farm field edge edit button 112 is selected on the work area creation screen 110, the display control unit 20 displays, on the display unit 13, a farm field edge edit screen 120 for editing the farm field edge 111d of the work area shape 111c. As shown in FIG. 13, on the farm field edge edit screen 120, the display control unit 20 selectably displays a farm field edge adding button 121 and a farm field edge deleting button 122.

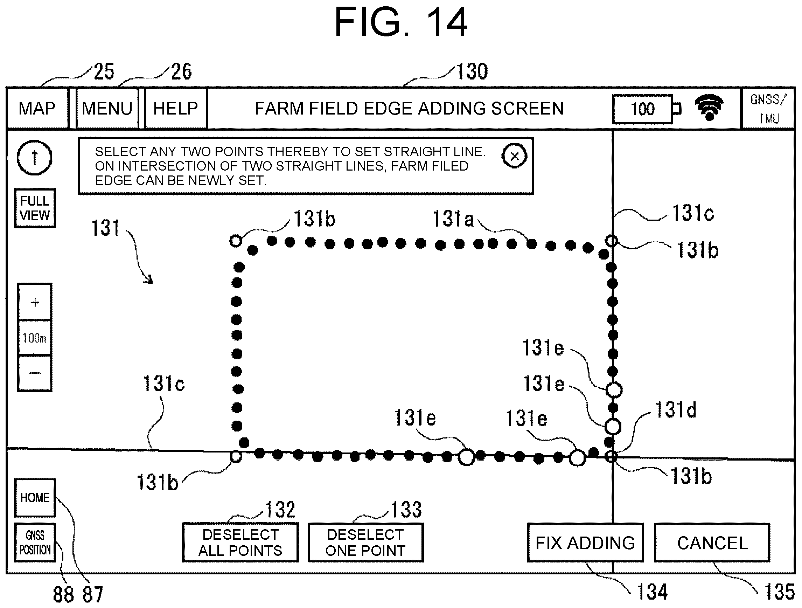

When the farm field edge adding button 121 is selected on the farm field edge edit screen 120, the display control unit 20 displays, on the display unit 13, a farm field edge adding screen 130 for adding the farm field edge of the farm field shape. As shown in FIG. 14, on the farm field edge adding screen 130, the display control unit 20 selectably displays a map field 131, an all-points deselection button 132, a one-point deselection button 133, an addition fix button 134, and a cancellation button 135.

In the map field 131 of the farm field edge adding screen 130, the display control unit 20 displays a measurement point 131a showing the measurement point data constituting the farm field's outermost periphery, and a farm field edge 131b already set. The display control unit 20 makes the measurement point 131a selectable on the map field 131; selecting (touching) the two measurement points 131e of the measurement points 131a sets and displays a guideline 131c connecting the two measurement points 131a, sets and displays two guidelines 131c on the map field 131, and sets an additional candidate 131d at an intersection of the two guidelines 131c.

When the all-points deselection button 132 is selected on the farm field edge adding screen 130, the display control unit 20 deselects all of the measurement points 131a; when the one-point deselection button 133 is selected on the farm field edge adding screen 130, the display control unit 20 deselects the selected measurement point 131a. When the addition fix button 134 is selected on the farm field edge adding screen 130, the display control unit 20 additionally fixes, as the farm field edge, the additional candidate 131d set at the intersection of the two guidelines 131c, and the display control unit 20 displays the work area creation screen 110 on the display unit 13. When the cancellation button 135 is selected on the farm field edge adding screen 130, the function control unit 21 does not add the farm field edge regardless of the additional candidate 131d, and the display control unit 20 displays the work area creation screen 110 on the display unit 13.

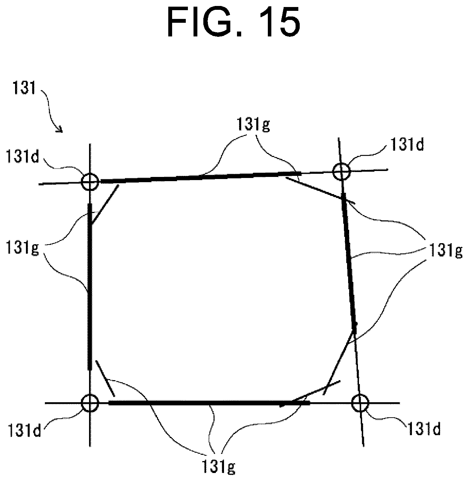

In the present embodiment, as described above, the example has been described, in which, on the farm field edge adding screen 130, the guideline 131c connecting the two measurement points 131a selected from the measurement point data is set, and the additional candidate 131d of the farm field edge is set at the intersection of the two guidelines 131c, but the present invention is not limited to this example. In another example, the function control unit 21 first linearly approximates the measurement point data acquired from the measurement of the farm field's outermost periphery, thereby to calculate, as shown in FIG. 15, a plurality of straight lines 131g. The linear approximation is not limited to the minimum length 111e, but is performed under a more relaxed condition.

In the map field 131 of the farm field edge adding screen 130, the display control unit 20 selectably displays, as shown in FIG. 15, a plurality of calculated straight lines 131g. The function control unit 21 extends the straight line 131g selected from a plurality of straight lines 131g, sets the additional candidate 131d for the farm field edge 131b at the intersection of the two extended lines, and defines a line segment between the farm field edges 131b as each side of the work area shape 111c. The display control unit 20 may display the selected straight line 131g with a bold line and may display the other straight line 131g with an ordinary line, making it possible to identify. If one or more straight lines 131g are selected in the same direction, the function control unit 21 may linearly approximate these straight lines 131g. The function control unit 21 then deselects, from each side of the work area shape 111c, the straight line 131g that was not selected.

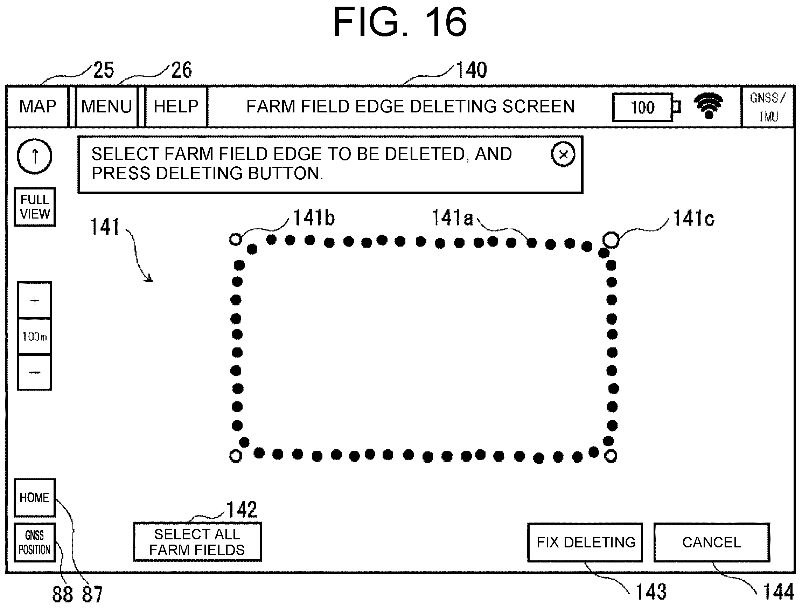

When the farm field edge deleting button 122 is selected on the farm field edge edit screen 120, the display control unit 20 displays, on the display unit 13, a farm field edge deletion screen 140 for deleting the farm field edge of the farm field shape. As shown in FIG. 16, on the farm field edge deletion screen 140, the display control unit 20 selectably displays a map field 141, an all farm field edges selection button 142, a deletion fix button 143, and a cancellation button 144.

In the map field 141 of the farm field edge deletion screen 140, the display control unit 20 displays a measurement point 141a showing the measurement point data constituting the farm field's outermost periphery, and a farm field edge 141b already set. The display control unit 20 makes the farm field edge 141b selectable on the map field 141, and the selected (touched) farm field edge 141b is set as a deletion candidate 141c. The farm field edge 141b that is undeletable is unselectable.

When the all farm field edges selection button 142 is selected on the farm field edge deletion screen 140, the display control unit 20 selects all of the farm field edges 141b that are then become the deletion candidates 141c. When the deletion fix button 143 is selected on the farm field edge deletion screen 140, the display control unit 20 fixes the selected deletion candidate 141c and deletes the farm field edge 141b thereof from the farm field information, and the display control unit 20 displays the work area creation screen 110 on the display unit 13. When the cancellation button 144 is selected on the farm field edge deletion screen 140, the function control unit 21 does not delete the farm field edge 141b regardless of the deletion candidate 141c, and the display control unit 20 displays the work area creation screen 110 on the display unit 13.

When the all-interpolation-points selection button 113 is selected on the work area creation screen 110, the function control unit 21 selects all of the measurement point data as an interpolation point for calculating each side of the work area shape 111c. When the all-points deselection button 114 is selected on the work area creation screen 110, the function control unit 21 deselects all of the measurement point data as an interpolation point for calculating each side of the work area shape 111c. When the one-point deselection button 115 is selected on the work area creation screen 110, the function control unit 21 deselects the measurement point data selected on the map, as the interpolation point for calculating each side of the work area shape 111c.

In the mowed strip interval selection field 116 of the work area creation screen 110, the display control unit 20 has received the selection of the mowed strip interval to be set for the work area, and allows selection between 30 cm and 33 cm, for example.

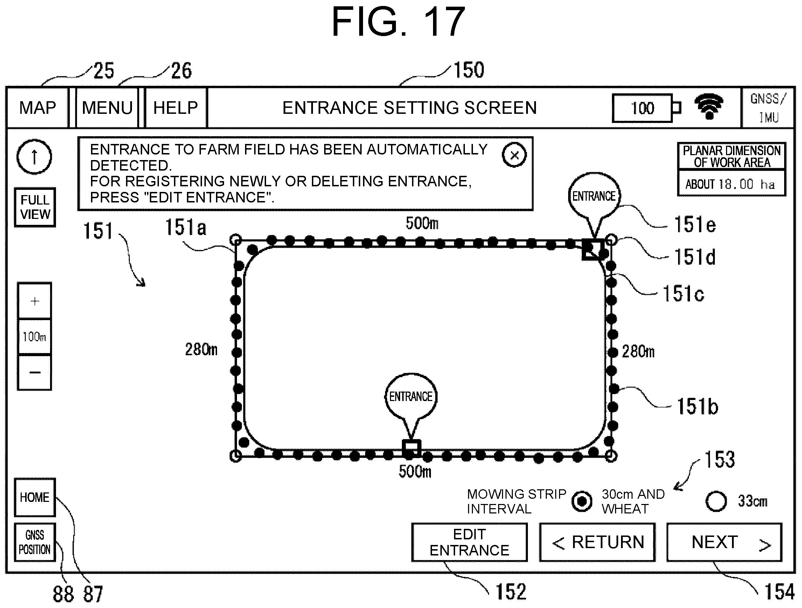

When the fix button 117 is selected on the work area creation screen 110, the function control unit 21, based on the work area shape 111c and farm field edge 111d created on the work area creation screen 110, fixes the shape, size, and position information (coordinates, etc.) of the work area and the measurement point data included in the work area, and the display control unit 20 displays, on the display unit 13, an entrance setting screen 150 to set the entrance for the combine harvester 2 in the work area. As shown in FIG. 17, on the entrance setting screen 150, the display control unit 20 displays a map field 151, an entrance edit button 152, a mowed strip interval selection field 153, and a fix button 154.

The function control unit 21 automatically detects the entrance for the combine harvester 2 in the work area, based on the measurement point data constituting the work area and on the information such as a road facing the work area on the map. In the map field 151 of the entrance setting screen 150, the display control unit 20 displays a map that is based on the map data, and concerning the work area fixed on the work area creation screen 110, displays a work area shape 151a that is based on the farm field's outermost periphery, a measurement point 151b showing the measurement point data, a work area shape 151c and farm field edge 151d of the work area, and an entrance sign 151e showing the automatically detected entrance. Further, the home position button 87 and the own vehicle position button 88 are selectably displayed in the map field 151. When the entrance is edited, the display control unit 20 displays, in the map field 151, the entrance sign 151e showing the edited entrance.

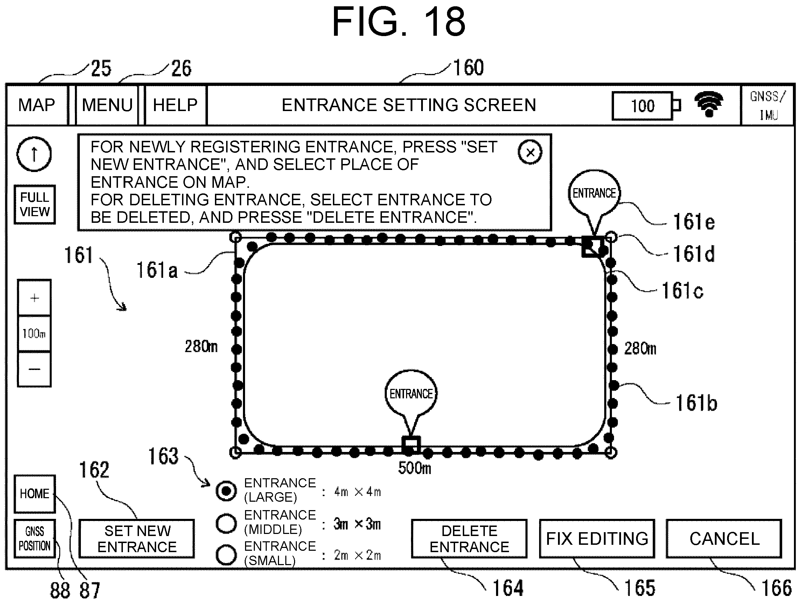

When the entrance edit button 152 is selected on the entrance setting screen 150, the display control unit 20 displays, on the display unit 13, an entrance edit screen 160 for editing the entrance to the work area. As shown in FIG. 18, on the entrance edit screen 160, the display control unit 20 selectably displays a map field 161, a new entrance setting button 162, an entrance size selection field 163, an entrance deleting button 164, an edit fix button 165, and a cancellation button 166.

In the map field 161 of the entrance edit screen 160, the display control unit 20, similar to the above entrance setting screen 150 shown in FIG. 17, shows a farm field shape 161a, a measurement point 161b showing the measurement point data, a work area shape 161c and farm field edge 161d of the work area, and an entrance sign 161e.

After the new entrance setting button 162 is operated on the entrance edit screen 160; when a predetermined position on the map field 161 is selected (touched), the function control unit 21 additionally sets a new entrance at the selected position, and the display control unit 20 displays, on the map field 161, the entrance sign 161e of the set new entrance. The entrance size selection field 163 causes the size of the new entrance set by the selecting operation on the map field 161 to be selectable, for example selectable among 4 m × 4 m large size entrance, 3 m × 3 m medium size entrance, and 2 m × 2 m small size entrance.

The entrance sign 161e on the map field 161 is selectable; when the entrance sign 161e is selected and thereunder the entrance deleting button 164 is selected, the function control unit 21 deletes the entrance that is associated with the selected entrance sign 161e, and the display control unit 20 deletes the selected entrance sign 161e.

When the edit fix button 165 is selected on the entrance edit screen 160, the function control unit 21 fixes the editing of the adding or deleting of the entrance on the entrance edit screen 160, and the display control unit 20 displays the entrance setting screen 150 on the display unit 13. When the cancellation button 166 is selected on the entrance edit screen 160, the function control unit 21 cancels the editing on the entrance edit screen 160, and the display control unit 20 displays the entrance setting screen 150 on the display unit 13.

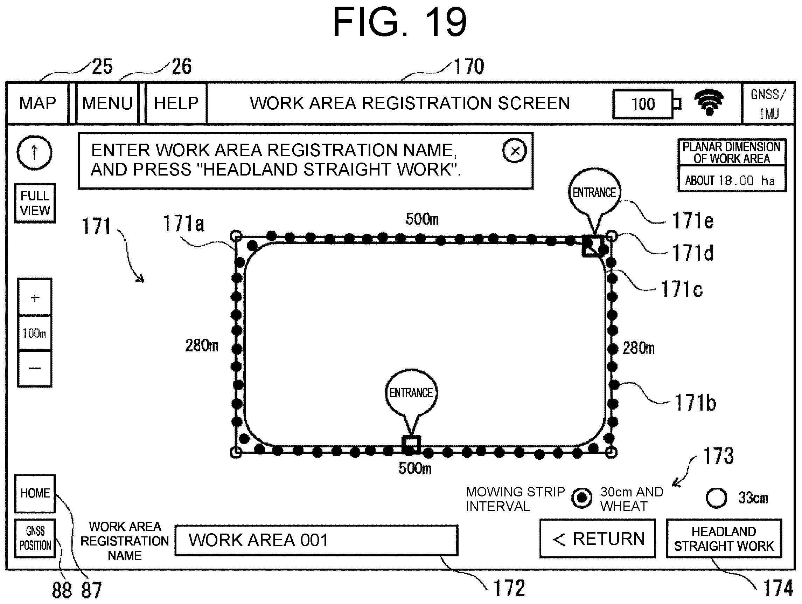

When the fix button 154 is selected on the entrance setting screen 150, the function control unit 21 fixes the entrance (position and size) of the work area based on the entrance sign 151e set on the entrance setting screen 150, and the display control unit 20 displays, on the display unit 13, a work area registration screen 170 for registering the work area in the farm field. On the work area registration screen 170, the display control unit 20, as shown in FIG. 19, displays a map field 171, a registration name entry field 172, a mowed strip interval selection field 173, and a work start button 174.

In the map field 171 of the work area registration screen 170, the display control unit 20 displays a map that is based on the map data, and concerning the work area fixed on the work area creation screen 110 and the entrance set on the entrance setting screen 150, displays a work area shape 171a that is based on the farm field's outermost periphery, a measurement point 171b showing the measurement point data, a work area shape 171c and farm field edge 171d of the work area, and an entrance sign 171e showing the entrance. Further, the home position button 87 and the own vehicle position button 88 are selectably displayed in the map field 171.

In the registration name entry field 172 of the work area registration screen 170, the display control unit 20 receives the inputting of the registration name of the work area of the farm field information.

When the work start button 174 is selected on the work area registration screen 170, the function control unit 21 first associates the shape, size, and position information (coordinates, etc.) of the work area fixed on the work area creation screen 110, the measurement point data included in the work area, and the entrance set on the entrance setting screen 150 with the work area registration name entered in the registration name entry field 172, registers the above in the farm field information registered in the farm field registration screen 100, and stores the above in the storage unit 11. When the registration of the farm field information about the farm field and work area is completed, the function control unit 21 sends, to the combine harvester 2, the registered farm field information as the farm field information for preforming the first work, and moves the process to the headland straight work that is based on the farm field information by the first work. The headland straight work is for performing the automatic straight movement along the outermost peripheral shape of the farm field, and is described in detail below.

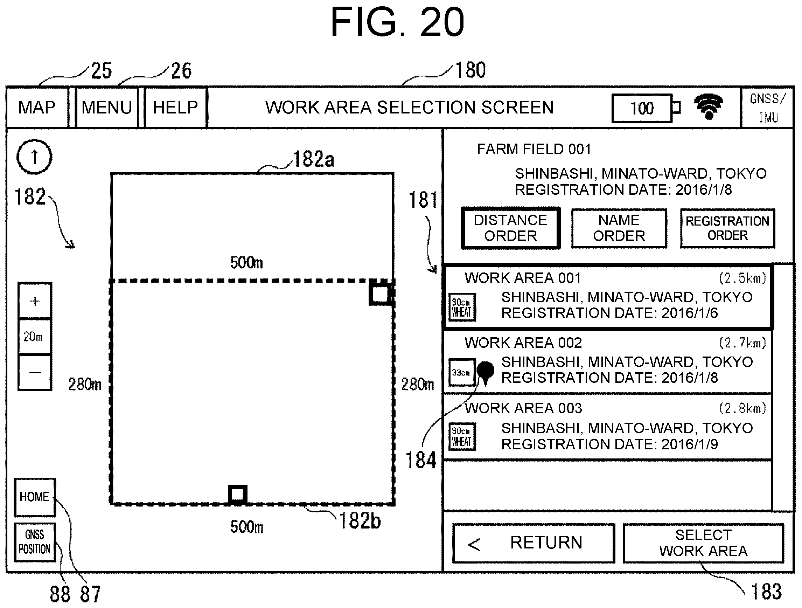

Meanwhile, on the farm field acquisition screen 80; when any of the farm field information is selected in the farm field list 81 and thereunder the selection fix button 84 is selected, the function control unit 21 reads out the selected farm field information from the storage unit 11. As shown in FIG. 20, the display control unit 20 displays, on the display unit 13, a work area selection screen 180 for selecting the work area from the farm field information. In the work area selection screen 180, the display control unit 20 displays a work area list 181, a map field 182, and a selection fix button 183. FIG. 20 shows an example simultaneously displaying the map field 182, and a field that includes the work area list 181 and the selection fix button 183; the example may be, however, so switched as to display any one of the above, depending on the operation.

In the work area list 181 of the work area selection screen 180, the display control unit 20 displays a list of the work areas registered for the farm field information selected on the farm field acquisition screen 80, making any of the work area selectable. The display control unit 20 simply displays the content of the work area, as each work area in the work area list 181, displaying the work area's registered name, address, registration date, distance from the own vehicle's position, for example. The display control unit 20 may make the display order of each work area in the work area list 181 switchable in order of distance, name, or registration. In the work area list 181, the display control unit 20 highlights the work area, which was previously worked on, to be distinguished from any other work area, displaying with a previous work sign 184 attached to only the work area that was previously worked on, for example.

In the map field 182 of the work area selection screen 180, the display control unit 20 displays a map that is based on the map data, and also displays, on the map, a work area shape 182a that is based on the farm field's outermost periphery of the selected farm field information, and a work area shape 182b of the work area selected in the work area list 181. The display control unit 20 highlights the work area shape 182a relative to the work area shape 182b, displaying the work area shape 182b with a dotted line or the like, for example. When an entrance or a discharge position is set in the work area, the display control unit 20 may overlap the entrance or the discharge position on the work area shape 182b.

In the map field 182 of the work area selection screen 180, the display control unit 20 displays the map so that the selected farm field or farm field is in the center. Further, in the map field 182, the display control unit 20 selectably displays the home position button 87 and the own vehicle position button 88.

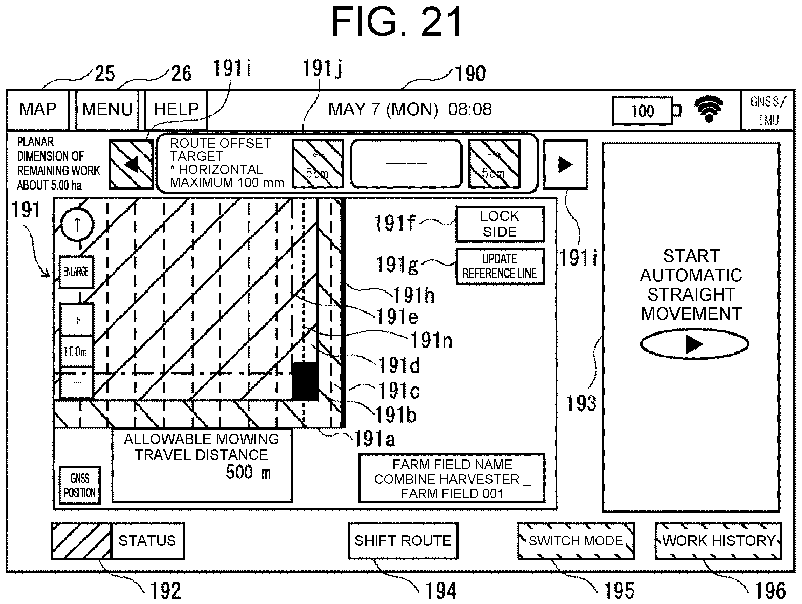

When the selection fix button 183 is selected on the work area selection screen 180, the function control unit 21 sends, to the combine harvester 2, the farm field information, which includes the work area selected on the work area selection screen 180, as the farm field information for performing the first work, and then moves the process to the headland straight work that is based on the farm field information by the first work. The combine harvester 2 works by the automatic straight movement along a straight route 191n parallel to a headland reference line 191h set in the outermost peripheral shape of the farm field (see FIG. 21, etc.). In the combine harvester 2, the straight route pattern is set to set the straight route when the combine harvester 2 performs the automatic straight movement such as the headland straight work, etc.; the straight route pattern includes a work width pattern which is parallel to the reference line such as the headland reference line 191h and in which the straight route is set from the reference line at the work width interval, and an own vehicle position pattern which is parallel to the reference line and in which the straight route is set in a manner to pass through the combine harvester 2's own vehicle position; for example, the work width pattern is set as the initial setting.

In the headland straight work that is based on the farm field information by the first work, the display control unit 20 displays, on the display unit 13, a headland straight work screen 190 for the combine harvester 2 to perform the headland straight work, as shown in FIG. 21. On the headland straight work screen 190, the display control unit 20 displays a map field 191, a status lamp 192, an automatic straight movement start button 193, a route shift button 194 (shift operation unit), a mode switch button 195 (mode switch unit), and a work history button 196.

In the map field 191 of the headland straight work screen 190, the display control unit 20 displays a map that is based on the map data, also displays a work area shape 191a of the work area based on the farm field information for performing the first work, and further displays, on the map, a simulated diagram 191b (icon) of the combine harvester 2 in the combine harvester 2's own vehicle position that is based on the GNSS information of the combine harvester 2. The function control unit 21 sets a headland reference line 191h as described below, and when the work width pattern is set as the straight route pattern, sets, over the entire area of the work area shape 191a, a plurality of straight routes 191n that is parallel to the headland reference line 191h and is arranged at the work width interval apart from the headland reference line 191h. The display control unit 20 displays the headland reference line 191h and a plurality of straight routes 191n overlapping a work area shape 191a.

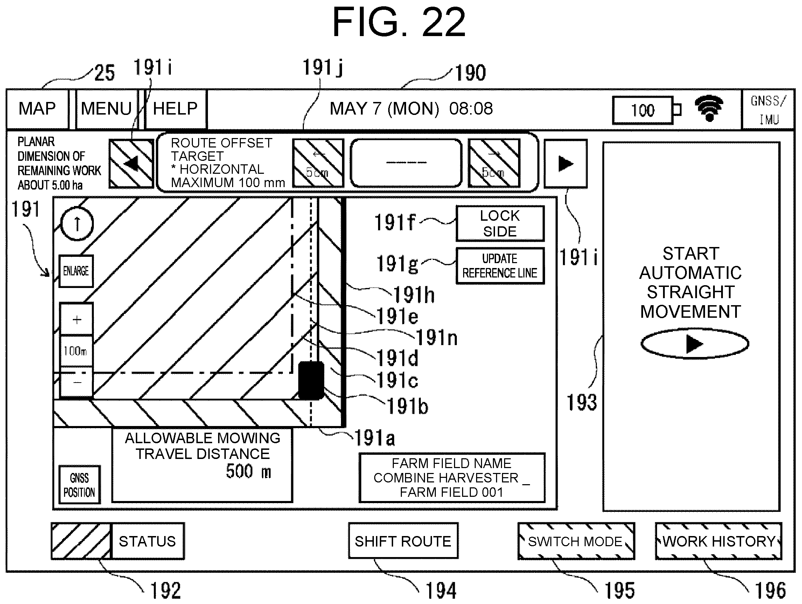

The present embodiment describes an example of setting and displaying a plurality of straight routes 191n at the work width interval when the work width pattern is set as the straight route pattern; as another example, however, when the own vehicle position pattern is set as the straight route pattern, the function control unit 21 sets the straight route 191n that is a straight line parallel to the headland reference line 191h and passes through the combine harvester 2's own vehicle position, and the display control unit 20, as shown in FIG. 22, displays the headland reference line 191h and the straight route 191n, which passes through the combine harvester 2's own vehicle position, overlapping the work area shape 191a. Various functions, such as an offset motion using the headland straight work screen 190, can be performed likewise regardless of whether the straight route pattern is the work width pattern or the own vehicle position pattern.

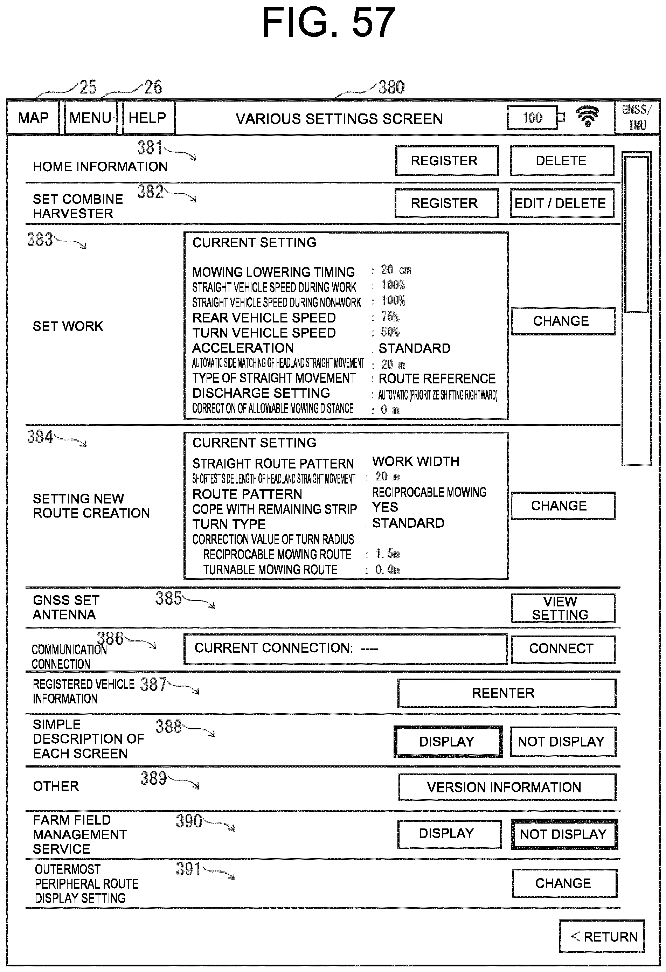

To change the straight route pattern, the headland straight work screen 190 is switched to the menu screen 60 according to the operation of the menu button on the headland straight work screen 190, and further, the menu screen 60 is switched to a various settings screen 380 (see FIG. 57) according to the operation of the setting item 66 on the menu screen 60. Performing the change operation in the new route creation setting field 384 on the various settings screen 380 changes the straight route pattern. Alternatively, in another example, a straight route pattern change button for changing the straight route pattern is selectably displayed on the work area selection screen 180 and the headland straight work screen 190, thereby to change the straight route pattern according to the operation of the straight route pattern change button.

In the work area shape 191a of the work area on the map, the display control unit 20 identifiably displays an already mowed area 191c (already worked on area) which has been mowed, and an unmown area 191d (un-worked on area) which has not yet been mowed (worked), with the display format such as color differentiated. In the map field 191, the display control unit 20 displays a headland range 191e, which shows the range necessary as a headland for performing the automatic travel, overlapping the work area shape 191a in the work area. The display control unit 20 presents, together with the map field 191, a farm field registration name that is based on the farm field information, an allowable mowing travel distance that is based on a vacant capacity of a reservoir tank in which the combine harvester 2 reserves grains, and selectably displays a side lock button 191f (fixing unit) and a headland reference line update button 191g (reference line updating unit).

The display control unit 20 switches the display format, such as color, of the status lamp 192, depending on whether or not the combine harvester 2 is ready for the headland straight work. For example, the function control unit 21 determines that the headland straight work is ready, when the start condition, such as the mowing switch of the combine harvester 2 being on, is met, the combine harvester 2 is placed at the predetermined start position in the unmown area 191d, and the headland reference line 191h is fixed. When the combine harvester 2 is not ready for the headland straight work, the display control unit 20 makes the status lamp 192 selectable; when the status lamp 192 is selected, the display control unit 20 presents an unmet start condition, etc.

When the combine harvester 2, with the already mowed area 191c on the right side, is in the position that is positioned at an end portion of one side of the unmown area 191d, the function control unit 21 may determine such a position as the start position. From each side constituting the work area shape 191a, the function control unit 21 determines the headland reference line 191h for the headland straight work based on the direction and distance of the combine harvester 2 at the start position, thus determining, as the headland reference line 191h, one side closest to the straight line extending in the forward direction of the combine harvester 2 at the start position, for example. The display control unit 20 identifiably displays the work area shape 191a's one side that is determined to be the headland reference line 191h with the format such as color differentiated from the other side. When the side lock button 191f is selected on the headland straight work screen 190, the function control unit 21 fixes the headland reference line 191h based on the above determination result, or fixes the headland reference line 191h by directly selecting (touching) each of the sides constituting the work area shape 191a.

Further, the display control unit 20 operably displays a route offset button 191i (offset operation unit) on the headland straight work screen 190. The combine harvester 2, by the operation of the route offset button 191i or the like during the headland straight work, can change the combine harvester 2's machine body position in the left/right direction during the headland straight work; for example, moving the combine harvester 2 diagonally relative to the headland reference line 191h according to the operation of the route offset button 191i moves the combine harvester 2 in parallel by the amount of the target route offset value set in a target value input field 191j thereby to change the machine body position in the left/right direction.

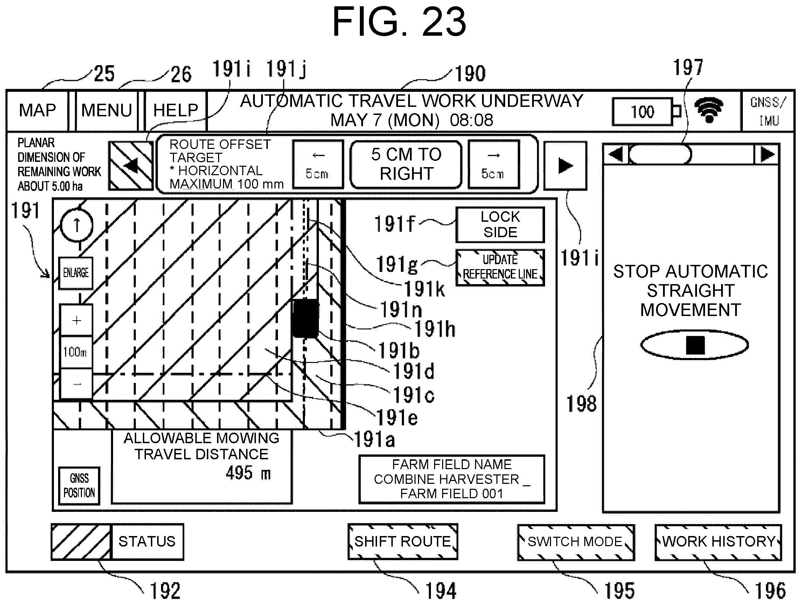

When the above offset motion is to be performed, the headland straight work screen 190 shows the headland reference line 191h and a plurality of straight line routes 191n parallel to the headland reference line 191h, as well as a straight line 191k (i.e., a straight line deviating from the reference. Shown in FIG. 23 with a two-dot chain line) connecting the start point and end point where the headland straight work involving the offset motion was performed. At this time, according to the operation of the route offset button 191i, as shown in FIG. 23, the headland straight work screen 190 simultaneously displays a first straight route where one side of the outermost peripheral shape (work area shape 191a) of the farm field is the headland reference line 191h, and a second straight route where the route changed by the offset motion from the first straight route in the left/right position is the headland reference line.

If the combine harvester 2's position in the left/right direction is changed, for example, if the straight line connecting the start point and end point where the headland straight work was performed deviates from one side of the work area shape 191a attributable to the above offset motion; when the headland reference line update button 191g is selected on the headland straight work screen 190, the function control unit 21, based on the route of the headland straight work, updates the headland reference line 191h to a straight line 191k connecting the start point and end point where the headland straight work was performed. Alternatively, the display control unit 20 may display, on the headland straight work screen 190, the selection screen or selection button to select whether or not to update the headland reference line 191h to the straight line 191k connecting the start point and end point where the headland straight work was performed, and the function control unit 21 may update the headland reference line 191h according to the operation of the selection screen or selection button.

The display control unit 20 makes the automatic straight movement start button 193 selectable when the combine harvester 2 is ready for the headland straight work; meanwhile, the display control unit 20 makes the automatic straight movement start button 193 unselectable when the combine harvester 2 is not ready for the headland straight work. The display control unit 20 switches the display format, such as color, of the automatic straight movement start button 193, depending on whether or not the headland straight work is ready.

The function control unit 21 calculates the automatic straight route based on the start position and the headland reference line, and sends the automatic straight route to the combine harvester 2. When the automatic straight movement start button 193 is selected on the headland straight work screen 190, the combine harvester 2, while performing the headland straight work along the automatic straight route according to the instruction to start the automatic straight movement, send, to the management terminal 3, the combine harvester 2's own vehicle position (measurement point data) that is based on the GNSS information of the combine harvester 2.

When the route shift button 194 is selected on the headland straight work screen 190, the display control unit 20 converts the current forward direction of the combine harvester 2 (work direction of the headland straight work) to the orthogonal direction, for example, to the left, and displays the converted direction on the headland straight work screen 190. The actual route shifting of the combine harvester 2 is done by the manual operation.

While the combine harvester 2 is performing the headland straight work, the display control unit 20, as shown in FIG. 23, selectably displays, on the headland straight work screen 190, an automatic straight movement stop button 198 instead of the automatic straight movement start button 193. When the automatic straight movement stop button 198 is selected (touched) on the headland straight work screen 190, the function control unit 21 sends, to the combine harvester 2, an instruction for stopping the automatic straight movement.

When the combine harvester 2 completes the headland straight work of one automatic straight route, the display control unit 20 selectably displays, on the headland straight work screen 190, the automatic straight movement start button 193 instead of the automatic straight movement stop button 198. The displaying of the simulated diagram 191b of the combine harvester 2 as well as the already mowed area 191c and the unmown area 191d, and the presenting of the allowable mowing travel distance are updated based on the combine harvester 2's own vehicle position according to the progress of the headland straight work of the combine harvester 2. For example, depending on the progress of the headland straight work, the displaying of the area where the headland straight work was performed within the unmown area 191d is updated to the displaying of the already mowed area 191c. Further, while the combine harvester 2 is performing the headland straight work; on the headland straight work screen 190, the route shift button 194 and the headland reference line update button 191g are unselectable.

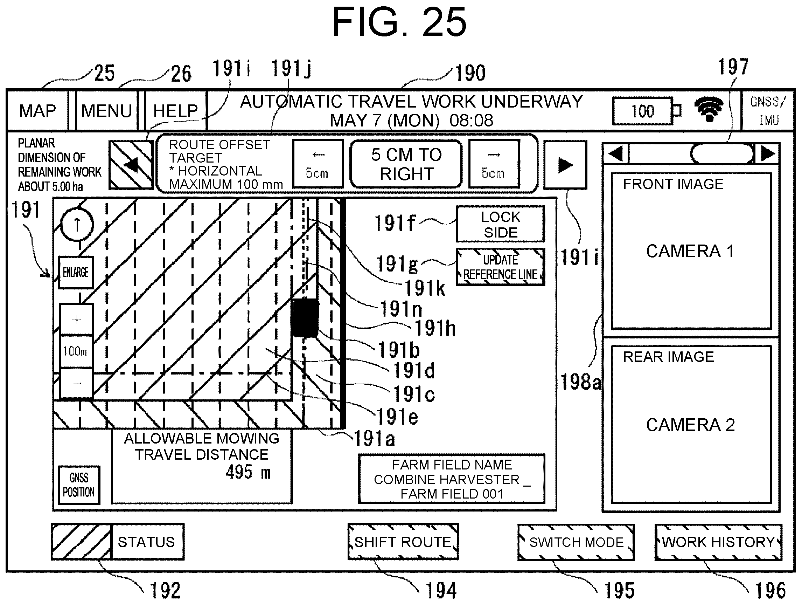

While the combine harvester 2 is performing the headland straight work, the display control unit 20 operably displays, on the headland straight work screen 190, a switch unit 197 for displaying an image field 198a instead of the automatic straight movement stop button 198, as shown in FIGS. 23 and 25. The switch unit 197 includes, for example, a slide bar, and the display control unit 20, as shown in FIG. 25, displays the image field 198a instead of the automatic straight movement stop button 198, according to the switch unit 197's sliding operation in a predetermined direction (for example, right). Meanwhile, when the image field 198a is displayed on the headland straight work screen 190, the display control unit 20, according to the switch unit 197's sliding operation in the reverse direction (for example, left), makes such a restoration as to display the automatic straight movement stop button 198 instead of the image field 198a.

In the image field 198a, the display control unit 20 displays an image that is taken by a camera or other imaging device installed in the combine harvester 2 and that shows the status of the headland straight work. For example, FIG. 25 shows an example of displaying, in the image field 198a, the combine harvester 2's front and rear images taken by the cameras installed in the front and rear of the combine harvester 2. The image field 198a may also display a discharge status image and a conveyance status image which are taken by cameras provided at the tip of the discharge auger for the combine harvester 2 to discharge grains and at a conveying unit for conveying the mowed grain culms.

The image field 198a may make the type of the to-be-displayed image arbitrarily selectable. The image field 198a is not limited to displaying two images, but may display one or three or more images, or make the number of to-be-displayed images arbitrarily selectable. FIG. 23 and FIG. 25 each show an example in which the switch unit 197 is composed of a slide bar; the switch unit 197 may be, however, so configured as to receive a sliding operation of the automatic straight movement stop button 198 or the image field 198a.

The present embodiment has described the example where the display control unit 20, on the headland straight work screen 190, displays the image field 198a instead of the automatic straight movement stop button 198, according to the operation of the switch unit 197; the present invention is, however, not limited to this example. In another example, the display control unit 20, according to the operation of the switch unit 197, may display the image field 198a on the entire screen of the headland straight work screen 190 or on any other portion of the headland straight work screen 190, or may display in a pop-up manner.

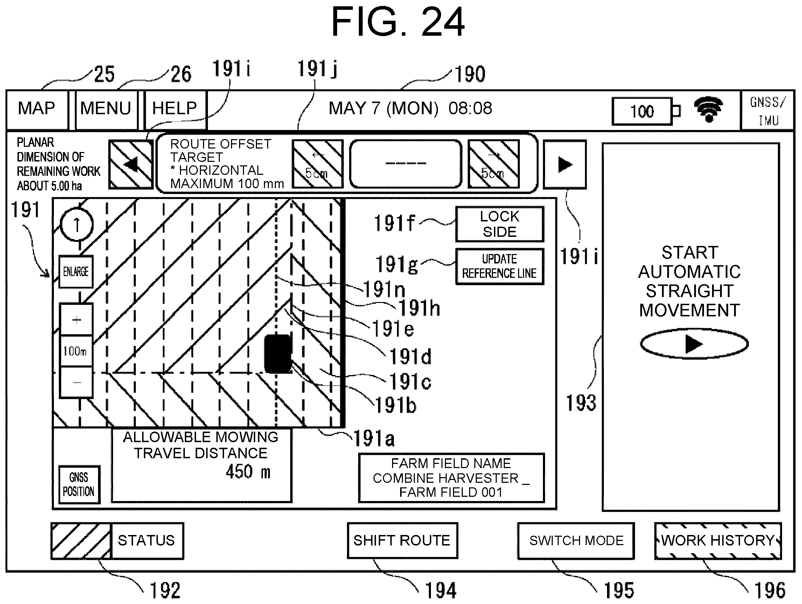

When the already mowed area 191c has not reached the headland range 191e, the display control unit 20 makes the mode switch button 195 unselectable; meanwhile, when the already mowed area 191c has reached the headland range 191e by the combine harvester 2's headland straight work, the display control unit 20 makes the mode switch button 195 selectable, as shown in FIG. 24. When the already mown area 191c has reached the headland range 191e, the controller 10 may notify that the already mown area 191c has reached the headland range 191e and that the mode switch button 195 is selectable, by outputting an audible sound, and further, by the display control unit 20 displaying a message on the display unit 13.

When the majority of the already mown area 191c has reached a predetermined side of the headland range 191e (hereinafter referred to as the "target side"), but a part of the already mown area 191c (hereinafter referred to as "unreached portion") has not reached the target side, the function control unit 21 may automatically enlarge the target side of the headland range 191e to the unreached portion of the already mown area 191c so that the entire already mown area 191c reaches the target side of the headland range 191e. For example, when the unreached portion of the already mown area 191c is spaced apart outward when viewed from the target side of the headland range 191e, the function control unit 21 moves in parallel the target side of the headland range 191e by the amount of the spaced apart distance, thereby to enlarge the target side. Alternatively, when the target side of the headland range 191e includes an obtuse angle; in the direction orthogonal to a straight line connecting one end with the other end of the target side, the function control unit 21 moves in parallel the target side of the headland range 191e by the amount of the spaced apart distance from the apex of the obtuse angle of the target side to the straight line. When having ended the headland straight work for one stroke along the straight route 191n, or when having stopped the headland straight work in response to the selection of the automatic straight movement stop button 198, the function control unit 21 may determine whether or not the already mown area 191c has reached one side of the headland range 191e, and may automatically enlarge the one side of the headland range 191e according to the determination result. On the headland straight work screen 190 and in a pop-up manner, the display control unit 20 may display a selection screen for the operator to select whether or not to automatically enlarge the one side of the headland range 191e.

When the mode switch button 195 is selected on the headland straight work screen 190, the function control unit 21, for completing the headland straight work thereby to switch to the automatic mowing travel, stores, in the storage unit 11, the already mowed area 191c and unmown area 191d formed by the headland straight work in the work area shape 191a. When the mode switch button 195 is operated thereby to be switched to the automatic mowing travel, the display control unit 20; before starting the automatic travel, displays, on the display unit 13, the work route information setting screen to set the work route information about the work route for the combine harvester 2 to perform the automatic travel.

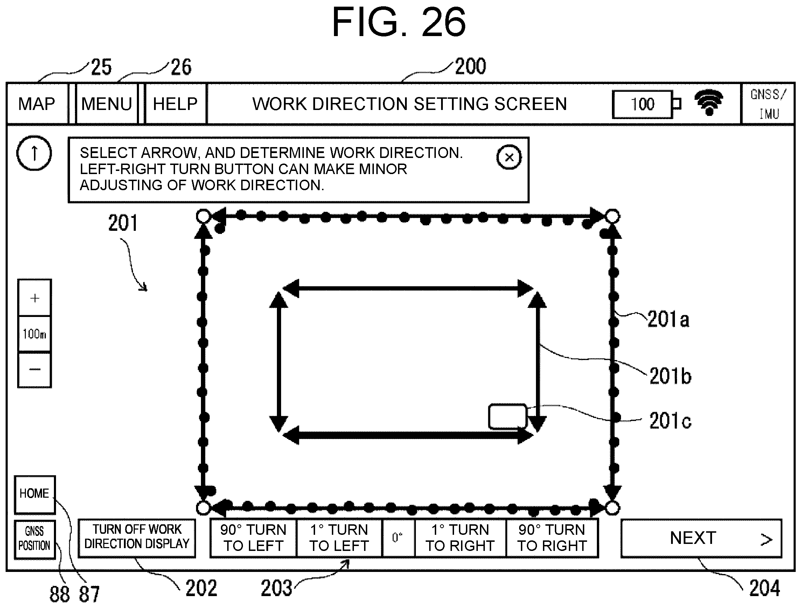

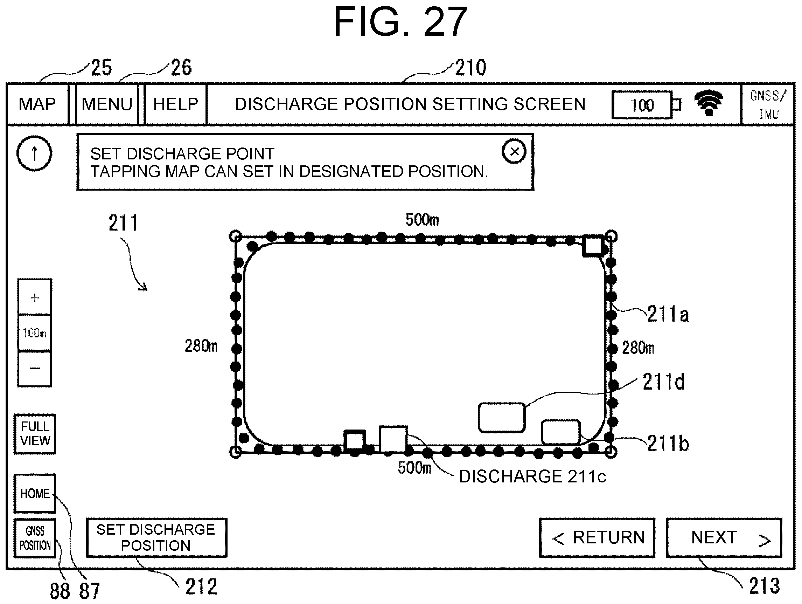

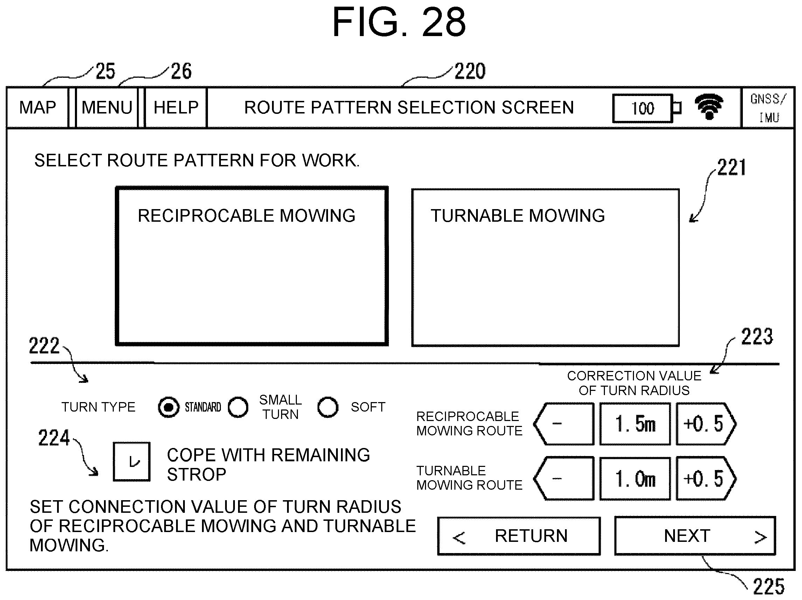

For example, as a work route information setting screen, the display control unit 20, as shown in FIG. 26, displays, on the display unit 13, a work direction setting screen 200 for setting the work direction of the work route in which the combine harvester 2 performs the automatic mowing travel. Alternatively, the display control unit 20, according to the operation of the mode switch button 195, may display, on the display unit 13, a work route information setting screen such as a discharge position setting screen 210 shown in FIG. 27 and a route pattern selection screen 220 shown in FIG. 28. On the work direction setting screen 200, the display control unit 20 displays a map field 201, a work direction display switch button 202, a work direction turn button 203 (work direction turn unit), and a fix button 204.

In the map field 201 of the work direction setting screen 200, the display control unit 20 displays a map that is based on the map data, displays a work area shape 201a of the work area based on the farm field information for performing the first work, and further displays a work direction option 201b for selecting the work direction and a start position sign 201c for showing the start position of the automatic mowing travel, overlapping the work area shape 201a. The display control unit 20 selectably displays the work direction option 201b with a sign that presents the work direction, for example, a straight line that is parallel to each side of the work area shape 201a and that has two arrows, and identifiably displays the selected work direction option 201b and the other work direction options 201b with the display format such as color differentiated. Among edges in the unmown area of the work area shape 201a, at one edge closest to the combine harvester 2's own vehicle position seen when the mode switch button 195 is selected on the headland straight work screen 190, the function control unit 21 sets the start position, as the initial setting of the start position sign 201c.

The work direction turn button 203 adjusts the angle of the work direction option 201b, and according to the operation of the work direction turn button 203, the work direction option 201b is turned counterclockwise or clockwise in 1-degree or 90-degree increments.

When the fix button 204 is selected on the work direction setting screen 200, the function control unit 21 fixes the work direction of the automatic mowing travel by the selected work direction option 201b and stores the work direction in the storage unit 11, and the display control unit 20, as shown in FIG. 27, displays, on the display unit 13, the discharge position setting screen 210 for setting the discharge position for discharging grains harvested in the automatic mowing travel. In the discharge position setting screen 210, the display control unit 20 displays a map field 211, an automatic setting button 212 (automatic setting operation unit), and a fix button 213.

In the map field 211 of the discharge position setting screen 210, the display control unit 20 displays a map that is based on the map data, displays, on the map, a work area shape 211a of the work area based on the farm field information for performing the first work, and further displays a start position sign 211b for showing the start position of the automatic mowing travel, overlapping the work area shape 211a. The display control unit 20 displays a current discharge sign 211c which shows the discharge position to be set in the current automatic mowing travel for the work area, and a previous discharge sign 211d which shows the discharge position set in the previous automatic mowing travel for the work area, overlapping the work area shape 211a. The display control unit 20 displays the current discharge sign 211c at the position that is associated with the selecting operation (operation) on the work area shape 211a of the discharge position setting screen 210.

When the automatic setting button 212 is selected on the discharge position setting screen 210; with the one side closest to the combine harvester 2's own vehicle position as the discharge side, among the sides included in the work area shape 211a, when a perpendicular line is drawn from the combine harvester 2's own vehicle position in the work area shape 211a to the discharge side, the display control unit 20 displays the current discharge sign 211c, with the position where the above one side intersects with the perpendicular line as the discharge position. If the combine harvester 2's own vehicle position is away from each side of the work area shape 211a by a predetermined distance (for example, 5 m) or more, the automatic setting button 212 is unselectable.

When the fix button 213 is selected on the discharge position setting screen 210; the function control unit 21 fixes the discharge position at the position of the current displayed discharge sign 211c and stores the discharge position in the storage unit 11, and the display control unit 20 displays, on the display unit 13, the route pattern selection screen 220 for selecting the route pattern of the work route used when performing the automatic mowing travel in the unmown area of the work area, as shown in FIG. 28. In the route pattern selection screen 220, the display control unit 20 displays a route pattern selection field 221, a turn type selection field 222, a turn radius correction field 223, a remaining strip selection field 224, and a fix button 225.

In the route pattern selection field 221 of the route pattern selection screen 220, the display control unit 20 selectably displays selectable options of the reciprocable mowing and the turnable mowing as the route pattern of the work route of the automatic mowing travel.

In the turn type selection field 222 of the route pattern selection screen 220, the display control unit 20 selectably displays, as turn types seen for the turning on the headland in the automatic mowing travel, options including a standard type having the minimum turn radius as the state where the combine harvester 2 can ordinarily turn, a small turn type having a turn radius smaller than in the standard type, and a soft type having the minimum turn radius used as the state where the combine harvester 2 safely turns under an adverse condition (muddy, etc.) with a turn radius larger than in the standard type. In the turn radius correction field 223 of the route pattern selection screen 220, the display control unit 20 presents a correction value of the turn radius for the turning in the work routes of the reciprocable mowing and turnable mowing.

In the remaining strip selection field 224 of the route pattern selection screen 220, the display control unit 20 selectably displays an option of whether or not to cope with the remaining strip when creating the work route for the reciprocable mowing in the unmown area. Coping with the remaining strips is a method where, for calculating the number of strokes of the reciprocable mowing by dividing the total number of strips in the unmown area by the maximum number of mowed strips (maximum mowed strip count), if one or two strips remain, the number of strips smaller than the maximum mowed strip count by one or two strips is set to the number of strokes including the final stroke, without setting, at the final stroke, the one or two strips as the number of strips. When the coping with the remaining strips is not selected, one or two strips are set as the number of strips for the final stroke.

When the fix button 225 is selected on the route pattern selection screen 220, the function control unit 21 fixes the route pattern with the option selected in the route pattern selection field 221 and stores the route pattern in the storage unit 11. When the route pattern for the reciprocable mowing is fixed, the display control unit 20 displays, on the display unit 13, a middle split setting screen (not shown) for setting the middle split in the unmown area of the work area. On the middle split setting screen, the display control unit 20 receives inputting of the presence or absence of the split setting and inputting of the middle split count; and in the storage unit 11, the function control unit 21 stores the inputted presence or absence of the split setting and the inputted middle split count.

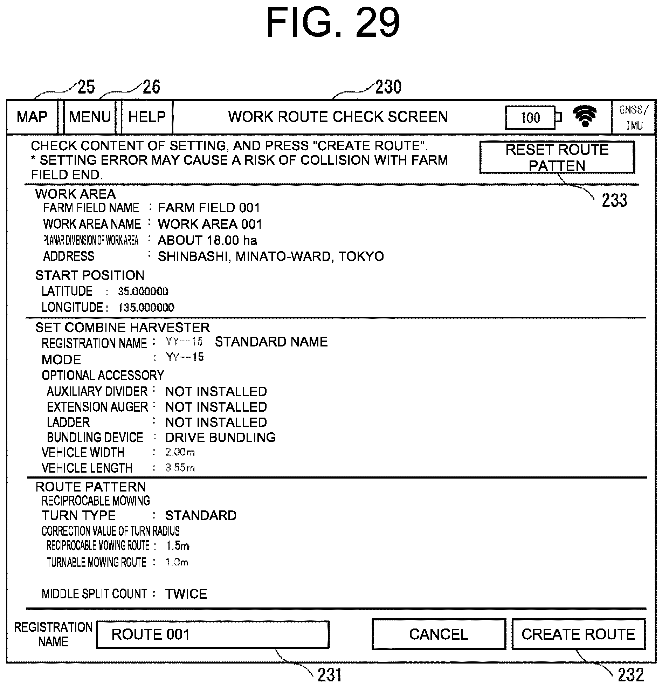

When the setting of the work route information is completed on the work route information setting screens such as the work direction setting screen 200, the discharge position setting screen 210, and the route pattern selection screen 220; when any route pattern is fixed on the route pattern selection screen 220, for example, the display control unit 20 displays, on the display unit 13, a work route check screen 230 for checking the work route creation of the automatic mowing travel, as shown in FIG. 29. The present embodiment has described the example where the work direction setting screen 200, the discharge position setting screen 210, and the route pattern selection screen 220 are displayed in this order, as the work route information setting screens, thereby to complete the setting of the work route information; not limited to this example, however, the work route information setting screens may be displayed in any other order. On the work route check screen 230, the display control unit 20 presents the content of the work route information, for example, the content of the farm field information such as the work area as a target of the automatic mowing travel, the content of the work vehicle data of the combine harvester 2, and the content of various settings related to the work route. On the work route check screen 230, the display control unit 20 also displays a registration name entry field 231 for entering the registration name of the work route, a work route creation button 232 (work route creation operation unit), and a route pattern reset button 233.

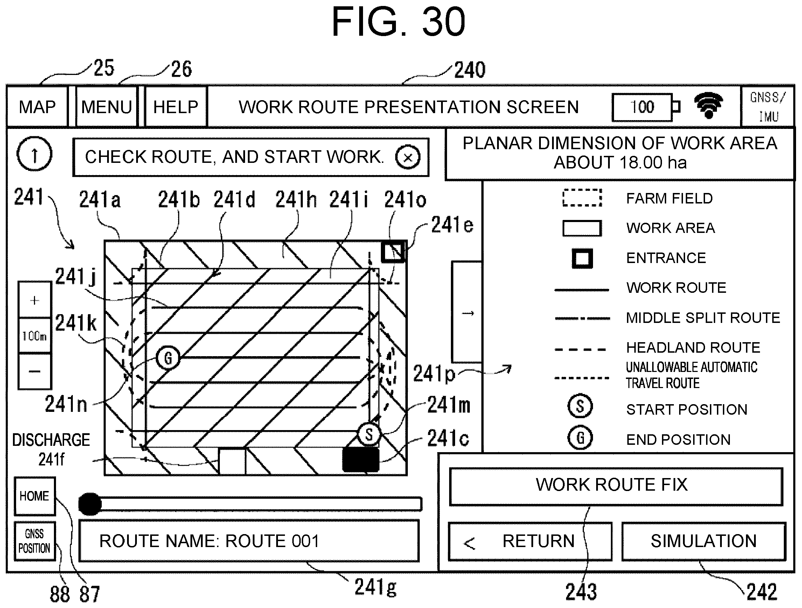

When the work route creation button 232 is selected on the work route check screen 230, the function control unit 21 automatically creates the work route based on the content presented on the work route check screen 230 and stores the work route in the storage unit 11. When the creating of the work route is completed, as shown in FIG. 30, the display control unit 20 displays, on the display unit 13, a work route presentation screen 240 which presents the work route created based on the setting content that includes the work route information set on the work route information setting screens such as the work direction setting screen 200, the discharge position setting screen 210, and the route pattern selection screen 220. On the work route presentation screen 240, the display control unit 20 displays a map field 241, a simulation button 242, and a work route fix button 243.

In the map field 241 of the work route presentation screen 240, the display control unit 20 displays a map that is based on the map data, identifiably displays, on a map, a farm field shape 241a that is based on the farm field's outermost periphery and a work area shape 241b of the work area, based on the farm field information for performing the first work, and further displays, on the map, a simulated diagram 241c (icon) of the combine harvester 2 at the combine harvester 2's own vehicle position that is based on the GNSS information of the combine harvester 2. Based on the farm field information, the display control unit 20 displays a work route 241d overlapping the work area shape 241b, and also displays signs related to the work route, such as an entrance sign 241e and a current discharge sign 241f, and a middle split route (not shown), overlapping the work area shape 241b. The map field 241 also presents a description field 241p that describes an item displayed on the sign related to the work route, and a registration name field 241g that shows the registration name of the work route 241d.

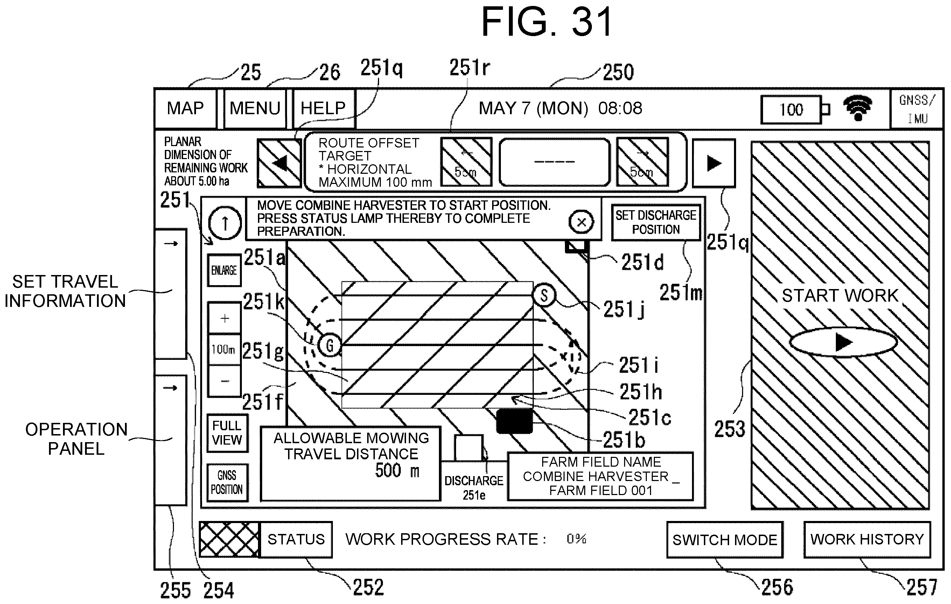

In the work area shape 241b which includes an already mown area 241h (already worked on area) and an unmown area 241i (un-worked on area), the work route 241d is created in the unmown area 241i. At this time, the work route 241d is such that, in a vehicle width direction of the combine harvester 2, a mowing unit (such as a divider)'s part on the already worked on area side (e.g., on the right side) is created in such a position as to lap the already mown area 241h (slightly out of the unmown area 241i) according to a preset lap volume. For example, the lap volume may be set to a predetermined default value (e.g., 10 cm), and may also be set to any value within a settable range (e.g., 0 to 70 cm) according to the operation by the user. When the lap volume is set and changed, the function control unit 21 re-creates the work route according to the changed lap volume. Concerning the setting of the lap volume, setting items may be provided and accepted in the work route presentation screen 240 shown in FIG. 30, a work screen 250 for the first work shown in FIG. 31, the various settings screen 380 shown in FIG. 57, and the like.

In the work area shape 241b, the display control unit 20 displays the already mowed area 241h (already worked on area) and 241i (un-worked on area) in an identifiable manner. In the work route 241d, the display control unit 20 identifiably displays a mowing route 241j in an unmown area 241i and an idle running route 241k in the headland. In the work route 241d, the display control unit 20 identifiably displays a start position sign 241m showing the start position of the automatic mowing travel, and an end position sign 241n showing the end position of the automatic mowing travel. In addition to the work route 241d for performing the automatic mowing travel, the display control unit 20 also displays, on the map, an unallowable automatic travel route 241o not for performing the automatic mowing travel in need for the manual travel.

When the simulation button 242 is selected on the work route presentation screen 240, the display control unit 20 displays, on the work route presentation screen 240, the simulated diagram 241c of the combine harvester 2 in a manner to move along the work route 241d from the start position sign 241m to the end position sign 241n, thereby to present the simulation of the automatic mowing travel.

When the work route fix button 243 is selected on the work route presentation screen 240, the function control unit 21 fixes the content presented on the work route check screen 230 and stores the content in the storage unit 11, and the display control unit 20 displays, on the display unit 13, a work screen 250 for performing the automatic mowing travel by the first work, as shown in FIG. 31. On the work screen 250, the display control unit 20 displays a map field 251, a status lamp 252 (status display unit), a work start button 253 (work start operation unit), a travel information setting button 254, an operation panel button 255, a mode switch button 256, and a work history button 257.

The display control unit 20 displays, in the map field 251 of the work screen 250, a map that is based on the map data, displays, on the map, a work area shape 251a of the farm field based on the farm field information for performing the first work, and further displays, on the map, a simulated diagram 251b (icon) of the combine harvester 2 at the combine harvester 2's own vehicle position that is based on the GNSS information of the combine harvester 2. Based on the farm field information, the display control unit 20 displays a work route 251c overlapping the work area shape 251a, and also displays signs related to the work route 251c such as an entrance sign 251d and a discharge sign 251e as well as the middle split route, overlapping the work area shape 251a.

In the work area shape 251a, the display control unit 20 identifiably displays an already mowed area 251f (already worked on area) and an unmown area 251g (un-worked on area). In the work route 251c, the display control unit 20 identifiably displays a mowing route 251h (actual work route) set in the unmown area 251g (actual work route) and an idle running route 251i set in the headland. In the work route 251c, the display control unit 20 identifiably displays a start position sign 251j showing the start position of the automatic mowing travel, and an end position sign 251k showing the end position of the automatic mowing travel. The display control unit 20, together with the map field 251, presents the farm field registration name that is based on the farm field information and the allowable mowing travel distance that is based on the vacant capacity of the reservoir tank in which the combine harvester 2 reserves grains, and selectably displays a discharge position setting button 251m (discharge position setting unit).

When the discharge position setting button 251m is selected on the work screen 250, the discharge position is brought in a settable state. Here, the discharge position may be set using a setting screen equivalent to the discharge position setting screen 210 shown in FIG. 27, or using the map field 251 of the work screen 250. At this time, not only the discharge position can be set, but also whether the automatic or manual discharge travel to the discharge position can be set.

The display control unit 20 switches the display format, such as color, of the status lamp 252, depending on whether or not the combine harvester 2 is ready for the automatic mowing travel. For example, the function control unit 21 determines that the combine harvester 2 is ready for the automatic mowing travel when the start condition, such as the mowing switch of the combine harvester 2 being on, is met and the preparation condition, such as the combine harvester 2 being placed at the start position that is associated with the start position sign 251j, is met. Meanwhile, when the start position or the preparation condition is not met, the function control unit 21 determines that the combine harvester 2 is not ready for the automatic mowing travel, and the display control unit 20 makes the status lamp 252 selectable, and further, the display control unit 20, when the status lamp 252 is selected, presents the unmet start condition, etc.

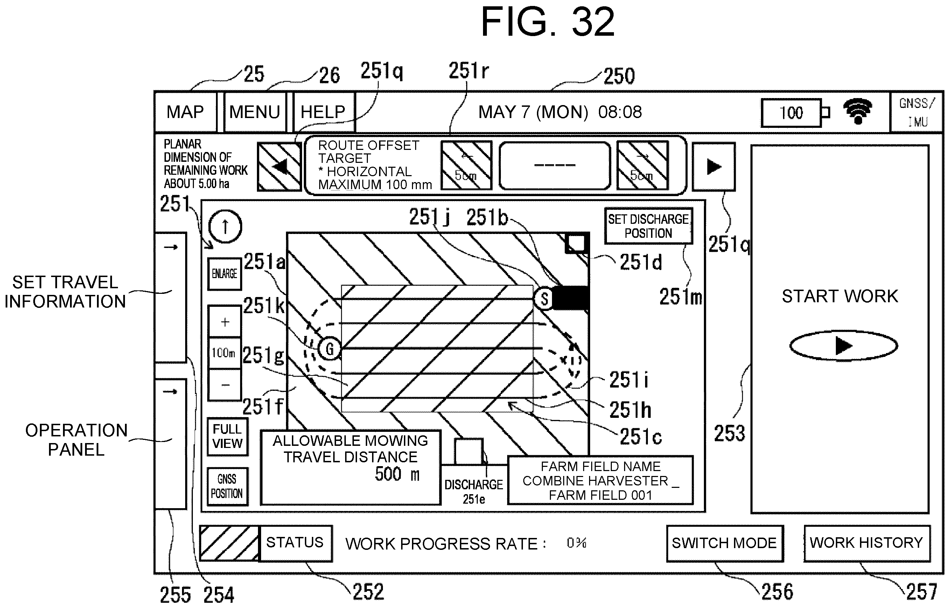

The display control unit 20 makes the work start button 253 selectable when the combine harvester 2 is ready for the automatic mowing travel (see FIG. 32), while makes the work start button 253 unselectable when the combine harvester 2 is not ready for the automatic mowing travel (see FIG. 31). The display control unit 20 switches the display format, such as color, of the work start button 253, depending on whether or not the automatic mowing travel is ready.

When the work start button 253 is selected on the work screen 250, the function control unit 21 sends, to the combine harvester 2, a work start instruction and the content that is presented on the work route check screen 230. While performing the automatic mowing travel along the work route 251c according to the work start instruction, the combine harvester 2 sends, to the management terminal 3, the combine harvester 2's own vehicle position (measurement point data) that is based on the GNSS information of the combine harvester 2.

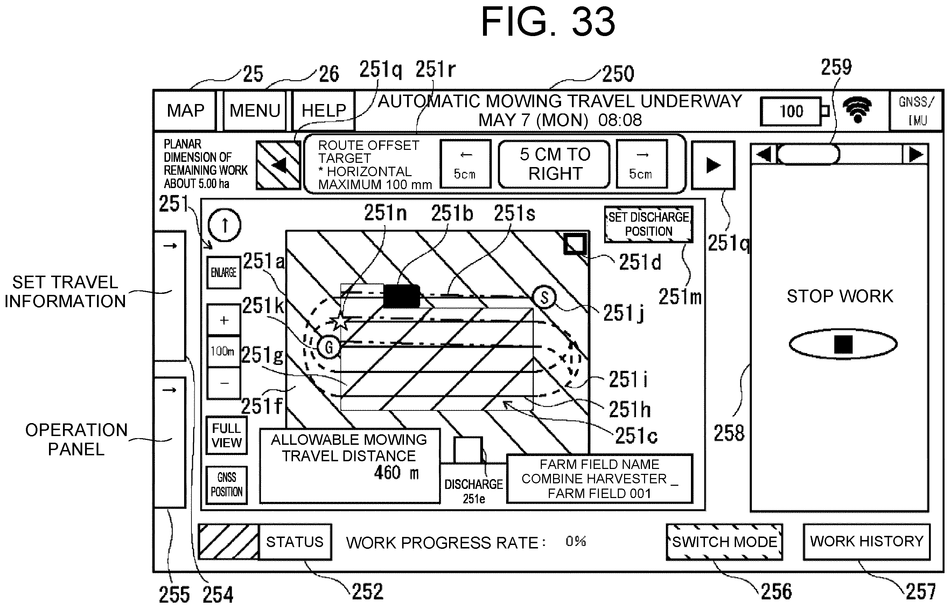

While the combine harvester 2 is performing the automatic mowing travel according to the instruction to start the automatic mowing travel, the display control unit 20, as shown in FIG. 33, selectably displays, on the work screen 250, a work stop button 258 instead of the work start button 253. When the work stop button 258 is selected on the work screen 250, the function control unit 21 sends the work stop instruction to the combine harvester 2. When the combine harvester 2 completes the automatic mowing travel, the display control unit 20 unselectably displays, on the work screen 250, the work start button 253 instead of the work stop button 258. The displaying of the simulated diagram 251b of the combine harvester 2 as well as the already mowed area 251f and the unmown area 251g, and the presenting of the allowable mowing travel distance are updated based on the combine harvester 2's own vehicle position, according to the progress of the automatic mowing travel of the combine harvester 2.

On the work screen 250, the display control unit 20 operably displays a route offset button 251q (offset operation unit). The combine harvester 2, by the operation of the route offset button 251q or the like during the automatic mowing trave, can change the combine harvester 2's machine body position in the left/right direction during the automatic mowing travel during the automatic mowing travel; for example, moving the combine harvester 2 diagonally relative to the work route 251c according to the operation of the route offset button 251q moves the combine harvester 2 in parallel by an amount of the target route offset value set in a target value input field 251r thereby to change the machine body position in the left/right direction.

When the above offset motion is to be performed, the work screen 250 displays, in addition to the work route 251c, a straight line 251s connecting the start point and end point of the stroke involving the offset motion (i.e., a straight line deviating from the original work route 251c. Shown in FIG. 33 with a two-dot chain line.). The offset motion affects not only the stroke involving the offset motion (the stroke whose position in the left/right direction has been changed) but also at least the adjacent strokes; therefore, concerning a subsequent stroke that is affected by the offset motion (for example, a stroke adjacent to the stroke involving the offset motion), the work screen 250 also displays the straight line 251s of the stroke deviating from the original work route 251c. In FIG. 33, the stroke involving the offset motion and the subsequent stroke affected by the offset motion are indicated by the straight line 251s of two-dot chain line, but the display control unit 20 may identifiably display the above strokes by different line types or line colors.

The combine harvester 2 may automatically apply the offset motion for the subsequent stroke that is affected by the offset motion, or may allow the worker to select whether or not to apply the offset motion. For example, when the combine harvester 2 is turning on the headland after completing the automatic mowing travel of the stroke involving the offset motion, the display control unit 20 may, concerning the subsequent stroke affected by the offset motion, display a selection screen or selection button as a selecting unit to select whether or not to apply the offset motion (i.e., whether or not the inclination is the same as the straight line connecting the start point and end point of the stroke where the position in the left/right direction was changed).

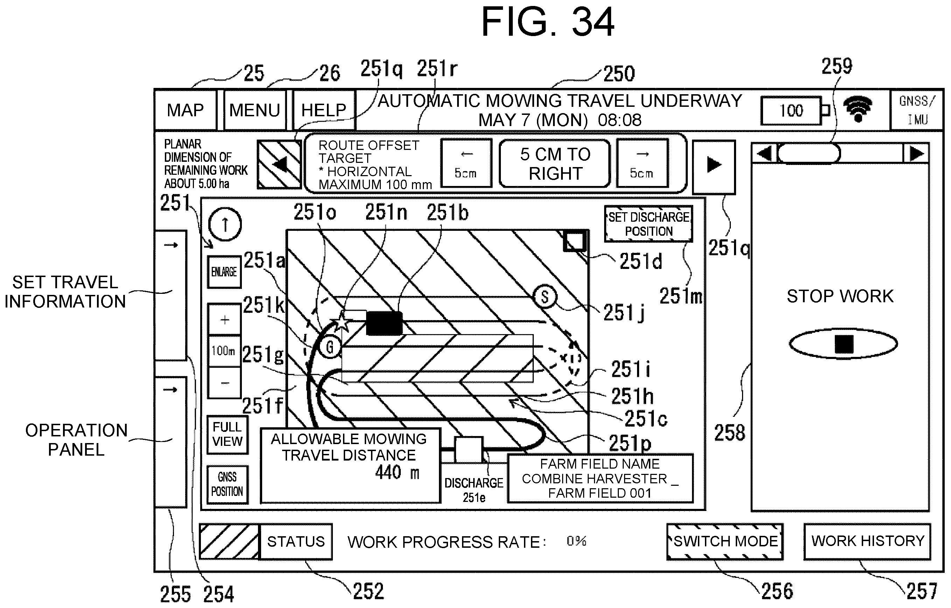

Further, among the strokes of the work routes 251c in the map field 251, the display control unit 20 identifiably displays the stroke during the work, the stroke for the subsequent work, and the stroke of the already done work, with the display format such as color differentiated from that of the other stroke. The function control unit 21 calculates the arrival position to arrive at the allowable mowing travel distance from the combine harvester 2's own vehicle position on the work route 251c, and sets a discharge shift position at the end of the stroke present immediately before the arrival position; the display control unit 20, as shown in FIG. 34, displays a discharge shift sign 251n in the discharge shift position on the work route 251c of the map field 251.

Before the combine harvester 2 that performs the automatic mowing travel arrives at the discharge shift position, the function control unit 21 automatically creates a discharge route 251o from the discharge shift position to the discharge position and a return route 251p from the discharge position to a predetermined return position, and the display control unit 20 displays, in the map field 251 of the work screen 250, the discharge route 251o overlapping the work area shape 251a, as shown in FIG. 34. The return position may be set the same as the discharge shift position, but in view of the condition of the unmown area 251g and the discharge position, may be set at a position closer to the discharge position on the work route 251c.

When the discharge travel is set to the automatic; before the combine harvester 2 arrives at the discharge shift position, the function control unit 21 sends the discharge route 251o to the combine harvester 2, and the display control unit 20 selectably displays the work stop button 258. While automatically performing the discharging travel along the discharge route 251o, the combine harvester 2 sends, to the management terminal 3, the combine harvester 2's own vehicle position (measurement point data) that is based on the GNSS information of the combine harvester 2. The displaying of the simulated diagram 251b of the combine harvester 2 is updated based on the combine harvester 2's own vehicle position, according to the progress of the discharge travel of the combine harvester 2. When the combine harvester 2 completes the discharge travel, the display control unit 20 presents the arriving at the discharge position, and unselectably displays the work stop button 258.

Meanwhile, when the discharge travel is set to the manual, the combine harvester 2 arriving at the discharge shift position switches the automatic mowing travel to the manual travel.

When the combine harvester 2 completes the grain discharge work, and, for example, the function control unit 21 receives, from the combine harvester 2, a notice of completion of the discharge work, the display control unit 20 displays, in the map field 251 of the work screen 250, the return route 251p overlapping the work area shape 251a, and selectably displays the work start button 253 instead of the work stop button 258. When the work start button 253 is selected on the work screen 250 with the return route 251p ready in this way, the function control unit 21 sends, to the combine harvester 2, the return route 251p together with a return travel instruction, and the display control unit 20 selectably displays the work stop button 258 instead of the work start button 253.

According to the return travel instruction, the combine harvester 2, while performing the return travel along the return route 251P, sends, to the management terminal 3, the combine harvester 2's own vehicle position that is based on the GNSS information of the combine harvester 2. The displaying of the simulated diagram 251b of the combine harvester 2 is updated based on the combine harvester 2's own vehicle position, according to the progress of the return travel of the combine harvester 2. When the combine harvester 2 completes the return travel, the display control unit 20 presents the arriving at the return position. When the combine harvester 2 stops at the return position, the function control unit 21, according to the operation of the work start button 253 on the work screen 250 or automatically, sends the work start instruction to the combine harvester 2, and the combine harvester 2 restarts the automatic mowing travel from the return position along the work route.

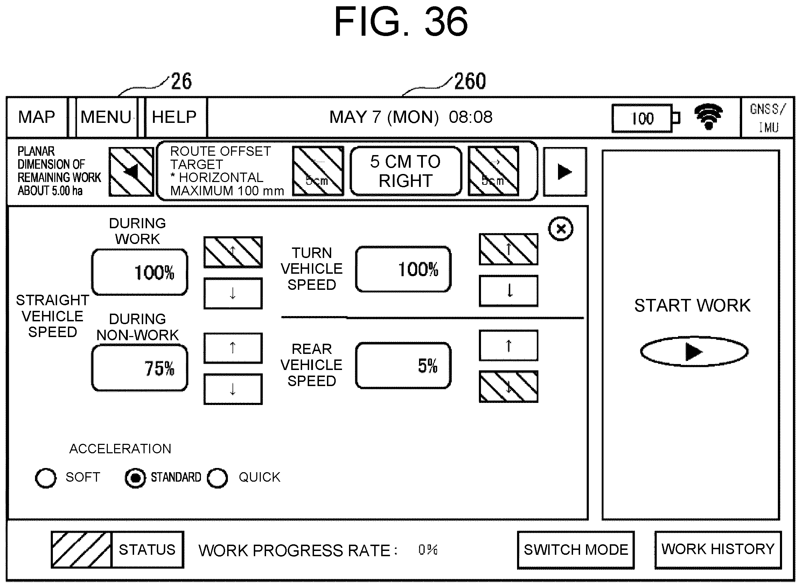

When the travel information setting button 254 is selected on the work screen 250, the display control unit 20, regardless of whether or not the automatic mowing travel is in progress, displays, on the display unit 13, a travel information setting screen 260 for setting the travel information, as shown in FIG. 36. The travel information includes the ratio of the vehicle speed during the automatic travel to the set speed set by a main speed change lever of the combine harvester 2, the acceleration phase during the automatic travel, and the like. The vehicle speeds during the automatic travel include a straight vehicle speed during the work and non-work, a turn vehicle speed, a rearward vehicle speed, etc., and the travel information setting screen 260 may set, as a percentage, the ratio of each vehicle speed to the set speed of the main speed change lever. Concerning the acceleration during the automatic travel, the travel information setting screen 260 allows the user to select any of the following stages: soft, standard, quick, etc.

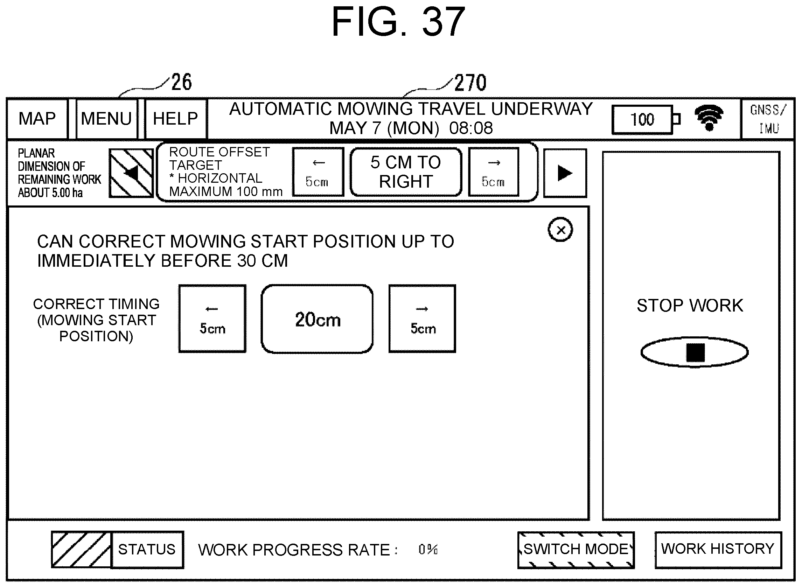

When the operation panel button 255 is selected on the work screen 250; regardless of whether or not the automatic mowing travel is underway, the display control unit 20 displays, on the display unit 13, an operation panel screen 270 for setting any other information about the automatic mowing travel, as shown in FIG. 37. The other information about the automatic mowing travel includes the mowing start position at which the mowing starts for the start end of each strip; the operation panel screen 270 allows the mowing start position to be corrected in cm, i.e., the mowing timing can be corrected.

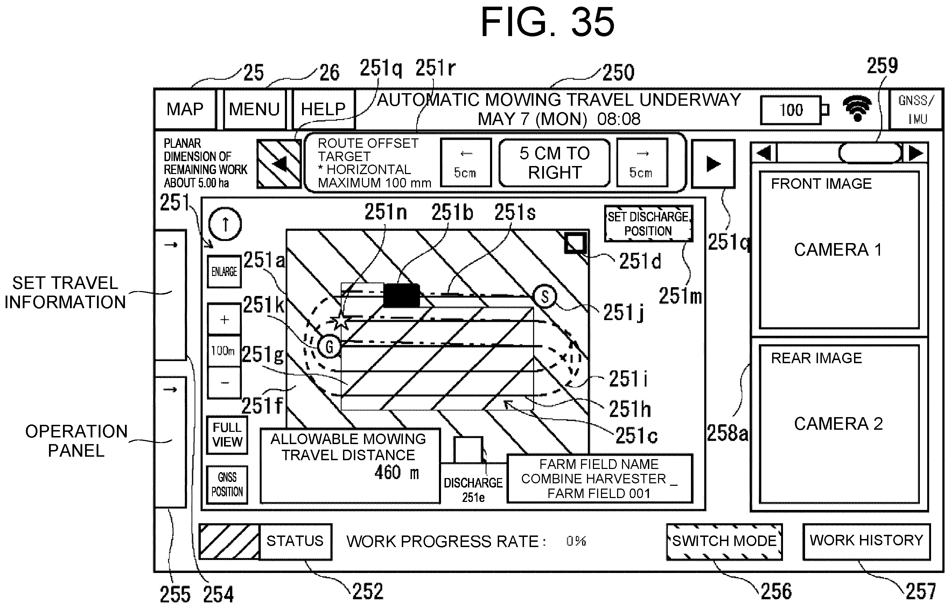

While the combine harvester 2 is performing the automatic mowing travel, the display control unit 20 operably displays, on the work screen 250, a switch unit 259 for displaying an image field 258a instead of the work stop button 258, as shown in FIG. 33 to FIG. 35. The switch unit 259 includes, for example, a slide bar, and the display control unit 20 displays the image field 258a instead of the work stop button 258, according to the switch unit 259's sliding operation in a predetermined direction (for example, right), as shown in FIG. 35. Meanwhile, when the image field 258a is displayed on the work screen 250, the display control unit 20, according to the switch unit 259's sliding operation in the reverse direction (for example, left), makes such a restoration as to display the work stop button 258 instead of the image field 258a.

In the image field 258a, the display control unit 20 displays an image that is taken by a camera or other imaging device installed in the combine harvester 2 and that shows the status of the automatic mowing travel. For example, FIG. 35 shows an example of displaying, in the image field 258a, the combine harvester 2's front and rear images taken by the cameras installed in the front and rear of the combine harvester 2. The image field 258a may also display a discharge status image and a conveyance status image which are taken by cameras provided at the tip of the discharge auger for the combine harvester 2 to discharge grains and at a conveying unit for conveying the mowed grain culms.

The image field 258a may make the type of the to-be-displayed image arbitrarily selectable. The image field 258a is not limited to displaying two images, but may display one or three or more images, or make the number of to-be-displayed images arbitrarily selectable. FIGS. 33 to FIGS. 35 each show an example in which the switch unit 259 is composed of a slide bar; the switch unit 259 may be, however, so configured as to receive a sliding operation of the work stop button 258 or the image field 258a.

The present embodiment has described the example where the display control unit 20, on the work screen 250, displays the image field 258a instead of the work stop button 258, according to the operation of the switch unit 259; the present invention is, however, not limited to this example. In another example, the display control unit 20, according to the operation of the switch unit 259, may display the image field 258a on the entire screen of the work screen 250 or on any other portion of the work screen 250, or may display in a pop-up manner.

When the mode switch button 256 is selected on the work screen 250, the function control unit 21 ends the automatic mowing travel and switches to the automatic straight work or the manual mowing travel.

In the first work, the automatic mowing travel, as the case may be, is interrupted before the completing of the automatic mowing travel in the unmown area of the work area shape, and in this case, the function control unit 21 stores, in the storage unit 11, the work route related to the interrupted automatic mowing travel as the previous route, thus storing, in the storage unit 11, the data used for the automatic mowing travel of the first work (for example, farm field information such as the work area, work vehicle data of the combine harvester 2, work route, etc.), for example.

When the second work item 62 is selected on the menu screen 60, the function control unit 21, for restarting, as the second work, the previous automatic mowing travel of the first work, reads out, from the storage unit 11, the data used for the previous automatic mowing travel of the first work (for example, farm field information such as the work area, work vehicle data of the combine harvester 2, work route, etc.). In other words, the second work item 62 is an already acquired work item for performing the work based on the already acquired work information, and an already acquired route work item for performing the work based on the work route already acquired as the work information. For restarting, as the second work, the previous automatic mowing travel of the first work, the display control unit 20, based on the data used for the previous automatic mowing travel of the first work, displays, on the display unit 13, the work screen 250 similar to that of the first work shown in FIG. 31.

In the second work, the display control unit 20 selectably displays, on the work screen 250, the work start button 253. When the combine harvester 2 moves to the interruption position by the manual travel and the work start button 253 is selected on the work screen 250, the function control unit 21 sends the work start instruction to the combine harvester 2, and the combine harvester 2 restarts the automatic mowing travel from the interruption position. The second work's motion using the work screen 250 is the same as that of the first work, so any duplicate description is omitted.

When the third work item 63 is selected on the menu screen 60, the display control unit 20, for selecting the combine harvester 2 for performing the third work of the automatic mowing travel, displays, on the display unit 13, the vehicle selection screen 70 shown in FIG. 6 above. In other words, the third work item 63 is an unacquired work item for newly acquiring the work information and for performing the work, and a reference line work item for acquiring a reference line as the work information and for performing the work by the automatic straight movement. The third work's motion using the vehicle selection screen 70 is the same as that of the first work, so any duplicate description is omitted.

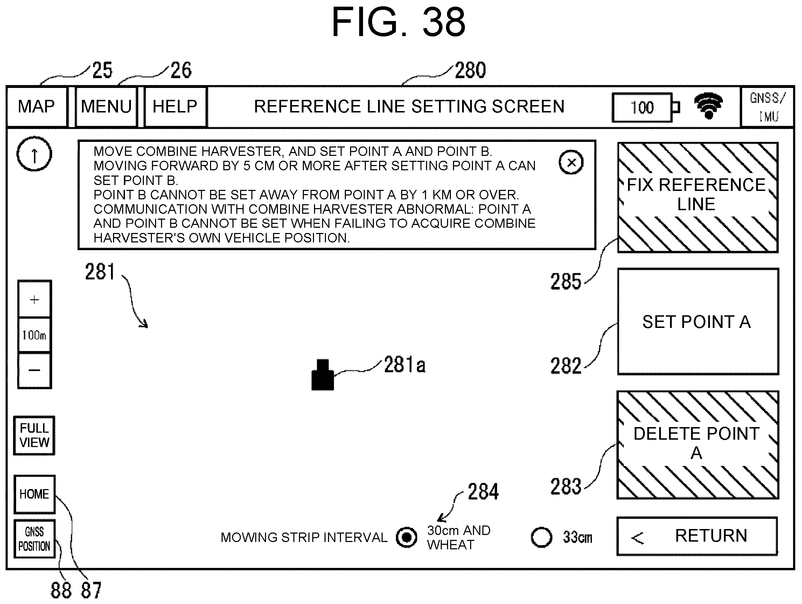

By the way, in the third work, when the fix button 74 is selected on the vehicle selection screen 70, the function control unit 21 fixes the work vehicle data selected in the vehicle list 71, as the combine harvester 2 for performing the third work, and the display control unit 20, as shown in FIG. 38, displays, on the display unit 13, a reference line setting screen 280 for setting a reference line for performing the third work, as a creation screen to create the reference line. On the reference line setting screen 280, the display control unit 20 displays a map field 281, a point A setting button 282, a point A deleting button 283, a mowed strip interval selection field 284, and a reference line fix button 285.

In the map field 281 of the reference line setting screen 280, the display control unit 20 displays a map that is based on the map data, and also displays a simulated diagram 281a (icon) of the combine harvester 2 at the combine harvester 2's own vehicle position that is based on the GNSS information of the combine harvester 2 on the map.

The display control unit 20, first, selectably displays, on the reference line setting screen 280, the point A setting button 282, as a start point setting button for setting the start point (point A) for measuring the reference line, and unselectably displays the point A deleting button 283 and the reference line fix button 285. When the combine harvester 2 is positioned in the farm field and thereunder the point A setting button 282 is selected on the reference line setting screen 280, the function control unit 21 stores, in the storage unit 11, the combine harvester 2's own vehicle position as the point A of the reference line, and the display control unit 20 displays the point A in the map field 281.

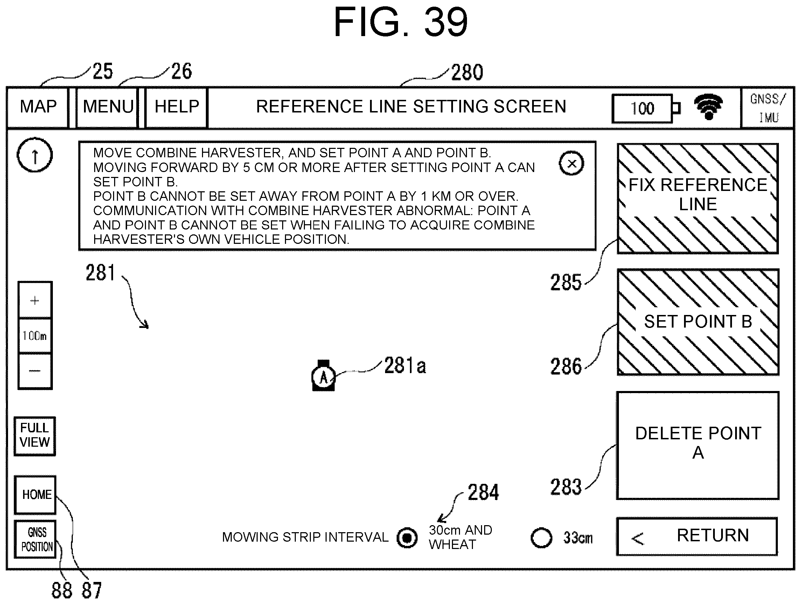

Once the point A is set, as shown in FIG. 39, the display control unit 20, on the reference line setting screen 280, displays, instead of the point A setting button 282, a point B setting button 286, as an end point setting button for setting an end point (point B) for measuring the reference line, and selectably displays the point A deleting button 283. When the point A deleting button 283 is selected on the reference line setting screen 280, the display control unit 20 displays a point A deletion check screen (not shown) on the display unit 13; when deleting of the point A is fixed on the point A deletion check screen, the function control unit 21 cancels the setting of the point A and deletes the setting from the storage unit 11.

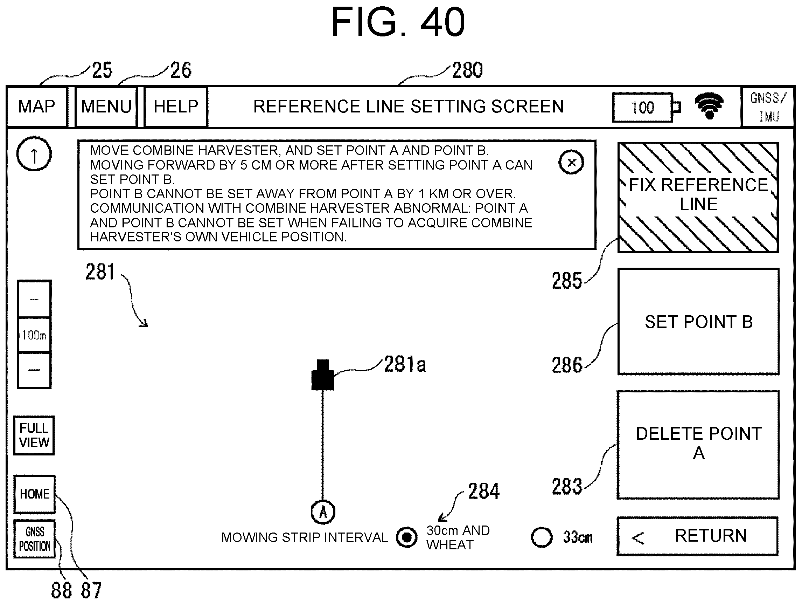

When the combine harvester 2 is positioned less than a predetermined distance (for example, 5 m) from the point A, the display control unit 20 unselectably displays the point B setting button 286; when the combine harvester 2 has moved from the point A by the manual travel and is away from the point A by a predetermined distance or more, the display control unit 20 selectably displays the point B setting button 286, as shown in FIG. 40. The displaying of the simulated diagram 281a of the combine harvester 2 is updated based on the combine harvester 2's own vehicle position, according to the progress of the manual travel of the combine harvester 2, and the map field 281 displays a straight line connecting the point A and the simulated diagram 281a of the combine harvester 2.

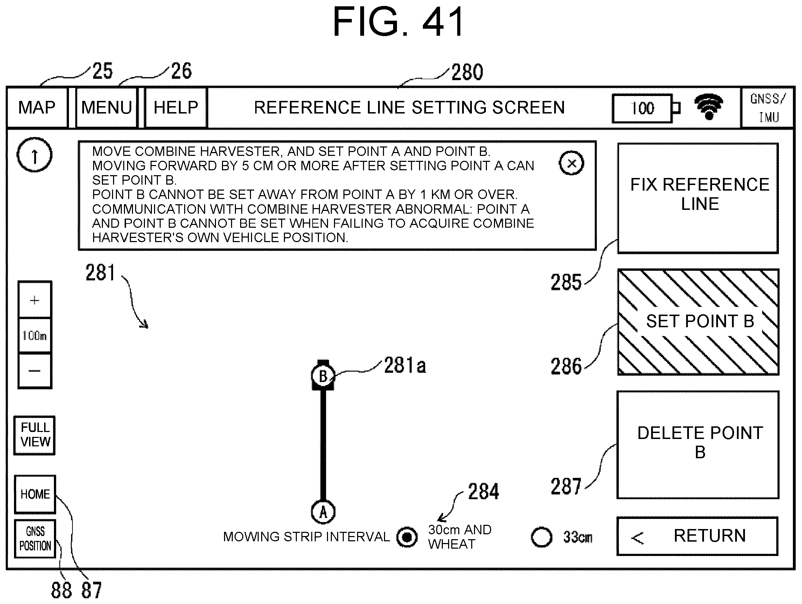

When the point B setting button 286 is selected on the reference line setting screen 280, the function control unit 21 sets the combine harvester 2's own vehicle position as the point B of the reference line and stores the above position in the storage unit 11, and the display control unit 20 displays the point B in the map field 281, as shown in FIG. 41. When the point B is set, the display control unit 20 unselectably displays the point B setting button 286 on the reference line setting screen 280, selectably displays a point B deleting button 287 instead of the point A deleting button 283, and selectably displays the reference line fix button 285. When the point B deleting button 287 is selected on the reference line setting screen 280, the display control unit 20 displays a point B deletion check screen (not shown) on the display unit 13; when deleting of the point B is fixed on the point B deletion check screen, the function control unit 21 cancels the setting of the point B and deletes the setting from the storage unit 11.

The reference line fix button 285 is a reference line work start button that fixes the set reference line and shifts to the automatic straight movement that is based on the reference line; when the reference line fix button 285 is selected on the reference line setting screen 280, the function control unit 21 fixes the set point A and point B, calculates the reference line of the straight line connecting the point A and the point B, detects the farm field information of the farm field encompassing the reference line in terms of position, from the farm field information stored in the storage unit 11, and stores, in the storage unit 11, the reference line associated with the farm field information. When two or more pieces of farm field information are detected, the most recent farm field information is associated with the reference line. When no farm field information is detected for the farm field encompassing the reference line, the display control unit 20 presents the absence of the farm field that is associated with the reference line, and the function control unit 21, regardless of the farm field, performs the automatic mowing travel by the automatic straight movement for the stroke parallel to the reference line.

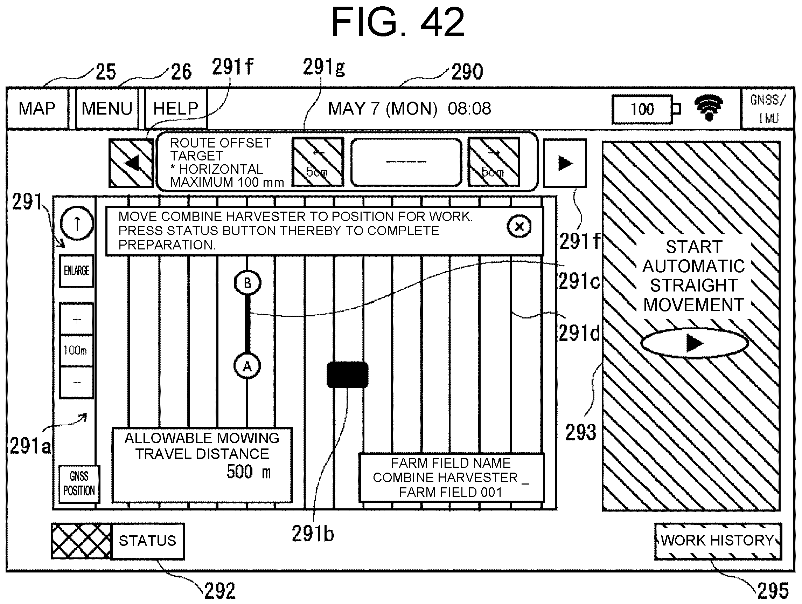

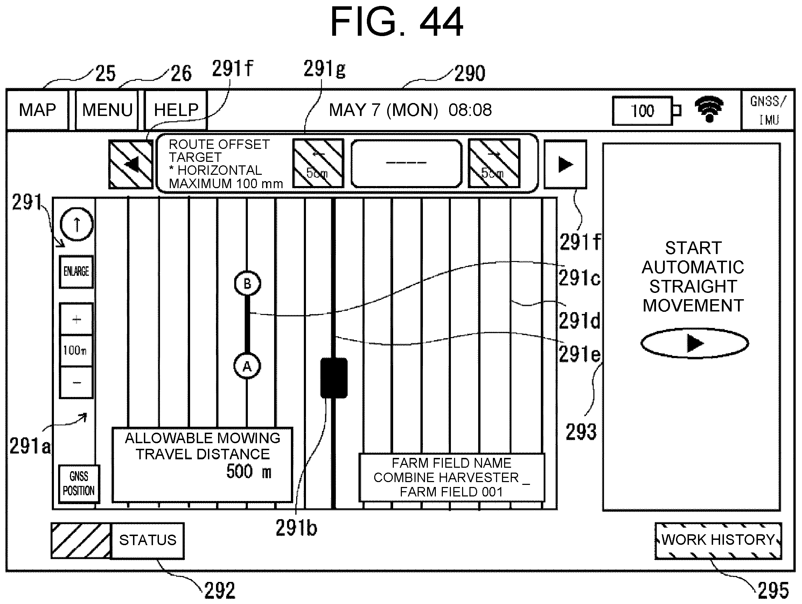

When the reference line fix button 285 is selected on the reference line setting screen 280 and the reference line is associated with the farm field information, the display control unit 20, as shown in FIG. 42, displays, on the display unit 13, a work screen 290 for performing the automatic mowing travel by the third work. On the work screen 290, the display control unit 20 displays a map field 291, a status lamp 292, a work start button 293, and a work history button 295. The combine harvester 2 performs, as the automatic mowing travel by the third work, the work by the automatic straight movement that is along a work stroke 291e parallel to the reference line including the points A and B (see FIG. 44, etc.). In the combine harvester 2, when the automatic straight movement of the third work is performed, the straight route pattern of the work width pattern or of the own vehicle position pattern is set, as in the case of the headland straight work, and the work width pattern is set as the initial setting, for example.

In the map field 291 of the work screen 290, the display control unit 20 displays a map that is based on the map data, displays, on the map, a farm field shape 291a that is based the farm field's outermost periphery, based on the farm field information for performing the third work, and further displays, on the map, a simulated diagram 291b (icon) of the combine harvester 2 at the combine harvester 2's own vehicle position that is based on the GNSS information of the combine harvester 2. When the work width pattern has been set as the straight route pattern, the function control unit 21 arrays, over the entire area of the farm field shape 291a, a plurality of strokes that are straight lines parallel to the reference line including the points A and B and that are so arrayed to be spaced apart at the work width interval from this reference line, and the display control unit 20 displays a reference line 291c showing the reference line including the points A and B and a stroke array 291d showing an array of a plurality of strokes overlapping the farm field shape 291a.

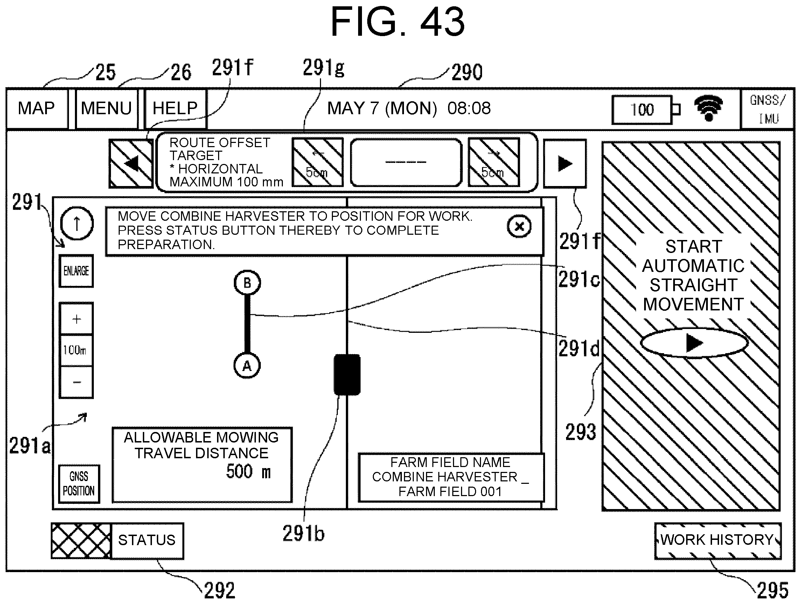

In the present embodiment, an example of setting and displaying a plurality of stroke arrays 291d of the work width intervals when the work width pattern is set as the straight route pattern will be described; but as another example of setting the own vehicle position pattern as the straight route pattern, the function control unit 21 sets the work stroke 291e that is a straight line parallel to the reference line including the points A and B and that passes through the combine harvester 2's own vehicle position, and the display control unit 20, as shown in FIG. 43, displays the reference line 291c showing the reference line including the points A and B and the work stroke 291e passing through the own vehicle position overlapping the farm field shape 291a. Various functions such as the offset motion using the work screen 290 can be performed in the same manner regardless of whether the straight route pattern is the work width pattern or the own vehicle position pattern.

To change the straight route pattern, the work screen 290 is switched to the menu screen 60 according to the operation of the menu button on the work screen 290, and further, the menu screen 60 is switched to the various settings screen 380 (see FIG. 57) according to the operation of the setting item 66 on the menu screen 60. Performing the change operation in the new route creation setting field 384 on the various settings screen 380 changes the straight route pattern. Alternatively, in another example, a straight route pattern change button is selectably displayed on the reference line setting screen 280 or the work screen 290, and the straight route pattern is changed according to the operation of the straight route pattern change button.

The display control unit 20 identifiably displays the already mowed area and the unmown area in the farm field shape 291a. The display control unit 20 presents, together with the map field 291, the farm field registration name that is based on the farm field information, and the allowable mowing travel distance that is based on the vacant capacity of the reservoir tank in which the combine harvester 2 reserves grains.

The display control unit 20 switches the display format, such as color, of the status lamp 292, depending on whether or not the combine harvester 2 is ready for the automatic mowing travel. For example, the function control unit 21 determines that the automatic mowing travel is ready when the start condition, such as the mowing switch of the combine harvester 2 being on, is met, and the combine harvester 2 is placed in any stroke of the stroke array 291d. When the combine harvester 2 is not ready for the automatic mowing travel, the display control unit 20 makes the status lamp 292 selectable; when the status lamp 292 is selected, the display control unit 20 presents the unmet start condition, etc.

The display control unit 20 makes the work start button 293 selectable when the combine harvester 2 is ready for the automatic mowing travel (see FIG. 44), while makes the work start button 293 unselectable when the combine harvester 2 is not ready for the automatic mowing travel (see FIG. 42). The display control unit 20 switches the display format, such as color, of the work start button 293, depending on whether or not the automatic mowing travel is ready.

When the work start button 293 is selected on the work screen 290, the function control unit 21, based on the combine harvester 2's own vehicle position, sets the work stroke 291e that is parallel to the reference line including the point A and point B, and sends the work start instruction to the combine harvester 2. According to the work start instruction, the combine harvester 2, while performing the automatic mowing travel by the automatic straight movement along the work stroke 291e, sends, to the management terminal 3, the combine harvester 2's own vehicle position (measurement point data) that is based on the GNSS information of the combine harvester 2. The display control unit 20 may display the work stroke 291e on the work screen 290.

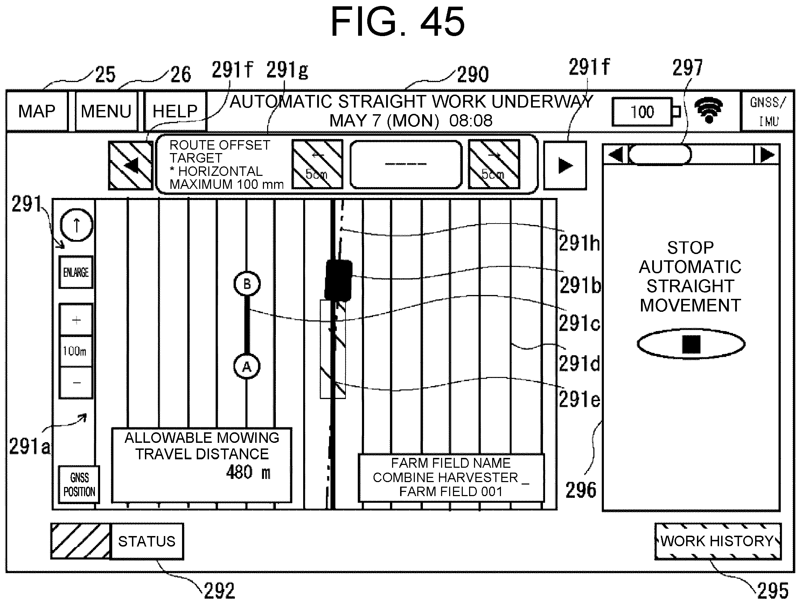

While the combine harvester 2 is performing the automatic straight movement according to the instruction to start the automatic mowing travel, the display control unit 20, as shown in FIG. 45, selectably displays, on the work screen 290, a work stop button 296 instead of the work start button 293. When the work stop button 296 is selected on the work screen 290, the function control unit 21 sends a work stop instruction to the combine harvester 2. When the combine harvester 2 completes the automatic straight movement of the work stroke 291e, the display control unit 20 selectably displays, on the work screen 290, the work start button 293 instead of the work stop button 296. The displaying of the simulated diagram 291b of the combine harvester 2 as well as the already mowed area and the unmown area, and the presenting of the allowable mowing travel distance are updated based on the combine harvester 2's own vehicle position, according to the progress of the automatic mowing travel of the combine harvester 2.

The combine harvester 2, by the operation of a route offset button 291f or the like during the automatic straight movement, can change the machine body position in the left/right direction; for example, moving the combine harvester 2 diagonally relative to the work stroke 291e moves the combine harvester 2 in parallel by the amount of the target route offset value set in a target value input field 291g thereby to change the machine body position in the left/right direction. When the above offset motion is to be performed, the work screen 290 displays, in addition to the work stroke 291e, a straight line 291h connecting the start point and end point of the stroke involving the offset motion (i.e., a straight line deviating from the original work stroke 291e. Shown in FIG. 45 with a two-dot chain line.).

When the offset motion has been performed, the combine harvester 2 may automatically update the reference of the automatic straight movement from the reference line including the points A and B (reference line sign 291c) to the stroke for performing the offset motion (straight line 291h), or may allow the worker to select whether or not to update the reference of the automatic straight movement. For example, after the completion of the automatic mowing travel of the stroke involving the offset motion, the display control unit 20, concerning the reference of the automatic straight movement, may display a selection screen or selection button to select whether or not to update to the stroke for performing the offset motion (straight line 291h).

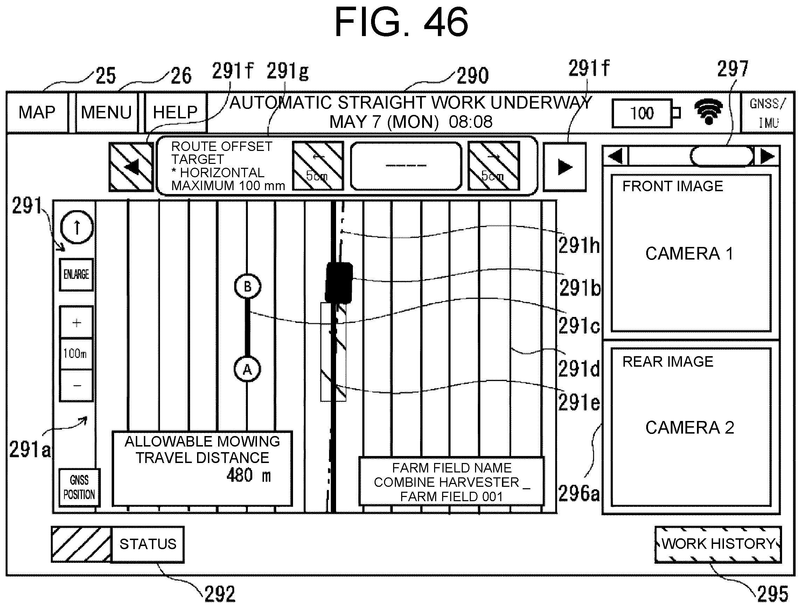

While the combine harvester 2 is performing the automatic mowing travel by the third work, the display control unit 20 operably displays, on the work screen 290, a switch unit 297 for displaying an image field 296a instead of the work stop button 296, as shown in FIGS. 45 and 46. The switch unit 297 includes, for example, a slide bar, and the display control unit 20, as shown in FIG. 46, displays the image field 296a instead of the work stop button 296, according to the switch unit 297's sliding operation in a predetermined direction (for example, right). Meanwhile, when the image field 296a is displayed on the work screen 290, the display control unit 20, according to the switch unit 297's sliding operation in the reverse direction (for example, left), makes such a restoration as to display the work stop button 296 instead of the image field 296a.

In the image field 296a, the display control unit 20 displays an image that is taken by a camera or other imaging device installed in the combine harvester 2 and that shows the status of the automatic mowing travel. For example, FIG. 46 shows an example of displaying, in the image field 296a, the combine harvester 2's front and rear images taken by the cameras installed in the front and rear of the combine harvester 2. The image field 296a may also display a discharge status image and a conveyance status image which are taken by a camera provided at the tip of the discharge auger for the combine harvester 2 to discharge grains and at a conveying unit for conveying the mowed grain culms.

The image field 296a may make the type of the to-be-displayed image arbitrarily selectable. The image field 296a is not limited to displaying two images, but may display one or three or more images, or make the number of to-be-displayed images arbitrarily selectable. FIGS. 45 and FIGS. 46 each show an example in which the switch unit 297 is composed of a slide bar; the switch unit 297 may be, however, so configured as to receive a sliding operation of the work stop button 296 or the image field 296a.

The present embodiment has described the example where the display control unit 20, on the work screen 290, displays the image field 296a instead of the work stop button 296, according to the operation of the switch unit 297; the present invention is, however, not limited to this example. In another example, the display control unit 20, according to the operation of the switch unit 297, may display the image field 296a on the entire screen of the work screen 290 or on any other portion of the work screen 290, or may display in a pop-up manner.

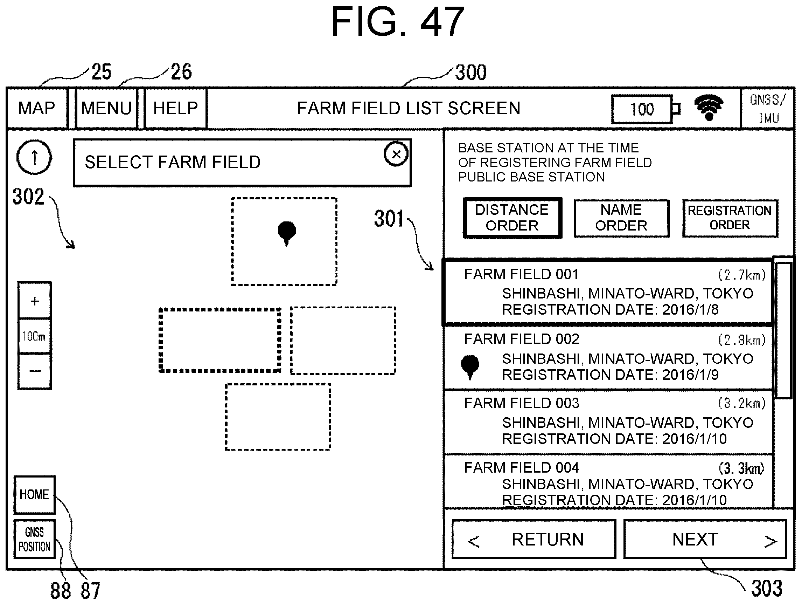

In each screen, the display control unit 20 selectably displays map item 25 for checking the farm field information such as the farm field shape already acquired. When the map item 25 is selected on each screen, as shown in FIG. 47, a farm field list screen 300 for checking the farm field information such as the farm field shape already acquired is displayed on the display unit 13. On the farm field list screen 300, the display control unit 20 displays a farm field list 301, a map field 302, and a selection fix button 303. In other words, the farm field list screen 300 is the same as a screen acquired by deleting the new acquisition button 83 from the farm field acquisition screen 80 shown in FIG. 7, so any duplicate description is omitted.

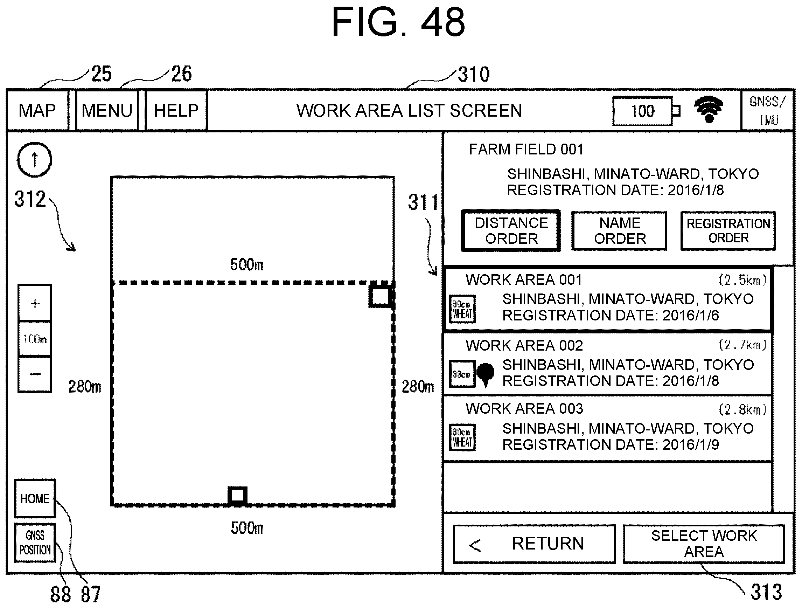

On the farm field list screen 300; when any of the farm field information is selected in the farm field list 301 and thereunder the selection fix button 303 is selected, the function control unit 21 reads out the selected farm field information from the storage unit 11, and the display control unit 20 displays, on the display unit 13, a work area list screen 310 for checking the work area registered for the selected farm field information, as shown in FIG. 48. On the work area list screen 310, the display control unit 20 displays a work area list 311, a map field 312, and a selection fix button 313. In other words, the work area list screen 310 is the same as the work area selection screen 180 shown in FIG. 20, so any duplicate description is omitted.

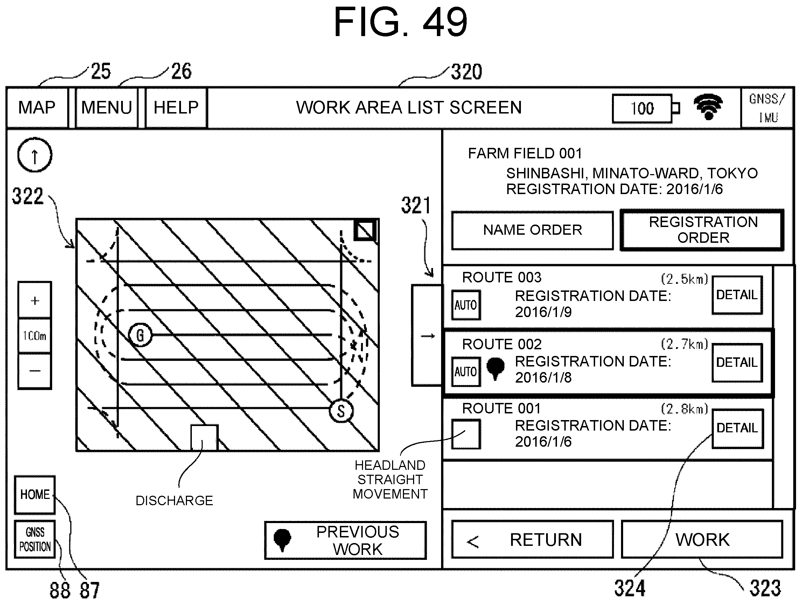

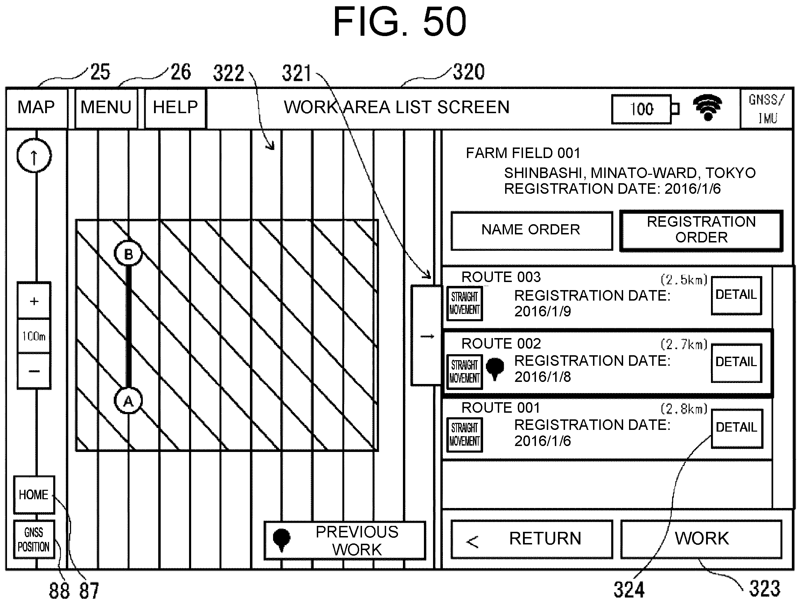

On the work area list screen 310; when any of the work areas is selected in the work area list 311 and thereunder the selection fix button 313 is selected, the display control unit 20 displays, on the display unit 13, a work information list screen 320 for checking the work information of the work route or reference line registered for the selected work area, as shown in FIG. 49 and FIG. 50. On the work information list screen 320, the display control unit 20 displays a work information list 321, a map field 322, and a work execution button 323. FIGS. 49 and 50 each shows an example simultaneously displaying the map field 322, and the field including the work information list 321 and the work execution button 323, but the example may be so switched as to display one of the former one and the latter two depending on the operation.

In the work information list 321 of the work information list screen 320, the display control unit 20 displays a list of the work information of the work route or reference line registered for the work area selected in the work area list screen 310, and makes any of the work information selectable. For example, when the work route is associated with the work area, the display control unit 20, as shown in FIG. 49, selectably displays the list of work routes in the work information list 321, and as each work route, simply displays the content of the work route, thus displaying the registered name, address, and registration date of the work route, for example. Alternatively, when the reference line is associated with the work area, the display control unit 20, as shown in FIG. 50, selectably displays the list of reference lines in the work information list 321, and as each reference line, simply displays the content of the reference line, thus displaying the registered name, address, and registration date of the reference line, for example.

Further, on each work route or each reference line in the work information list 321, the display control unit 20 selectably displays a detail button 324. When the detail button 324 for each work route in the work information list 321 is selected, the display control unit 20 displays a detailed screen (not shown) of the work vehicle data, farm field information and work information at the time of the work on the work route. Alternatively, when the detail button 324 for each reference line in the work information list 321 is selected, the display control unit 20 displays a detailed screen (not shown) of the work vehicle data, farm field information and work information at the time of the work at the reference line.

In the map field 322 of the work information list screen 320, the display control unit 20 displays the map that is based on the map data, highlights, on the map, the farm field shape that is based on the farm field's outermost periphery of the selected farm field information and the work area shape of the selected work area, and further displays the work route or reference line that is the work information selected in the work information list 321. For example, when the work route is associated with the work area; as shown in FIG. 49, in the map field 322, the work route selected in the work information list 321 is displayed, overlapping the work area shape. Alternatively, when the reference line is associated with the work area; as shown in FIG. 50, in the map field 322, the reference line selected in the work information list 321 is displayed, overlapping the work area shape. In the map field 322, the display control unit 20 displays the start point (for example, point A or start position) and the end point (for example, point B or end position) based on the work information.

In the map field 322 of the work information list screen 320, the display control unit 20 displays the map so that the selected farm field or work area is in the center. Further, in the map field 322, the display control unit 20 selectably displays the home position button 87 and the own vehicle position button 88.

When the work execution button 323 is selected on the work information list screen 320, the function control unit 21, controls each unit, so as to perform the automatic mowing travel by the first work or the third work, based on the farm field information selected on the farm field list screen 300, the work area selected on the work area list screen 310, and the work information of the work route or reference line selected on the work information list screen 320. For example, the function control unit 21 sends an automatic mowing travel instruction to the combine harvester 2, together with the farm field information including the work area, as well as the work information. For using the already created work route or reference line, the display control unit 20 displays, on the display unit 13, the first work's work screen 250 shown in FIG. 31 or the third work's work screen 290 of shown in FIG. 42.

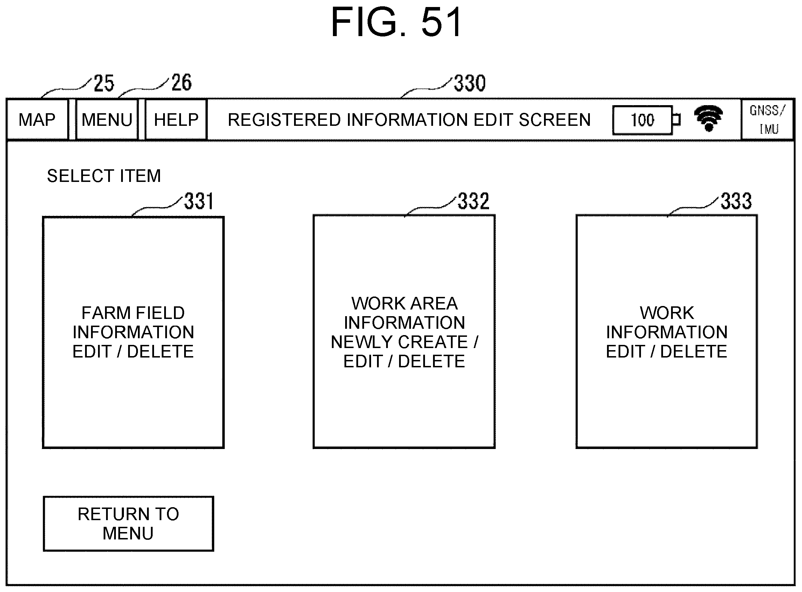

When the registered information item 64 is selected on the menu screen 60, the display control unit 20 displays, on the display unit 13, a registered information edit screen 330 for editing various registered information, as shown in FIG. 51. In the registered information edit screen 330, the display control unit 20 selectably displays a farm field information edit item 331, a work area information edit item 332, and a work information edit item 333.

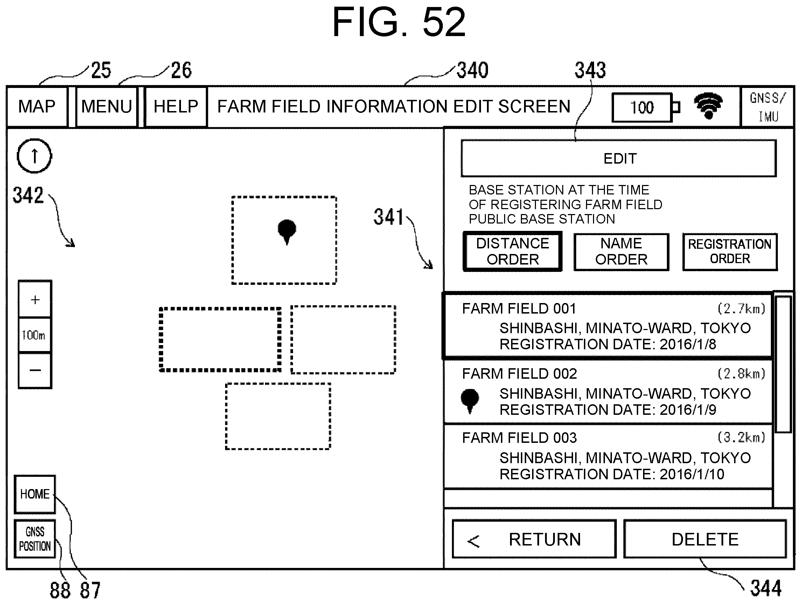

When the farm field information edit item 331 is selected on the registered information edit screen 330, the display control unit 20 displays, on the display unit 13, a farm field information edit screen 340 for editing the registered farm field information, as shown in FIG. 52. On the farm field information edit screen 340, the display control unit 20 displays a farm field list 341, a map field 342, an edit button 343, and a deleting button 344. In other words, the farm field information edit screen 340 is similar to the above farm field acquisition screen 80 shown in FIG. 7 and the above farm field list screen 300 shown in FIG. 47, with the new acquisition button 83 removed, and the edit button 343 and deleting button 344 added; therefore, any duplicate description is omitted.

When the edit button 343 is selected on the farm field information edit screen 340, the process shifts to editing of the farm field information selected in the farm field list 341, thus receiving the editing of the farm field registration name, for example. When the deleting button 344 is selected on the farm field information edit screen 340, the process shifts to deleting of the farm field information selected in the farm field list 341, thus deleting the farm field information according to the operation.

When the work area information edit item 332 is selected on the registered information edit screen 330, the display control unit 20, for selecting the farm field having the to-be-edited work area, displays, on the display unit 13, a farm field selection screen (not shown) equivalent to the above farm field list screen 300 shown in FIG. 47.

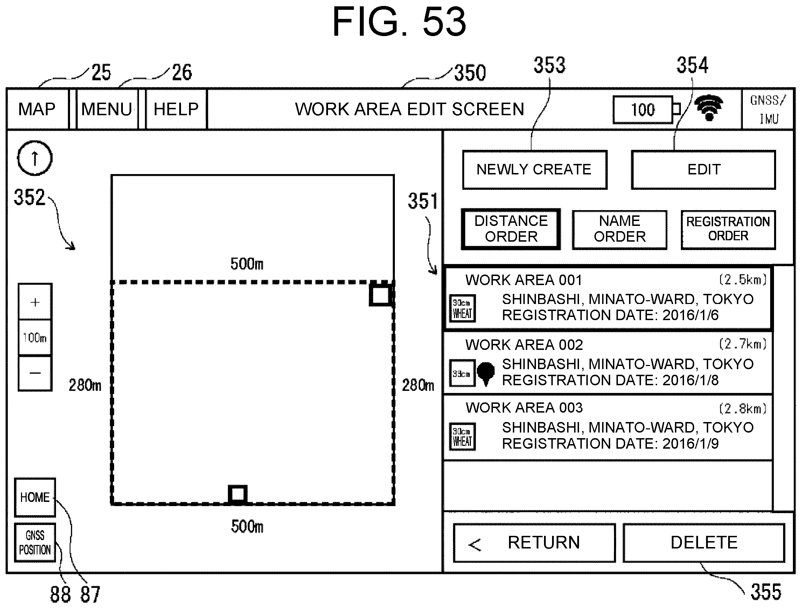

When the farm field is selected on the farm field selection screen, the function control unit 21 reads out, from the storage unit 11, the farm field information associated with the selected farm field, and the display control unit 20 displays, on the display unit 13, a work area edit screen 350 for editing the work area registered for the selected farm field information, as shown in FIG. 53. In the work area edit screen 350, the display control unit 20 displays a work area list 351, a map field 352, a new creation button 353, an edit button 354, and a deleting button 355. The work area edit screen 350 is similar to the above work area selection screen 180 shown in FIG. 20 and the above work area list screen 310 shown in FIG. 48, with the selection fix button 183 removed, and the new creation button 353, the edit button 354, and the deleting button 355 added; therefore, any duplicate description is omitted.

When the new creation button 353 is selected on the work area edit screen 350, the display control unit 20, for newly creating the work area for the farm field of the selected farm information field, displays, on the display unit 13, a new creation screen that is equivalent to the above work area creation screen 110 shown in FIG. 11, the above entrance setting screen 150 shown in FIG. 17, and the above work area registration screen 170 shown in FIG. 20. Here, the new creating operation of the work area is similar to the creating operation of the work area by the first work using the work area creation screen 110, the entrance setting screen 150, and work area registration screen 170, so any duplicate description is omitted.

When the edit button 354 is selected on the work area edit screen 350, the display control unit 20, for editing the work area selected in the work area list 351, displays, on the display unit 13, an edit screen that is equivalent to the above work area creation screen 110 shown in FIG. 11, the above entrance setting screen 150 shown in FIG. 17, and the above work area registration screen 170 shown in FIG. 20. Here, the editing operation of the farm field is similar to the various setting operations in the creating operation in the work area by the first work using the work area creation screen 110, the entrance setting screen 150, and the work area registration screen 170; therefore, any duplicate description is omitted.

When the deleting button 355 is selected on the work area edit screen 350, the process shifts to deleting of the work area selected in the work area list 351, thus deleting the work area.

When the work information edit item 333 is selected on the registered information edit screen 330, the display control unit 20, for selecting the farm field having the to-be-edited work information, displays, on the display unit 13, the farm field selection screen (not shown) equivalent to the above farm field list screen 300 shown in FIG. 47.

When the farm field is selected on the farm field selection screen, the function control unit 21 reads out, from the storage unit 11, the farm field information associated with the selected farm field, and the display control unit 20, for selecting the work area registered for the selected farm field, displays, on the display unit 13, a work area selection screen (not shown) that is equivalent to the above work area selection screen 180 shown in FIG. 20, or the above work area list screen 310 shown in FIG. 48.

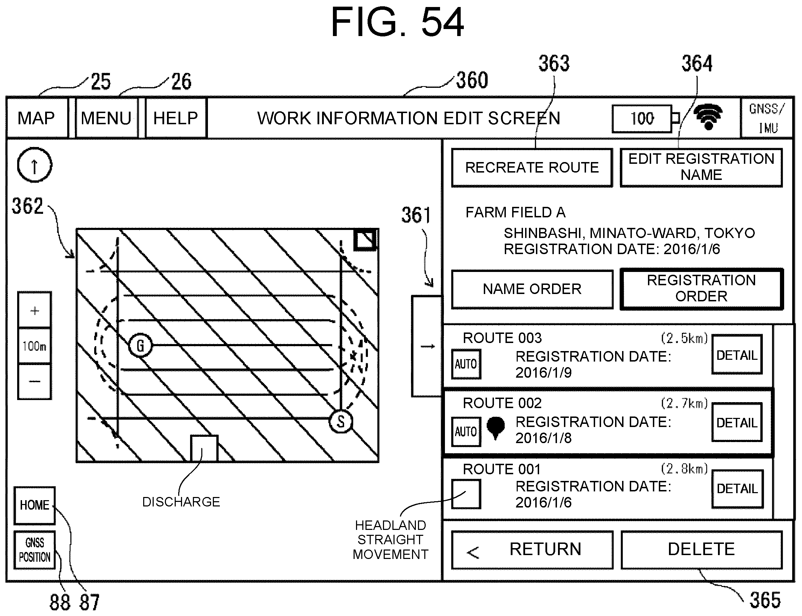

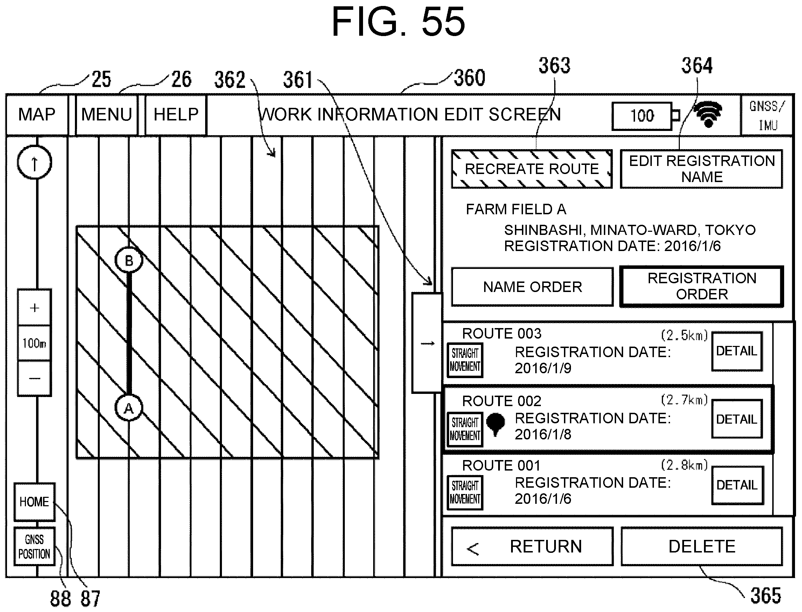

When the work area is selected on the work area selection screen, the function control unit 21 reads out the selected work area from the farm field information, and the display control unit 20 displays, on the display unit 13, a work information edit screen 360 for editing the work information of the work route or reference line registered for the selected work area, as shown in FIG. 54 and FIG. 55. On the work information edit screen 360, the display control unit 20 displays a work information list 361, a map field 362, a route recreation button 363, a registered name edit button 364, and a deleting button 365. In other words, the work information edit screen 360 is similar to the above work information list screen 320 shown in FIGS. 49 and 50, with the work execution button 323 removed, and the route recreation button 363, the registered name edit button 364 and the deleting button 365 added; therefore, any duplicate description is omitted.

On the work information edit screen 360 of the work route, the route recreation button 363 is selectably displayed; on the work information edit screen 360 of the reference line, however, the route recreation button 363 is unselectably displayed. When the route recreation button 363 is selected on the work information edit screen 360 of the work route, the display control unit 20, for recreating the work route for the selected work area, displays, on the display unit 13, a work route recreation screen equivalent to the above work route check screen 230 shown in FIG. 29. Here, the recreating operation of the work route is similar to the operation to create the work route by the first work using the work route check screen 230; therefore, any duplicate description is omitted.

When the registered name edit button 364 is selected on the work information edit screen 360, the process receives editing of the registration name of the work information selected in the work information list 361. When the deleting button 365 is selected on the work information edit screen 360, the process shifts to deleting of the work information selected in the work information list 361, thus deleting the work information according to the operation.

When the work history item 65 is selected on the menu screen 60, the display control unit 20 displays, on the display unit 13, a farm field history screen (not shown) equivalent to the above farm field list screen 300 shown in FIG. 47.

When the farm field is selected on the farm field history screen, the function control unit 21 reads out, from the storage unit 11, the farm field information associated with the selected farm field, and the display control unit 20, for checking the work history of the work area registered for the selected farm field, displays, on the display unit 13, a work area history screen (not shown) that is equivalent to the above work area selection screen 180 shown in FIG. 20, or the above work area list screen 310 shown in FIG. 48.

When the work area is selected on the work area history screen, the function control unit 21 reads out the selected work area from the farm field information, and the display control unit 20, for checking the work history of the work information of the work route or reference line registered for the selected work area, displays, on the display unit 13, a work information history screen (not shown) that is equivalent to the above work information list screen 320 shown in FIG. 49 and FIG. 50.

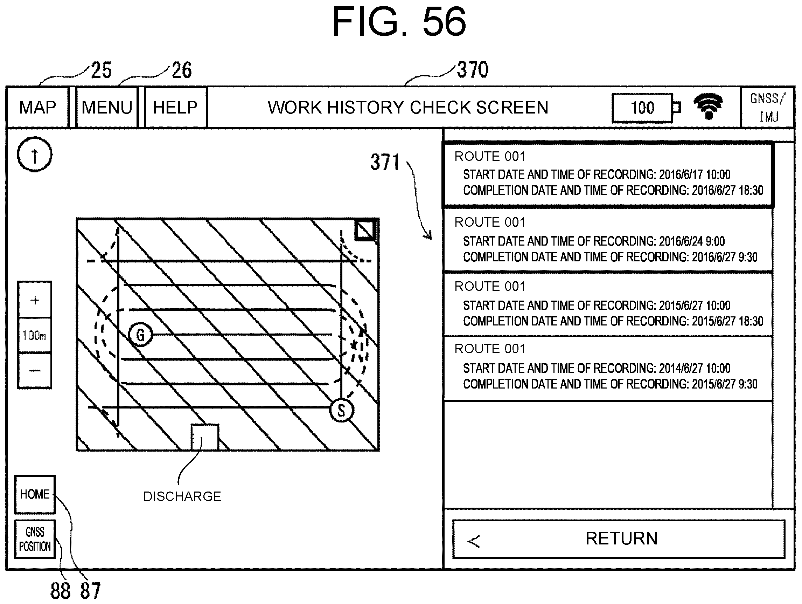

When the work information is selected on the work information history screen, the display control unit 20 displays, on the display unit 13, a work history check screen 370 for checking the work history performed using the selected work information, as shown in FIG. 56. In the work history check screen 370, a work history field 371 displays, as the work history seen when using the work information in the past, the start and completion dates and times of recording, for example.

When the setting item 66 is selected on the menu screen 60, the display control unit 20 displays, on the display unit 13, the various settings screen 380 for editing various settings, as shown in FIG. 57. On the various settings screen 380, the display control unit 20 displays a home information field 381, a combine harvester setting field 382, a work setting field 383, a new route creation setting field 384, a GNSS antenna setting field 385, a communication connection field 386, a registered vehicle information field 387, a simple description field 388, a version information field 389, a farm field information management service field 390, an outermost peripheral route display setting field 391, etc.

The home information field 381 receives registration or deletion concerning the worker's home information. The combine harvester setting field 382 receives registration, edition, and deletion concerning the work vehicle data of the combine harvester 2. The work setting field 383 receives change concerning the initial data of the work setting such as travel information and mowing information. For example, the travel information includes the straight vehicle speed, turn vehicle speed, rearward vehicle speed, and acceleration that are set on the travel information setting screen 260 shown in FIG. 36 above and are seen during the work and non-work; the mowing information includes the mowing lowering timing (mowing start position), etc. which is set on the operation panel screen 270 shown in FIG. 37 above. Other work settings include setting of the distance to be automatically matched with each side of the work area shape in the headland straight work, and setting of selecting the reference for the automatic straight movement between the route and the own vehicle. The work settings include an automatic mowing travel discharge setting that selects an automatic discharge travel in the discharge route that prioritizes the shifting rightward to the discharge position, an automatic discharge travel in the discharge route that prioritizes the shortest distance to the discharge position and a manual discharge travel to the discharge position. Further, the work settings include correction of an allowable mowing distance.

The new route creation setting field 384 receives change concerning the initial data of the route setting used when creating a work route. For example, in the automatic straight movement, the route settings include a straight route pattern for selecting the work width pattern in which the straight route is set at the work width interval and the own vehicle position pattern in which the straight route through the combine harvester 2's own vehicle position is set, and a shortest side length showing the shortest headland reference line in the headland straight work. The route settings include the route pattern, coping with remaining strip, turn type, and turn radius correction, which are set on the route pattern selection screen 220 shown in FIG. 28 above. In the GNSS antenna setting field 385, the GNSS antenna setting status can be viewed on a web site or other means. In the communication connection field 386, any device that is communicatable with the management terminal 3 is made searchable. The registered vehicle information field 387 receives reentry of the registered vehicle information (activation key). The simple description field 388 receives the selection of whether or not to display the simple description on each screen displayed on the display unit 13. The version information field 389 presents version information of the application installed on the management terminal 3. The farm field information management service field 390 receives the selection of whether or not to display the farm field information provided by the farm field information management service.

When the display control unit 20 makes it possible to display a plurality of straight routes and work routes on the screen displayed on the display unit 13, the outermost peripheral route display setting field 391 accepts a change of switching display/non-display of an outermost peripheral route which is the route closest to the farm field's outermost periphery. For example, the display control unit 20 may display, on the display unit 13, a screen that accepts the switching of display/non-display of the outermost peripheral route in response to the operation of the change button in the outermost peripheral route display setting field 391. A plurality of straight routes 191n, work routes 251c, and stroke arrays 291d are displayed in the headland straight work screen 190 shown in FIG. 21 to FIG. 25, the work screen 250 shown in FIG. 31 to FIG. 35, and the work screen 290 shown in FIG. 42 to FIG. 46, respectively; the outermost peripheral route display setting field 391 may accept the change of switching display/non-display of the outermost peripheral route for each of these screens, or may accept the change of switching display/non-display of the outermost peripheral route for these screens collectively. The outermost peripheral route display setting field 391 may accept the change of switching the outermost peripheral route to the non-display only in the manual travel, or the change of switching the plurality of straight routes 191n, work routes 251c, and line arrays 291d, including the outermost peripheral route, to the non-display only in the manual travel. In addition, the outermost peripheral route display setting field 391 may accept the change of switching display/non-display of the outermost peripheral route in the work route presentation screen 240 shown in FIG. 30, the work information list screen 320 shown in FIG. 49 to FIG. 50, the work information edit screen 360 shown in FIG. 54 to FIG. 55, and the work history check screen 370 shown in FIG. 56.

In the above embodiment, the display control unit 20 displays, as a plurality of work items, the first work item 61, the second work item 62, and the third work item 63 on the same screen on the menu screen 60 of the display unit 13; the present invention is, however, not limited to this example.

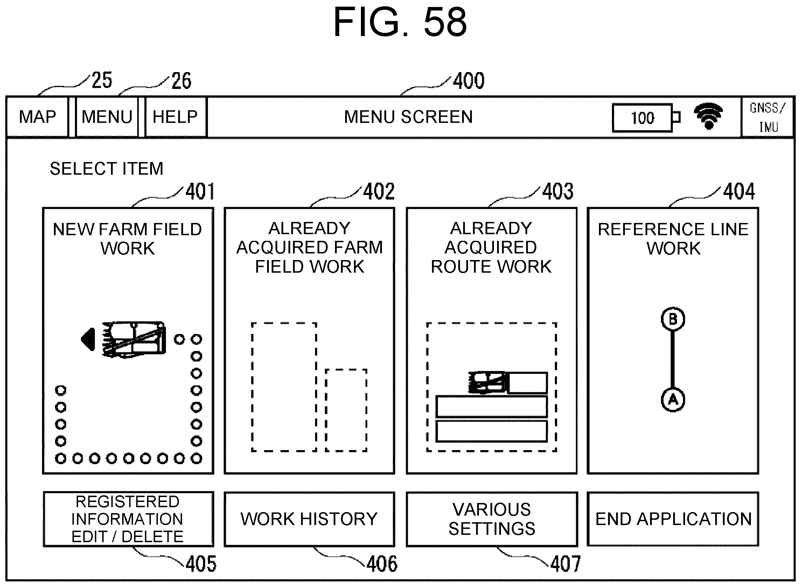

For example, in another embodiment, as shown in FIG. 58, the display control unit 20 may display, for a single menu screen 400, as a plurality of work items, a new farm field work item 401 for performing the work by acquiring the farm field shape as the farm field information, an already acquired farm field work item 402 for performing the work based on the farm field shape already acquired as the farm field information, an already acquired route work item 403 for performing the work based on the work route already acquired as the work information, and a reference line work item 404 for performing the work in the automatic straight movement by acquiring the reference line as the work information. In other words, the new farm field work item 401 and the reference line work item 404 are each an unacquired work item for performing the work with the farm field information or the work information associated with the unacquired farm field, and the already acquired farm field work item 402 and the already acquired route work item 403 are each an already acquired work item for performing the work with the farm field information or the work information associated with the acquired farm field.

Further, the display control unit 20 selectably displays, on the menu screen 400, a registered information item 405, a work history item 406, and a setting item 407. The registered information item 405, the work history item 406 and the setting item 407 are so displayed as to be arranged on one side, for example, on the lower side, in the vertical or horizontal direction for a plurality of work items (new farm field work item 401, already acquired farm field work item 402, already acquired route work item 403, and reference line work item 404), thus identifiably displaying the content by the character, sign or the like. Further, a plurality of work items (new farm field work item 401, already acquired farm field work item 402, already acquired route work item 403, and reference line work item 404) is displayed larger than the registered information item 405, the work history item 406 and the setting item 407.

The above embodiment has described the example where the display control unit 20 includes each screen such that, in the first work, for registering the work area to the farm field after the farm field registration on the farm field registration screen 100, the farm field creation is performed on the work area creation screen 110, the farm field edge editing is performed on the farm field edge edit screen 120, the farm field edge adding screen 130, and the farm field edge deletion screen 140, the setting and editing of the entrance is performed on the entrance setting screen 150 and the entrance edit screen 160, and the registering of the work area is performed on the work area registration screen 170; the present invention is, however, not limited to this example. For example, in another embodiment, the display control unit 20 may configure each screen so that, the work area creation screen 110 performs the farm field edge editing, the entrance setting and editing, and the farm field registration in addition to the work area creation, or the work area registration screen 170 performs the farm field edge editing, and the entrance setting and editing in addition to the work area registration.

As described above, according to the present embodiment; in the management terminal 3 of the worker who manages the combine harvester 2 as the work vehicle capable of making the automatic travel, when the controller 10, by the management terminal 3, starts an application for managing the combine harvester 2, the display control unit 20, by the application, selectably displays, on the display unit 13 of the management terminal 3, a plurality of work items related to the combine harvester 2's work in the farm field.

According to the present embodiment, the management method for managing the combine harvester 2 as the work vehicle capable of making the automatic travel has a display control step for selectably displaying, on the display unit 13 of the management terminal 3, a plurality of work items related to the combine harvester 2's work in the farm field, wherein the above displaying is done when the application for managing the combine harvester 2 is started by the management terminal 3 of the worker.

This allows the worker to visually easily check and select the desired work item without the need for a complicated operation, by displaying, on the display unit 13 of the management terminal 3, a plurality of work items related to the work in the farm field, thus making it possible to improve the operability of selecting the work item.

According to the present embodiment, the display control step displays, on the display unit 13, the first work item 61 to perform the work by acquiring or selecting the farm field information about the farm field, the second work item 62 to perform the work based on the already acquired work route, and the third work item 63 to perform the work by the automatic straight movement by acquiring the reference line, as a plurality of work items.

This allows the worker to select the work item according to the desired work without the need for the complicated operation, thus making it possible to improve the operability of selecting the work item.

According to the present embodiment, the display control step displays, on the display unit 13, the unacquired work item for performing the work by newly acquiring the farm field information or work information (for example, the first work item 61 (or the new acquisition button 83 on the farm field acquisition screen 80) or the third work item 63, on the menu screen 60), and the already acquired work item for performing the work based on the acquired farm field information or work information (for example, the first work item 61 (or the selection fix button 84 on the farm field acquisition screen 80) or the second work item 62, on the menu screen 60), as a plurality of work items.

This allows the worker to select work item by separating the work seen when the farm field information or work information is not yet acquired from the work seen when the farm field information or work information is already acquired, without the need for a complicated operation, thus making it possible to improve the operability of selecting the work item.

According to the present embodiment, the display control step displays, on the display unit 13, at least the new farm field work item for acquiring the farm field shape as the farm field information and for performing the work (for example, the first work item 61 on the menu screen 60 (or the new acquisition button 83 on the farm field acquisition screen 80)), as the unacquired work item.

This allows the worker, when working on the farm field for which the farm field shape has not yet been acquired, to work merely by selecting the new farm field work item, without the need for a complicated operation.

According to the present embodiment, the display control step displays, on the display unit 13, at least the reference line work item for acquiring the reference line as the work information and for performing the work by the automatic straight movement (for example, the third work item 63 on the menu screen 60), as the unacquired work item.

This allows the worker to work, when working by creating the work route of the automatic straight movement, by merely selecting the reference line work item, without the need for a complicated operation.

According to the present embodiment, the display control step displays, on the display unit 13, at least the already acquired farm field work item for performing the work based on the farm field shape already acquired as the farm field information (for example, the first work item 61 on the menu screen 60 (or the selection fix button 84 on the farm field acquisition screen 80)), as the already acquired work item.

This allows the worker, when working on the farm field with the farm field shape already acquired, to perform the work by merely selecting the already acquired farm field work item, without the need for a complicated operation.

According to the present embodiment, the display control step displays, on the display unit 13, at least the already acquired route work item for performing the work based on the work route already acquired as the work information (for example, the second work item 62 on the menu screen 60), as the already acquired work item.

This allows the worker, when working work on the work route that has already been set for the farm field, to perform the work by merely selecting the already acquired route work item, without the need for a complicated operation.

According to the present embodiment, the display control step identifiably displays a plurality of work items arranged in the center of the display unit 13.

This displays a plurality of work items separately at positions easy for the worker to take notice, and thereby allows the worker to visually easily check and select the desired work item, without the need for a complicated operation, thus making it possible to improve the operability of selecting the work item.

According to the present embodiment, the display control step displays, in the work item, the sign that is associated with the work content of each work item.

This allows the worker to visually easily check and select the work that is associated with each work item, thereby making it possible to improve the operability of selecting the work item.

According to the present embodiment, the display control step displays, on the screen displaying a plurality of work items, the registered information item related to the registered information of the farm field and route, the work history item related to the work history in the farm field, and the setting item related to the setting of the work vehicle. The display control step identifiably displays a plurality of work items arranged in the center of the display unit 13, displays the registered information item, the work history item, and the setting item arranged on one side in the vertical or horizontal direction relative to the plurality of work items, and displays the plurality of work items larger in size than the registered information item, the work history item, and the setting item.

This not only distinctly arranges a plurality of work items in positions easy for the worker to take notice, but also distinctly displays the major item, which is mainly used by the worker, larger than any other item, thus making it possible to improve the operability of selecting the major item.

In the other embodiment, the display control unit 20 may display a route shift button (not shown) on the work screen 290 of the third work. When the route shift button is selected on the work screen 290, the display control unit 20 displays, on the work screen 290, the stroke (for example, adjacent stroke) where the combine harvester 2, subsequent to the stroke where the automatic straight movement is completed immediately before, performs the automatic straight movement, as the work stroke 291e. The actual route shifting of the combine harvester 2 is done by the manual operation. Alternatively, the combine harvester 2 may be so configured as to perform, by automatically turning, the route shift in the third work.

Further, in the other embodiment; in the third work, the function control unit 21 may arrange, over the entire area of the farm field shape 291a, a plurality of strokes parallel to the reference line including the points A and B, and the display control unit 20 may display the stroke array (not shown) showing the array of the plurality of strokes overlapping the farm field shape 291a of the work screen 290. The combine harvester 2 being placed in any stroke of the stroke array may be defined as one of the start conditions. Among the stroke array, the stroke in which the combine harvester 2 is placed may be defined as the work stroke 291e.

In the embodiment described above, the example has been described that when the fix button 117 is selected in the work area creation screen 110 as shown in FIG. 11, the display control unit 20 displays, on the display unit 13, the entrance setting screen 150 for setting the combine harvester 2's entrance in the work area of the farm field; the present invention is, however, not limited to this example.

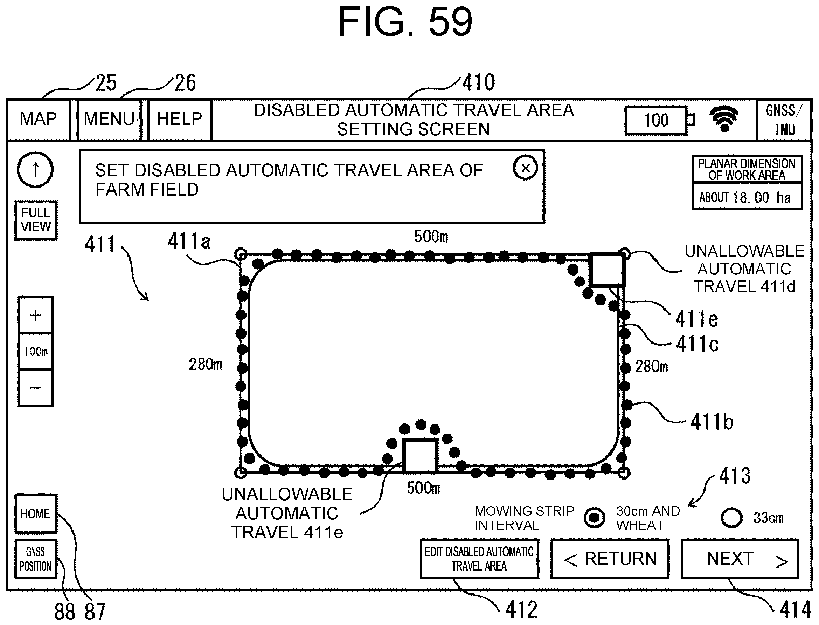

In the work area creation screen 110, the farm field shape 111a, which is the farm field's outermost periphery, is set; inside the farm field's outermost periphery, there may be areas that limit the automatic travel, such as entrance, exit, entrance/exit used in common for the entrance and exit, and an obstacle, each serving as a disabled automatic travel area. Therefore, in the other embodiment, the display control unit 20 may display, on the display unit 13, a disabled automatic travel area setting screen 410 for setting the combine harvester 2's disabled automatic travel area inside the farm field's outermost periphery, instead of the entrance setting screen 150. As shown in FIG. 59, on the disabled automatic travel area setting screen 410, the display control unit 20 displays a map field 411, a disabled automatic travel area edit button 412, a mown strip interval selection field 413, and a fix button 414.

The function control unit 21 detects the combine harvester 2's disabled automatic travel area in the farm field's outermost periphery, based on information such as the measurement point data that constitutes the farm field's outermost periphery. For example, at the time of performing an outermost periphery measurement in the farm field in the first work, the combine harvester 2, when traveling in a manner to avoid the disabled automatic travel area such as the entrance/exit and the obstacle, acquires the measurement point data avoiding the disabled automatic travel area. As described above, the function control unit 21, with the work area creation screen 110, fixes the shape, size, and position information (coordinates and the like) of the work area as well as the measurement point data included in the work area; when the disabled automatic travel area is present in the farm field, the function control unit 21 acquires the farm field's outermost periphery that includes the disabled automatic travel area therein, acquiring the work area that does not include the disabled automatic travel area.

Therefore, the function control unit 21 identifies the disabled automatic travel area in the farm field's outermost periphery, based on the measurement point data, etc. For example, the function control unit 21 sets an enabled automatic travel area, which enables the automatic travel, inside the farm field's outermost periphery; when the travel track including the measurement point data overlaps inside the enabled automatic travel area, the function control unit 21 sets the disenabled automatic travel area outside the travel track overlapping the enabled automatic travel area. In the storage unit 11, the function control unit 21 stores disabled automatic travel area information, such as the shape, size and position information (coordinates and the like) of the set disenabled automatic travel area, so that the corresponding field information is included.

In the map field 411 of the disabled automatic travel area setting screen 410, the display control unit 20 displays a map that is based on the map data, and concerning the work area fixed on the work area creation screen 110, displays a farm field shape 411a that is based on the farm field's outermost periphery, a measurement point 411b showing the measurement point data, a work area shape 411c and farm field edge 411d of the work area, and a disabled automatic travel area sign 411e showing the detected disabled automatic travel area. Further, the home position button 87 and the own vehicle position button 88 are selectably displayed in the map field 411. When the disabled automatic travel area is edited, the display control unit 20 displays, in the map field 411, the disabled automatic travel area sign 411e showing the edited disabled automatic travel area. When the area type of the disabled automatic travel area is selected, the display control unit 20 writes, on the disabled automatic travel area sign 411e, a name, etc. identifying the selected area type.

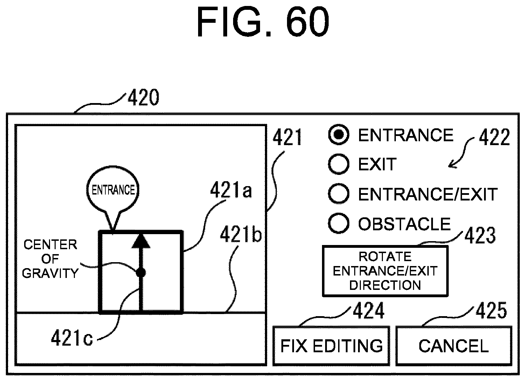

For example, the display control unit 20 displays, on the display unit 13, a disabled automatic travel area edit screen 420 that has accepted the selecting operation, by touch operation, etc., of the disabled automatic travel area sign 411e, and that, in response to the selecting operation of the disabled automatic travel area sign 411e, edits the disabled automatic travel area that corresponds to the disabled automatic travel area sign 411e. Alternatively, the display control unit 20 may display the disabled automatic travel area edit screen 420, according to the operation of the disabled automatic travel area edit button 412. For example, as shown in FIG. 60, the display control unit 20 pops up the disabled automatic travel area edit screen 420 on the disabled automatic travel area setting screen 410, and, in the disabled automatic travel area edit screen 420, displays a disabled automatic travel area field 421, and selectably displays an area type selection field 422, an entrance/exit direction turn button 423, an edit fix button 424, and a cancel button 425.

In the disabled automatic travel area field 421 of the disabled automatic travel area edit screen 420, the display control unit 20 displays, in an enlarged manner, a disabled automatic travel area sign 421a showing the disabled automatic travel area selected on the disabled automatic travel area setting screen 410 and also displays, in an enlarged manner, surroundings of the disabled automatic travel area sign 421a, and displays each side of a farm field shape 421b positioned around the disabled automatic travel area sign 421a.

In the area type selection field 422 of the disabled automatic travel area edit screen 420, the display control unit 20 accepts an operation to select the area type of the disabled automatic travel area. The area type selection field 422 includes an operant such as a radio button and the like for selecting the area type of the disabled automatic travel area, such as entrance, exit, entrance/exit, obstacle, etc., for example. When the area type of the disabled automatic travel area is selected in the area type selection field 422, the display control unit 20 writes, on the disabled automatic travel area sign 421a, a name, etc. identifying the selected area type.

When the entrance, exit or entrance/exit is selected as the area type of the disabled automatic travel area, the function control unit 21 sets, in the disabled automatic travel area, an entrance/exit direction of the combine harvester 2 in the disabled automatic travel area; the display control unit 20 displays a direction sign 421c, such as an arrow showing the set entry/exit direction, in a manner to overlap the corresponding disabled automatic travel area sign 421a. For example, the function control unit 21 sets, as the entrance/exit direction, a direction in which the combine harvester 2 enters into the disabled automatic travel area that is the entrance, and sets, as the entrance/exit direction, a direction in which the combine harvester 2 exits into the disabled automatic travel area that is the exit.

When the area type is the entrance, the function control unit 21 may initially set the entrance/exit direction in a manner to direct the base end of the direction sign 421c toward the side of the farm field shape 421b, and to direct the tip of the direction sign 421c toward the inside of the farm field shape 421b. When the area type is the exit, the function control unit 21 may initially set the entrance/exit direction in a manner to direct the tip of the direction sign 421c toward the side of the farm field shape 421b, and to direct the base end of the direction sign 421c toward the inside of the farm field shape 421b. Alternatively, the function control unit 21 may initially set the entrance/exit direction to be the same as the direction of the combine harvester 2. Alternatively, with the display control unit 20 having made a reference side selectable out of the farm field shape 421b's sides in contact with the disabled automatic travel area sign 421a, the function control unit 21 may initially set the entry/exit direction to be parallel to the reference side.

When the area type of the entrance, exit or entrance/exit is selected, the display control unit 20 displays the direction sign 421c in the initially set entrance/exit direction. Having accepted an operation to change the entrance/exit direction, the display control unit 20, in response to the operation of the entrance/exit direction turn button 423, for example, turns the entrance/exit direction clockwise or counterclockwise in a predetermined angle unit (e.g., 90-degree unit), thereby to display the direction sign 421c.

The display control unit 20 may limit the entrance/exit direction's turn depending on whether the area type of the disabled automatic travel area is the entrance or the exit. When the area type is the entrance, for example, the display control unit 20 may so limit the entrance/exit direction's turn as to be disabled from directing the tip of the direction sign 421c toward the side of the farm field shape 421b, whereas when the area type is the exit, the display control unit 20 may so limit the entrance/exit direction's turn as to be disabled from directing the tip of the direction sign 421c toward the inside of the farm field shape 421b.

Alternatively, when the entrance/exit direction is turned and changed without limiting the entrance/exit direction's turn of the disabled automatic travel area selected for the entrance or exit, the function control unit 21 may change the area type of such disabled automatic travel area according to the entrance/exit direction. For the disabled automatic travel area sign 421a in the disabled automatic travel area where the entrance is selected for the area type, for example, when the entrance/exit direction is so changed that the tip of the direction sign 421c is directed toward the side of the farm field shape 421b, and the base end of the direction sign 421c is directed toward the inside of the farm field shape 421b, the function control unit 21 may change the area type of the disabled automatic travel area to the exit. For the disabled automatic travel area sign 421a in the disabled automatic travel area where the exit is selected for the area type, for example, when the entrance/exit direction is so changed that the base end of the direction sign 421c is directed toward the side of the farm field shape 421b, and the tip of the direction sign 421c is directed toward the inside of the farm field shape 421b, the function control unit 21 may change the area type of the disabled automatic travel area to the entrance.

When the edit fix button 424 is selected on the disabled automatic travel area edit screen 420, the function control unit 21 fixes the disabled automatic travel area's area type selected in the area type selection field 422, and also fixes the entrance/exit direction of the displayed direction sign 421c, thereafter to so store, in the storage unit 11, that the corresponding disabled automatic travel area information includes the thus fixed information; the display control unit 20 displays the disabled automatic travel area setting screen 410 on the display unit 13. When the cancellation button 425 is selected on the disabled automatic travel area edit screen 420, the function control unit 21 cancels the editing on the disabled automatic travel area edit screen 420, and the display control unit 20 displays the disabled automatic travel area setting screen 410 on the display unit 13.

When the fix button 414 is selected on the disabled automatic travel area setting screen 410, the function control unit 21 fixes the setting of the disabled automatic travel area, and, like at the time of selecting the fix button 154 of the entrance setting screen 150 described above, the display control unit 20 displays, on the display unit 13, the work area registration screen 170 for registering the work area in the farm field.

In the other embodiment described above, the example has been described that the function control unit 21 automatically sets the disabled automatic travel area based on the enabled automatic travel area set inside the farm field's outermost periphery, but the present invention is not limited to this example. For example, in the disabled automatic travel area setting screen 410, the disabled automatic travel area may be manually set at the selected position, in response to the selecting operation by the touch operation, etc. inside the farm field shape 411a.

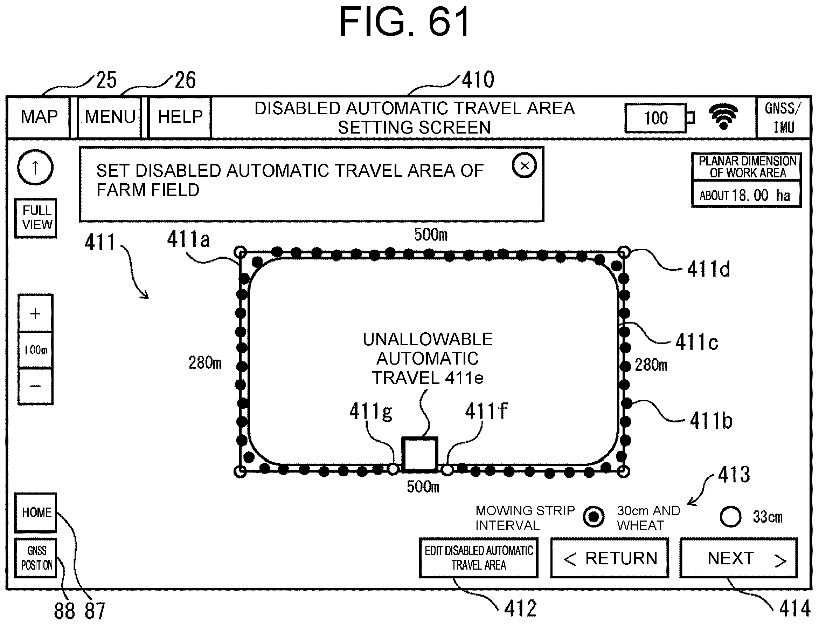

Alternatively, the function control unit 21 may automatically set the disabled automatic travel area by any other means. For example, when the combine harvester 2 makes the outermost peripheral measurement in the farm field in the first work, the start point 411f and end point 411g of the measurement point data are acquired at a predetermined first distance or more away (e.g., at least the width of the combine harvester 2), as shown in FIG. 61; when the travel tracks including the measurement point data are not connected, the function control unit 21 may set the disabled automatic travel area between the start point 411f and end point 411g of the measurement point data.

Even when the start point 411f and end point 411g of the measurement point data are spaced apart by the first distance or more, the function control unit 21, based on the measurement point data, detects each side of the farm field shape 411a as the farm field's outermost periphery, and linearly approximates the measurement point data included in each side, thereby to calculate each side of the work area shape 411c. When the start point 411f and end point 411g of the measurement point data are spaced apart by more than or equal to a second distance larger than the first distance, the function control unit 21, determining that the outermost periphery measurement is yet to be ended, may be free from ending the outermost periphery measurement, from detecting each side of the farm field shape 411a or calculating each side of the work area shape 411c, and from setting the disabled automatic travel area.

When the start point 411f and end point 411g of the measurement point data are on one side of the farm field shape 411a, the function control unit 21 sets the distance between the start point 411f and end point 411g of the measurement point data to a transverse width of the disabled automatic travel area. In this case, the function control unit 21 may set the width of the combine harvester 2 to a longitudinal width of the disabled automatic travel area. Alternatively, acquiring the measurement point data seen when the combine harvester 2 travels inside the farm field's outermost periphery by the headland straight work of the combine harvester 2, the function control unit 21 determines whether or not there is measurement point data inside the farm field's outermost periphery, in the position that corresponds to the disabled automatic travel area (from the start point 411f to the end point 411g of the measurement point data of the farm field shape 411a), or determines how far the measurement point data inside the farm field's outermost periphery is spaced apart from the one side of the farm field shape 411a, thereby to set the longitudinal width of the disabled automatic travel area.

Meanwhile, when the start point 411f and end point 411g of the measurement point data are present at edge portions of the farm field shape 411a, in other words, when the start point 411f of the measurement point data is on one side of the farm field shape 411a, whereas the end point 411g of the measurement point data is on the other side of the farm field shape 411a, the function control unit 21 may set the distance from the end point 411g of the measurement point data to the one side of the farm field shape 411a to the transverse width of the disabled automatic travel area, and may set the distance from the other side of the farm field shape 411a to the start point 411f of the measurement point data to the longitudinal width of the disabled automatic travel area.

In the map field 171 of the work area registration screen 170, the display control unit 20 displays the disabled automatic travel area set in the disabled automatic travel area setting screen 410. In addition, the display control unit 20 displays the disabled automatic travel area, which is set in the disabled automatic travel area setting screen 410, also on the work area selection screen 180 shown in FIG. 20, the headland straight work screen 190 shown in FIG. 21 to FIG. 25, the work direction setting screen 200 shown in FIG. 26, the discharge position setting screen 210 shown in FIG. 27, the work route presentation screen 240 shown in FIG. 30, the work screen 250 shown in FIG. 31 to FIG. 35, the reference line setting screen 280 shown in FIG. 38 to FIG. 41, the work screen 290 shown in FIG. 42 to FIG. 46, the work area list screen 310 shown in FIG. 48, the work information list screen 320 shown in FIG. 49 to FIG. 50, the work area edit screen 350 shown in FIG. 53, the work information edit screen 360 shown in FIG. 54 to FIG. 55, and the work history check screen 370 shown in FIG. 56.

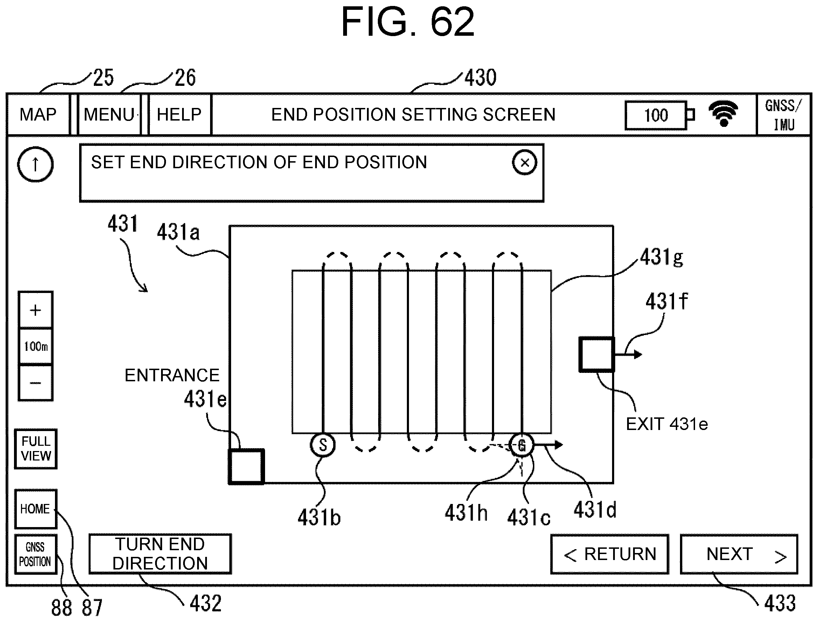

In the embodiment described above, the example has been described that, in the map field 241 of the work route presentation screen 240 as shown in FIG. 61, the display control unit 20 displays the end position sign 241n showing the end position of the automatic mowing travel in the created work route 241d; in another embodiment, however, it is also possible to accept a setting operation for the combine harvester 2's direction seen when the combine harvester 2 stops at the end position, i.e., for the end direction. Not limiting the setting operation for the end direction of the combine harvester 2 to on the work route presentation screen 240, the display control unit 20 may accept on work route information setting screens such as the work direction setting screen 200 shown in FIG. 26 and the discharge position setting screen 210 shown in FIG. 27, or other work route information setting screens such as the end position setting screen 430 shown in FIG. 62, etc. The following is an example of accepting the setting operation for the end direction of the combine harvester 2 on the end position setting screen 430.

For example, when the mode switch button 195 is selected on the headland straight work screen 190 shown in FIG. 21, etc., the display control unit 20, similar to the work direction setting screen 200, the discharge position setting screen 210, etc., displays, on the display unit 13, the end position setting screen 430 as the work route information setting screen. On the end position setting screen 430, the display control unit 20 displays a map field 431, an end direction turn button 432, and a fix button 433.

In the map field 431 of the end position setting screen 430, the display control unit 20 displays a map that is based on the map data, displays, on the map, a farm field shape 431a, which is the farm field's outermost periphery, based on the farm field information, and displays, in a manner to overlap the farm field shape 431a, a start position sign 431b showing the start position of the automatic mowing travel and an end position sign 431c showing the end position of the automatic mowing travel. At this time, when the end direction of the combine harvester 2 is set for the end position, the display control unit 20 displays a direction sign 431d such as an arrow showing the set end direction in a manner to overlap the end position sign 431c. When the disabled automatic travel area of the combine harvester 2 is set on the disabled automatic travel area setting screen 410, the display control unit 20 display the disabled automatic travel area sign 431e overlapping the farm field shape 431a. When the area type of the disabled automatic travel area has been selected, the display control unit 20 writes, for the disabled automatic travel area sign 431e, a name, etc. identifying the selected area type; when the entrance/exit direction of the disabled automatic travel area has been selected, the display control unit 20 writes a direction sign 431f, such as an arrow showing the entrance/exit direction, overlapping the disabled automatic travel area sign 431e.

As described for the work direction setting screen 200; among each edge of the unmown area inside the farm field shape 431a, the function control unit 21 may set the start position at the one edge closest to the combine harvester 2's own vehicle position. Alternatively, on the work route information setting screens, such as the work direction setting screen 200, the discharge position setting screen 210, and the end position setting screen 430, the display control unit 20 may accept a start position setting operation by touch operation, etc. inside the farm field shape 431a, and the function control unit 21 may set the start position at the position that corresponds to the setting operation.

The function control unit 21, based on the work route information, may tentatively create a work route started from the start position, and then may set the end position at the end of the tentatively created work route. Alternatively, in the end position setting screen 430, the display control unit 20 may accept the end position setting operation by the by touch operation, etc. inside the farm field shape 431a, and the function control unit 21 may set the end position at the position that corresponds to the setting operation.

Alternatively, the display control unit 20 may have accepted the selecting operation, by touch operation, etc., of the disabled automatic travel area sign 431e of the disabled automatic travel area where the exit or the entrance/exit is selected for the area type, and the function control unit 21 may set the end position to the position that corresponds to the selected disabled automatic travel area sign 431e. For example, on an extension in the entrance/exit direction of the disabled automatic travel area that corresponds to the disabled automatic travel area sign 431e, or on an extension in the direction orthogonal to the farm field shape 431a's side in contact with the disabled automatic travel area sign 431e, and inside the farm field shape 431a, the function control unit 21 may set the end position that corresponds to the disabled automatic travel area sign 431e, thereby to set the end position. At this time setting an enabled automatic travel area 431g, which allows for the automatic travel, inside the farm field shape 431a, the function control unit 21 may set a position, that corresponds to the disabled automatic travel area sign 431e, on the frame line that constitutes the enabled automatic travel area 431g, thereby to set the end position. In the end position setting screen 430, the display control unit 20 does not need to display the enabled automatic travel area 431g.

For the set end position, the function control unit 21 sets the end direction of the combine harvester 2. For example, the function control unit 21 sets the end direction along the travel direction at the end of the tentatively created work route. Alternatively, the display control unit 20 has accepted a selecting operation, by touch operation, etc., of the disabled automatic travel area sign 431e of the disabled automatic travel area where the exit or the entrance/exit is selected for the area type, and the function control unit 21 sets the end direction toward the disabled automatic travel area of the selected disabled automatic travel area sign 431e. When the end position is present on the extension in the entrance/exit direction of the disabled automatic travel area, the function control unit 21 may set the end direction in the same direction as the entrance/exit direction. In addition, the display control unit 20 has accepted the operation to change the end direction by the end direction turn button 432, etc., and the function control unit 21 turns the end direction clockwise or counterclockwise in a predetermined angular unit (e.g., 90-degree unit) in response to the operation of the end direction turn button 432. The display control unit 20 changes the display of the direction sign 431d according to the setting or change of the end direction.

When the fix button 433 is selected on the end position setting screen 430, the function control unit 21 fixes the end position by the position of the displayed end position sign 431c, fixes the end direction by the direction of the displayed direction sign 431d, thereafter to include the end position and the end direction in the work route information to be stored in the storage unit 11. When creating the work route based on the work route information including the end direction at the end position, the function control unit 21 creates the work route to the end position so that the combine harvester 2 stops at the end position in the end direction. At this time, the function control unit 21 may create the work route including a direction change route 431h (see the dotted line in FIG. 62), such as turn-return or turn around the end position.

In the other embodiment described above, the example has been described that before the work route is created, the end position is set and the end direction is set on the end position setting screen 430, but after the work route is created and the end position is set, the end direction may be set on the work route presentation screen 240 or the like.

In the other embodiment described above, the example has been described that when the fix button 154 of the entrance setting screen 150 is selected, the display control unit 20 displays, on the display unit 13, the work area registration screen 170 for registering the work area of the field, but the present invention is not limited to this example. For example, in the other embodiment, when the fix button 154 of the entrance setting screen 150 is selected, so as to set the headland range 191e (see FIG. 21, etc.) showing the range required as a headland for performing the automatic travel, and the enabled automatic travel area 431g (see FIG. 62, etc.), which enables the automatic travel, the display control unit 20 may display, on the display unit 13, a headland width setting screen 440 for setting the headland width from the farm field's outermost periphery.

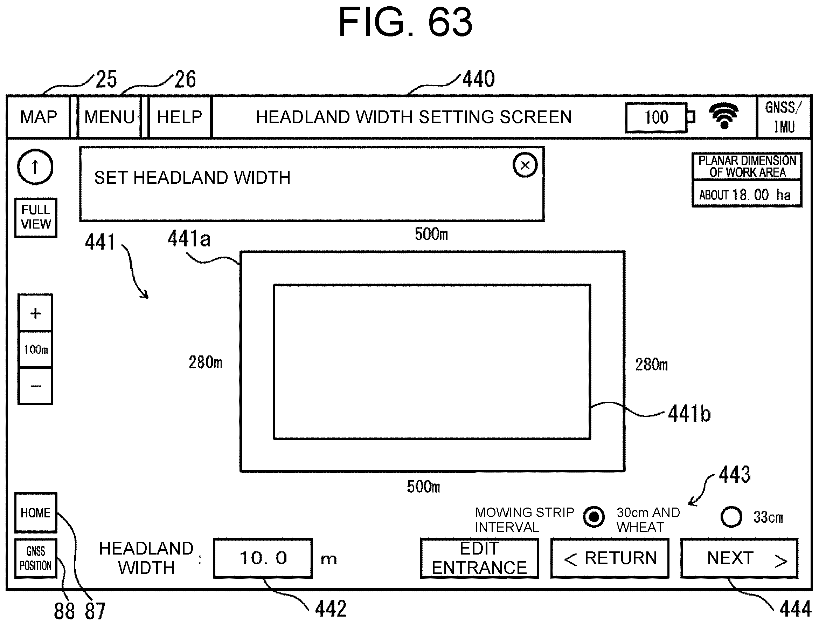

In other words, the headland range 191e and the enabled automatic travel area 431g are set according to the headland width set on the headland width setting screen 440. After the headland width is set on the headland width setting screen 440, the display control unit 20 displays the work area registration screen 170 on the display unit 13. Alternatively, the headland width setting by the headland width setting screen 440 may be executed at any other time as long as until the work area is registered by the work area registration screen 170. As shown in FIG. 63, on the headland width setting screen 440, the display control unit 20 displays a map field 441, a headland width setting field 442, a mown strip interval selection field 443, and a fix button 444.

The display control unit 20 displays, in the map field 441 of the headland width setting screen 440, a map that is based on the map data, and also displays, for the work area fixed on the work area creation screen 110, a farm field shape 441a that is based on the farm field's outermost periphery and a headland width shape 441b showing the set headland width. Further, the home position button 87 and the own vehicle position button 88 are selectably displayed in the map field 441. When the headland width is edited, the display control unit 20 displays, in the map field 441, the headland width shape 441b showing the edited headland width.

With the vehicle width of the combine harvester 2 as one lap wide, for example, the function control unit 21 may initially set the headland width at a position where a width for a predetermined number of laps (e.g., two laps) inward from each side of the farm field shape 441a is spaced. In addition, the display control unit 20 have accepted the headland width setting in the headland width setting field 442, and the function control unit 21, according to the set value in the headland width setting field 442, sets the headland width for each side of the farm field shape 441a or collectively for each side of the farm field shape 441a. For example, the display control unit 20 has accepted selecting operation of each side of the farm field shape 441a by touch operation, etc., and the function control unit 21 sets the set value in the headland width setting field 442 to the headland width that corresponds to the side of the selected field shape 441a. When no side of the farm field shape 441a is selected, the function control unit 21 collectively sets the values in the headland width setting field 442 to the headland width corresponding to each side of the farm field shape 441a.

When the set headland width is the predetermined minimum width or less, the display control unit 20 determines that the combine harvester 2 cannot turn and travel safely in the headland, and notifies the user by displaying a message to that effect, warning lamps, etc. displayed on the headland width setting screen 440. The function control unit 21 may set the headland width even when the width is at the predetermined lower limit or less, or may disable the setting of the headland width when the width is at the predetermined lower limit or less.

When the fix button 444 is selected on the headland width setting screen 440, the function control unit 21 fixes the headland width set in the headland width setting screen 440, and the display control unit 20 displays the work area registration screen 170 on the display unit 13.

In the embodiments above, the example in which the work vehicle of the present invention includes the combine harvester 2 has been described; the present invention is, however, not limited to this example, and the work vehicle of the present invention may also include another agricultural machine such as a tractor and a rice planter, and may also include a work vehicle other than the agricultural machine.

### REFERENCE SIGNS LIST

1: management system
2: combine harvester (work vehicle)
3: management terminal
10: controller
11: storage unit
13: display unit
20: display control unit
21: function control unit
30: first vehicle registration screen
40: second vehicle registration screen
60: menu screen
61: first work item
62: second work item
63: third work item
64: registered information item
65: work history item
66: setting item
70: vehicle selection screen
71: vehicle list
72: vehicle detail field
73: edit button
80: farm field acquisition screen
81: farm field list
82: map field
82a: simulated diagram
83: new acquisition button
84: selection fix button
90: outermost periphery measurement screen
91: map field
91a: simulated diagram
92: start condition field
93: measurement start button
97: measurement status field
99: measurement completion button
100: farm field acquisition screen
101: map field
101a: tentative outer periphery shape
101b: simulated diagram
110: work area creation screen
111: map field
111a: farm field shape
111c: work area shape
112: farm field edge edit button
120: farm field edge edit screen
130: farm field edge adding screen
140: farm field edge deletion screen
150: entrance setting screen
152: entrance edit button
160: entrance edit screen
170: work area registration screen
174: work start button
180: work area selection screen
190: headland straight work screen
193: automatic straight movement start button
198: automatic straight movement stop button
250: work screen
251: map field
251a: work area shape
251b: simulated diagram
251c: work route
253: work start button
258: work stop button
280: reference line setting screen
281: map field
281a: simulated diagram
282: point A setting button
283: point A deleting button
285: reference line fix button
286: point B setting button
287: point B deleting button
290: work screen
291: map field
291b: simulated diagram
293: work start button
296: work stop button
400: menu screen
401: new farm field work item
402: already acquired farm field work item
403: already acquired route work item
404: reference line work item
405: registered information item
406: work history item
407: setting item

## Claims

1. A management method for managing a work vehicle capable of performing an automatic travel, the method comprising:
a display control step in which starting an application that manages the work vehicle causes the application to selectably display, on a display unit (13), a plurality of unacquired and already acquired work items related to work that is performed by the work vehicle in a farm and selecting a work item from the plurality of work items causes the switching to the screen corresponding to the selected work item among the plurality of work items.

2. The management method according to claim 1, wherein the display control step displays, on the display unit (13), a first work item (61) for acquiring or selecting farm field information about the farm field and for performing the work, a second work item (62) for performing the work based on an already acquired work route, and a third work item (63) for acquiring a reference line and for performing the work in an automatic straight movement, as the plurality of the work items.

3. The management method according to claim 1, wherein the display control step displays, on the display unit (13), an unacquired work item for newly acquiring farm field information or work information and for performing the work, and an already acquired work item for performing the work based on the acquired farm field information or the acquired work information, as the plurality of the work items.

4. The management method according to claim 3, wherein the display control step displays, on the display unit (13), at least a new farm field work item (401) for acquiring a farm field shape (111a) as the farm field information and for performing the work, as the unacquired work item.

5. The management method according to claim 3, wherein the display control step displays, on the display unit (13), at least a reference line work item (404) for acquiring a reference line as the work information and thereby for performing the work in an automatic straight movement, as the unacquired work item.

6. The management method according to claim 3, wherein the display control step displays, on the display unit (13), at least an already acquired farm field work item (402) for performing the work based on a farm field shape already acquired as the farm field information, as the already acquired work item.

7. The management method according to claim 3, wherein the display control step displays, on the display unit (13), at least an already acquired route work item (403) for performing the work based on a work route already acquired as the work information, as the already acquired work item.

8. The management method according to claim 1, wherein the display control step identifiably displays the plurality of the work items arranged in a center of the display unit (13).

9. The management method according to claim 1, wherein the display control step displays, in the work items, a sign associated with a work content of each of the work items.

10. The management method according to claim 1, wherein the display control step
displays, on a screen displaying the plurality of the work items, a registered information item (405) related to registered information of the farm field and of a route, a work history item (406) related to a work history in the farm field, and a setting item (407) related to a setting of the work vehicle,
identifiably displays the plurality of the work items arranged in a center of the display unit (13),
displays the registered information item (405), the work history item (406), and the setting item (407) arranged on one side in a vertical or horizontal direction relative to the plurality of the work items, and
displays the plurality of the work items larger than the registered information item (405), the work history item (406), and the setting item (407).

11. A management terminal for managing a work vehicle capable of performing an automatic travel, the management terminal comprising:
a storage unit (11) that stores an application for managing the work vehicle;
a controller (10) that starts the application; and
a display unit (13),
wherein the controller (10), by the application, selectably displays, on the display unit (13), a plurality of unacquired and already acquired work items related to work that is performed by the work vehicle in a farm field, and switches to the screen corresponding to the selected work item among the plurality of work items.

12. A management system for managing a work vehicle capable of performing an automatic travel, the management system comprising:
starting an application that manages the work vehicle to cause the application to selectably display, on a display unit (13), a plurality of unacquired and already acquired work items related to work that is performed by the work vehicle in a farm field, and to switch to the screen corresponding to the selected work item among the plurality of work items.

## Patentansprüche

1. Verwaltungsverfahren zum Verwalten eines Arbeitsfahrzeugs, das in der Lage ist, ein automatisches Fahren durchzuführen, wobei das Verfahren Folgendes umfasst:
einen Anzeigesteuerschritt, bei dem das Starten einer Anwendung, die das Arbeitsfahrzeug verwaltet, die Anwendung veranlasst, auf einer Anzeigeeinheit (13) eine Vielzahl von nicht erfassten und bereits erfassten Arbeitselementen, die sich auf eine Arbeit beziehen, die vom Arbeitsfahrzeug auf einer Farm durchgeführt wird, auswählbar anzuzeigen, und das Auswählen eines Arbeitselements aus der Vielzahl von Arbeitselementen das Umschalten auf den Bildschirm veranlasst, der dem ausgewählten Arbeitselement unter der Vielzahl von Arbeitselementen entspricht.

2. Verwaltungsverfahren nach Anspruch 1, wobei der Anzeigesteuerschritt auf der Anzeigeeinheit (13) ein erstes Arbeitselement (61) zum Erfassen oder Auswählen von Farmfeldinformationen über das Farmfeld und zum Durchführen der Arbeit, ein zweites Arbeitselement (62) zum Durchführen der Arbeit auf Basis einer bereits erfassten Arbeitsroute und ein drittes Arbeitselement (63) zum Erfassen einer Referenzlinie und zum Durchführen der Arbeit in einer automatischen geraden Bewegung als die Vielzahl von Arbeitselementen anzeigt.

3. Verwaltungsverfahren nach Anspruch 1, wobei der Anzeigesteuerschritt auf der Anzeigeeinheit (13) ein nicht erfasstes Arbeitselement zum erneuten Erfassen von Farmfeldinformationen oder Arbeitsinformationen und zum Durchführen der Arbeit und ein bereits erfasstes Arbeitselement zum Durchführen der Arbeit auf Basis der erfassten Farmfeldinformationen oder der erfassten Arbeitsinformationen als die Vielzahl der Arbeitselemente anzeigt.

4. Verwaltungsverfahren nach Anspruch 3, wobei der Anzeigesteuerschritt auf der Anzeigeeinheit (13) mindestens ein neues Farmfeldarbeitselement (401) zum Erfassen einer Farmfeldform (111a) als die Farmfeldinformationen und zum Durchführen der Arbeit als das nicht erfasste Arbeitselement anzeigt.

5. Verwaltungsverfahren nach Anspruch 3, wobei der Anzeigesteuerschritt auf der Anzeigeeinheit (13) mindestens ein Referenzlinienarbeitselement (404) zum Erfassen einer Referenzlinie als die Arbeitsinformationen und dadurch zum Durchführen der Arbeit in einer automatischen geraden Bewegung als das nicht erfasste Arbeitselement anzeigt.

6. Verwaltungsverfahren nach Anspruch 3, wobei der Anzeigesteuerschritt auf der Anzeigeeinheit (13) mindestens ein bereits erfasstes Farmfeldarbeitselement (402) zum Durchführen der Arbeit auf Basis der bereits als die Farmfeldinformationen erfassten Farmfeldform als das bereits erfasste Arbeitselement anzeigt.

7. Verwaltungsverfahren nach Anspruch 3, wobei der Anzeigesteuerschritt auf der Anzeigeeinheit (13) mindestens ein bereits erfasstes Routenarbeitselement (403) zum Durchführen der Arbeit auf Basis der bereits als die Arbeitsinformationen erfassten Arbeitsroute als das bereits erfasste Arbeitselement anzeigt.

8. Verwaltungsverfahren nach Anspruch 1, wobei der Anzeigesteuerschritt die Vielzahl der Arbeitselemente in einer Mitte der Anzeigeeinheit (13) angeordnet identifizierbar anzeigt.

9. Verwaltungsverfahren nach Anspruch 1, wobei der Anzeigesteuerschritt in den Arbeitselementen ein Zeichen anzeigt, das mit einem Arbeitsinhalt von jedem der Arbeitselemente verknüpft ist.

10. Verwaltungsverfahren nach Anspruch 1, wobei der Anzeigesteuerschritt
auf einem Bildschirm, auf dem die Vielzahl von Arbeitselementen angezeigt werden, ein registriertes Informationselement (405), das sich auf registrierte Informationen über das Farmfeld und eine Route bezieht, ein Arbeitsverlaufselement (406), das sich auf einen Arbeitsverlauf auf dem Farmfeld bezieht, und ein Einstellungselement (407), das sich auf eine Einstellung des Arbeitsfahrzeugs bezieht, anzeigt,
die Vielzahl der Arbeitselemente in einer Mitte der Anzeigeeinheit (13) angeordnet identifizierbar anzeigt,
das registrierte Informationselement (405), das Arbeitsverlaufselement (406) und das Einstellungselement (407) auf einer Seite in einer vertikalen oder horizontalen Richtung relativ zur Vielzahl der Arbeitselemente anzeigt, und
die Vielzahl der Arbeitselemente, die größer sind als das registrierte Informationselement (405), das Arbeitsverlaufselement (406) und das Einstellungselement (407) anzeigt.

11. Verwaltungsendgerät zum Verwalten eines Arbeitsfahrzeugs, das in der Lage ist, ein automatisches Fahren durchzuführen, wobei das Verwaltungsendgerät Folgendes umfasst:
eine Speichereinheit (11), in der eine Anwendung zum Verwalten des Arbeitsfahrzeugs gespeichert ist;
eine Steuerung (10), die die Anwendung startet; und
eine Anzeigeeinheit (13),
wobei die Steuerung (10) auf der Anzeigeeinheit (13) eine Vielzahl von nicht erfassten und bereits erfassten Arbeitselementen, die sich auf Arbeit beziehen, die vom Arbeitsfahrzeug auf einem Farmfeld durchgeführt wird, über die Anwendung auswählbar anzeigt und auf den Bildschirm umschaltet, der dem ausgewählten Arbeitselement unter der Vielzahl von Arbeitselementen entspricht.

12. Verwaltungssystem zum Verwalten eines Arbeitsfahrzeugs, das in der Lage ist, ein automatisches Fahren durchzuführen, wobei das Verwaltungssystem Folgendes umfasst:
Starten einer Anwendung, die das Arbeitsfahrzeug verwaltet, um die Anwendung zu veranlassen, auf einer Anzeigeeinheit (13) eine Vielzahl von nicht erfassten und bereits erfassten Arbeitselementen, die sich auf Arbeit beziehen, die vom Arbeitsfahrzeug auf einem Farmfeld durchgeführt wird, auswählbar anzuzeigen und auf den Bildschirm umzuschalten, der dem ausgewählten Arbeitselement unter der Vielzahl von Arbeitselementen entspricht.

## Revendications

1. Procédé de gestion pour gérer un véhicule de travail en mesure d'effectuer un déplacement automatique, le procédé comprenant :
une étape de commande d'affichage dans laquelle le lancement d'une application qui gère le véhicule de travail amène l'application à afficher de manière sélective sur une unité d'affichage (13) une pluralité d'éléments de travail non acquis et déjà acquis liés au travail effectué par le véhicule de travail dans une exploitation agricole, et la sélection d'un élément de travail dans la pluralité d'éléments de travail provoque le passage à l'écran correspondant à l'élément de travail sélectionné dans la pluralité d'éléments de travail.

2. Procédé de gestion selon la revendication 1, dans lequel l'étape de commande d'affichage affiche sur l'unité d'affichage (13) un premier élément de travail (61) pour acquérir ou sélectionner des informations de champ agricole sur le champ agricole et pour effectuer le travail, un deuxième élément de travail (62) pour effectuer le travail sur la base d'un itinéraire de travail déjà acquis, et un troisième élément de travail (63) pour acquérir une ligne de référence et pour effectuer le travail dans un déplacement rectiligne automatique, en tant que pluralité d'éléments de travail.

3. Procédé de gestion selon la revendication 1, dans lequel l'étape de commande d'affichage affiche sur l'unité d'affichage (13) un élément de travail non acquis pour une nouvelle acquisition d'informations de champ agricole ou d'informations de travail et pour effectuer le travail, et un élément de travail déjà acquis pour effectuer le travail sur la base des informations de champ agricole acquises ou des informations de travail acquises, en tant que pluralité d'éléments de travail.

4. Procédé de gestion selon la revendication 3, dans lequel l'étape de commande d'affichage affiche sur l'unité d'affichage (13) au moins un nouvel élément de travail de champ agricole (401) pour acquérir une forme de champ agricole (111a) en tant qu'informations de champ agricole et pour effectuer le travail, en tant qu'élément de travail non acquis.

5. Procédé de gestion selon la revendication 3, dans lequel l'étape de commande d'affichage affiche sur l'unité d'affichage (13) au moins une ligne de référence élément de travail (404) pour acquérir une ligne de référence en tant qu'informations de travail et pour effectuer ainsi le travail dans un déplacement rectiligne automatique, en tant qu'élément de travail non acquis.

6. Procédé de gestion selon la revendication 3, dans lequel l'étape de commande d'affichage affiche sur l'unité d'affichage (13) au moins un élément de travail de champ agricole (402) déjà acquis pour effectuer le travail sur la base d'une forme de champ agricole déjà acquise en tant qu'informations de champ agricole, en tant qu'élément de travail déjà acquis.

7. Procédé de gestion selon la revendication 3, dans lequel l'étape de commande d'affichage affiche sur l'unité d'affichage (13) au moins un élément de travail d'itinéraire déjà acquis (403) pour effectuer le travail sur la base d'un itinéraire de travail déjà acquis en tant qu'informations de travail, en tant qu'élément de travail déjà acquis.

8. Procédé de gestion selon la revendication 1, dans lequel l'étape de commande d'affichage affiche de manière identifiable la pluralité d'éléments de travail agencés dans un centre de l'unité d'affichage (13).

9. Procédé de gestion selon la revendication 1, dans lequel l'étape de commande d'affichage affiche dans les éléments de travail un signe associé à un contenu de travail de chacun des éléments de travail.

10. Procédé de gestion selon la revendication 1, dans lequel l'étape de commande d'affichage
affiche sur un écran affichant la pluralité d'éléments de travail un élément d'informations enregistrées (405) lié à des informations enregistrées du champ agricole et d'un itinéraire, un élément d'historique de travail (406) lié à un historique de travail dans le champ agricole, et un élément de réglage (407) lié à un réglage du véhicule de travail,
affiche de manière identifiable la pluralité d'éléments de travail agencés dans un centre de l'unité d'affichage (13),
affiche l'élément d'informations enregistrées (405), l'élément d'historique de travail (406) et l'élément de réglage (407) agencés sur un côté dans une direction verticale ou horizontale par rapport à la pluralité d'éléments de travail, et
affiche la pluralité d'éléments de travail plus grands que l'élément d'informations enregistrées (405), l'élément d'historique de travail (406) et l'élément de réglage (407).

11. Terminal de gestion pour gérer un véhicule de travail en mesure d'effectuer un déplacement automatique, le terminal de gestion comprenant :
une unité de stockage (11) qui stocke une application pour gérer le véhicule de travail ;
un dispositif de commande (10) qui lance l'application ; et
une unité d'affichage (13),
dans lequel à l'aide de l'application, le dispositif de commande (10) affiche de manière sélective sur l'unité d'affichage (13) une pluralité d'éléments de travail non acquis et déjà acquis liés au travail effectué par le véhicule de travail dans un champ agricole, et passe à l'écran correspondant à l'élément de travail sélectionné dans la pluralité d'éléments de travail.

12. Système de gestion pour gérer un véhicule de travail en mesure d'effectuer un déplacement automatique, le système de gestion comprenant :
le lancement d'une application qui gère le véhicule de travail pour amener l'application à afficher de manière sélective sur une unité d'affichage (13) une pluralité d'éléments de travail non acquis et déjà acquis liés au travail effectué par le véhicule de travail dans un champ agricole, et pout passer à l'écran correspondant à l'élément de travail sélectionné dans la pluralité d'éléments de travail.
